(19) Europäisches Patentamt
European Patent Office
Office européen des brevets

(11) EP 2 380 663 A1

(12) **EUROPEAN PATENT APPLICATION**
published in accordance with Art. 153(4) EPC

(43) Date of publication:
**26.10.2011 Bulletin 2011/43**

(21) Application number: **10733537.4**

(22) Date of filing: **21.01.2010**

(51) Int Cl.:
***B01J 29/85*** *(2006.01)* ***B01D 53/94*** *(2006.01)*
***F01N 3/10*** *(2006.01)*

(86) International application number:
**PCT/JP2010/050737**

(87) International publication number:
**WO 2010/084930 (29.07.2010 Gazette 2010/30)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.01.2009 JP 2009011590**
**15.05.2009 JP 2009118945**
**12.06.2009 JP 2009141397**
**17.07.2009 JP 2009169338**
**22.12.2009 JP 2009291476**

(71) Applicant: **Mitsubishi Plastics, Inc.**
**Tokyo 103-0021 (JP)**

(72) Inventors:
- **MATSUO Takeshi**
**Yokohama-shi**
**Kanagawa 227-8502 (JP)**
- **TAKEWAKI Takahiko**
**Yokohama-shi**
**Kanagawa 227-8502 (JP)**
- **NISHIOKA Daisuke**
**Yokohama-shi**
**Kanagawa 227-8502 (JP)**
- **OSHIMA Kazunori**
**Yokohama-shi**
**Kanagawa 227-8502 (JP)**
- **CHEN Haijun**
**Yokohama-shi**
**Kanagawa 227-8502 (JP)**
- **KAKIUCHI Hiroyuki**
**Yokohama-shi**
**Kanagawa 227-8502 (JP)**

(74) Representative: **HOFFMANN EITLE**
**Patent- und Rechtsanwälte**
**Arabellastraße 4**
**81925 München (DE)**

(54) **CATALYST FOR REMOVING NITROGEN OXIDES AND METHOD FOR PRODUCING SAME**

(57) The object is to provide an exhaust gas purification catalyst that exhibit high nitrogen oxide purification performance, and to provide a simple and efficient method for producing the catalyst, in which the amount of the waste liquid is reduced, further, an object of the invention is to provide a zeolite-containing catalyst for purifying nitrogen oxides, which does not use an expensive noble metal or the like and which has high nitrogen oxide purification performance. The present invention relates to a catalyst for purifying nitrogen oxides, which comprises: zeolite at least containing an aluminium atom and a phosphorus atom in the skeleton structure thereof; and a metal supported on the zeolite, wherein a fluctuation coefficient of intensity of the metal is at least 20%, when performing an element mapping of the metal in the catalyst with an electron probe microanalyzer, and, a catalyst for purifying nitrogen oxides, which comprises the zeolite containing at least a silicon atom, a phosphorus atom and an aluminium atom, and having an adsorption retention rate of at least 80% in a water vapor repetitive adsorption/desorption test at 90°C.

EP 2 380 663 A1

## Description

### TECHNICAL FIELD

The present invention relates to a catalyst for purifying nitrogen oxides, especially to a zeolite-containing catalyst (hereinafter simply referred to as zeolite catalyst) capable of purifying nitrogen oxides from the exhaust gas discharged from internal-combustion engines such as diesel engines and the like, and to a method for efficiently producing the zeolite catalyst.

### BACKGROUND ART

Nitrogen oxides contained in exhaust gas from internal-combustion engines or in industrial fume and the like have been purified through selective catalytic reduction (SCR) using a $V_2O_5$-$TiO_2$ catalyst and ammonia. However, the $V_2O_5$-$TiO_2$ catalyst sublimes at a high temperature and there is a possibility that the catalyst ingredient may be discharged from the exhaust gas, and especially therefore the catalyst is unsuitable for exhaust gas purification from moving vehicles such as automobiles, etc.

Recently, therefore, a zeolite catalyst that carries a metal has been proposed as an SCR catalyst for diesel cars from which purification of nitrogen oxides is especially difficult.

In particular, it is known that, when a CHA structure-having zeolite is made to support a metal, it may be a catalyst highly active for purification of nitrogen oxides. For example, Patent Reference 1 proposes a catalyst that carries a catalyst metal on a crystalline silicoaluminophosphate porous carrier. The reference proposes an exhaust gas purification catalyst as produced by ion-exchanging a crystalline silicoaluminophosphate (hereinafter this may be referred to as SAPO) with an ammonium ion ($NH^{4+}$) followed by making it support a catalyst metal according to an ion-exchange method.

Patent Reference 2 proposes a catalyst that carries copper on a zeolite having an 8-membered ring structure.

On the other hand, as an exhaust gas purification catalyst that exhibits a high activity for purifying nitrogen oxides in an oxygen-rich atmosphere, proposed is a catalyst that carries both a base metal and a platinum group metal on a silicoaluminophosphate porous carrier (Patent Reference 3).

On the other hand, as a method of making zeolite support a metal thereon, also used is a method of making the carrier absorb a metal source solution in accordance with the water content of the carrier followed by heating and drying it or a method of drying a water-containing cake obtained through filtration of a slurry, in addition to the ion-exchange method described in Patent Reference 1.

However, these methods require high-temperature long-time drying for removing water and solvent, and therefore it is considered that the zeolite structure would be broken by the acid or alkali in water during drying, or the catalyst could not exhibit the performance over that in the ion-exchange method since the metal dispersion on zeolite would be poor.

On the other hand, Patent Reference 4 shows a spray drying method as another catalyst-supporting method.

### PRIOR ART REFERENCES

### PATENT REFERENCES

| | |
|---|---|
| Patent Reference 1: | JP-A 7-155614 |
| Patent Reference 2: | WO2008/118434 |
| Patent Reference 3: | JP-A 2-293049 |
| Patent Reference 4: | JP-A 2009-022842 |

### SUMMARY OF THE INVENTION

### PROBLEMS THAT THE INVENTION IS TO SOLVE

However, the catalyst described in Patent Reference 1 has a problem in that its ability to decompose NOx at low temperatures of 200˚C or lower is not enough. In addition, the production according to the ion-exchange method has production problem in that the method discharges a large quantity of wastes and requires slurry filtration and washing. The catalyst described in Patent Reference 2 enables reductive degradation of NOx in an oxidization catalyst; however, the present inventors investigations have revealed that the zeolite is still insufficient in point of heat resistance and

durability.
The exhaust gas purification catalyst proposed in Patent Reference 3 contains an expensive platinum group metal and its purification rate of nitrogen oxide is 50% or so and is insufficient, and therefore its practical use is problematic.
An object of the present invention is to provide an exhaust gas purification catalyst that exhibit high nitrogen oxide purification performance, and to provide a simple and efficient method for producing the catalyst, in which the amount of the waste liquid is reduced.
Further, an object of the invention is to provide a zeolite-containing catalyst for purifying nitrogen oxides, which does not use an expensive noble metal or the like and which has high activity.

MEANS FOR SOLVING THE PROBLEMS

The present inventors have assiduously studied and, as a result, have found that a nitrogen oxide purifying catalyst with a metal supported by zeolite, in which zeolite carries the metal in a specific state, has an improved NOx gas purifying capability as compared with that of the nitrogen oxide purifying catalyst produced according to a conventional supporting method, and has a good low-temperature purification capability, and have completed the present invention.
As a result of assiduous studies, the inventors have also found that those of silicoaluminophosphate (hereinafter SAPO) having a specific water vapor repetitive adsorption characteristic have a high nitrogen oxide purification capability, and surprisingly have a high purification capability at low temperatures and have good durability, and are therefore favorable as an SCR catalyst. Concretely, the inventors have found that those having high durability to water vapor adsorption/desorption are favorable as an SCR catalyst, those having a specific water vapor adsorption characteristic are favorable, SAPO produced by a specific production method is favorable, and those having specific physical properties are favorable, and have completed the invention.
The inventors removed the dispersion medium from a mixture containing zeolite and a metal source within an extremely short period of time and then fired the mixture under vapor circulation, and have surprisingly found that the resulting catalyst has an improved NOx gas purifying capability and has a good purification capability at low temperatures, as compared with the nitrogen oxide purification catalyst produced according to a conventional supporting method, and have completed the invention.
Specifically, the present invention is summarized as follows:

[1] A catalyst for purifying nitrogen oxides, which comprises: zeolite at least containing an aluminium atom and a phosphorus atom in the skeleton structure thereof; and a metal supported on the zeolite, wherein the metal is, as observed with a transmission electronic microscope, supported in the catalyst as particles having a diameter of from 0.5 nm to 20 nm (the first embodiment of the catalyst of the invention).
[2] The catalyst for purifying nitrogen oxides of [1], wherein the metal is, when observed with a transmission electronic microscope after the catalyst is processed with water vapor at 800˚C for 5 hours in an atmosphere containing 10% of water vapor, supported in the catalyst as particles having a diameter of from 0.5 nm to 20 nm.
[3] A catalyst for purifying nitrogen oxides, which comprises: zeolite at least containing an aluminium atom and a phosphorus atom in the skeleton structure thereof; and a metal supported on the zeolite, wherein a fluctuation coefficient of intensity of the metal is at least 20%, when performing an element mapping of the metal in the catalyst with an electron probe microanalyzer (the second embodiment of the catalyst of the invention).
[4] A catalyst for purifying nitrogen oxides, which comprises: zeolite having a 8-membered ring structure as the skeleton structure thereof; and a metal supported on the zeolite, wherein a fluctuation coefficient of intensity of the metal is at least 20%, when performing an electron mapping of the metal in the catalyst with an electron probe microanalyzer (the third embodiment of the catalyst of the invention).
[5] A catalyst for purifying nitrogen oxides, which comprises: zeolite containing at least an aluminium atom and a phosphorus atom in the skeleton structure thereof; and a metal supported on the zeolite, wherein a peak top temperature for ammonia desorption after water vapor treatment of the catalyst according to an ammonia TPD (temperature programmed desorption) method falls between 250˚C and 500˚C (the fourth embodiment of the catalyst of the invention).
[6] The catalyst for purifying nitrogen oxides of [5], wherein an adsorption amount of the ammonia in the catalyst according to an ammonia TPD (temperature programmed desorption) method is at least 0.6 mol/kg.
[7] The catalyst for purifying nitrogen oxides of any one of [1] to [6], wherein the zeolite further contains a silicon atom.
[8] The catalyst for purifying nitrogen oxides of any one of [1] to [7], wherein the zeolite has, when processed with water vapor at 800˚C for 10 hours in an atmosphere containing 10% of water vapor and then measured a solid $^{29}$Si-DD/MAS-NMR spectrum, an integral intensity area at a signal intensity of from -105 to -125 ppm of at most 25%, relative to an integral intensity area at a signal intensity of from -75 to -125 ppm.
[9] The catalyst for purifying nitrogen oxides of any one of [1] to [8], wherein a structure of the zeolite is CHA as a code defined by IZA.

[10] The catalyst for purifying nitrogen oxides of [8] or [9], wherein, when an abundance ratio of the silicon atom to the total of the silicon atom, the aluminium atom and the phosphorus atom contained in the zeolite skeleton structure is represented by x, an abundance ratio of the aluminium atom thereto is represented by y and an abundance ratio of the phosphorus atom thereto is represented by z, x is from 0 to 0.3, y is from 0.2 to 0.6, and z is from 0.3 to 0.6.
[11] The catalyst for purifying nitrogen oxides of any one of [1] to [10], wherein the metal is Cu or Fe.
[12] The catalyst for purifying nitrogen oxides of any one of [1] ] to [11], which is produced by preparing a mixture of the zeolite, a metal source for the metal and a dispersion medium and spray-drying the mixture to remove the dispersion medium.
[13] A catalyst for purifying nitrogen oxides, which comprises at least zeolite, a silicon atom, a phosphorus atom and an aluminium atom, and has an adsorption retention rate of at least 80%, when tested in a water vapor repetitive adsorption/desorption test at 90˚C (the fifth embodiment of the catalyst of the invention).
[14] The catalyst for purifying nitrogen oxides of [13], wherein, when an amount of water adsorption of the catalyst is measured under a relative vapor pressure of 0.2 as measured on a water vapor adsorption isotherm of the catalyst at 25˚C, before and after the water vapor repetitive adsorption/desorption test, a ratio of the amount of water adsorption thereof after the test to the amount of water adsorption thereof before the test is at least 0.7.
[15] The catalyst for purifying nitrogen oxides of [13] or [14], wherein the zeolite contains at least a silicon atom, a phosphorus atom and an aluminium atom, and has an adsorption retention rate of at least 80% in the water vapor repetitive adsorption/desorption test at 90˚C.
[16] A catalyst for purifying nitrogen oxides, which comprises the zeolite containing at least a silicon atom, a phosphorus atom and an aluminium atom, and having an adsorption retention rate of at least 80% in a water vapor repetitive adsorption/desorption test at 90˚C (the sixth embodiment of the catalyst of the invention).
[17] The catalyst for purifying nitrogen oxides of any one of [13] to [16], wherein, when an amount of the water adsorption of the zeolite is measured under a relative vapor pressure of 0.2 as measured on a water vapor adsorption isotherm of the zeolite at 25˚C, before and after the water vapor repetitive adsorption/desorption test, a ratio of the amount of water adsorption thereof after the test to the amount of water adsorption thereof before the test is at least 0.7.
[18] The catalyst for purifying nitrogen oxides of any one of [13] to [17], wherein the zeolite has, when processed with water vapor at 800˚C for 10 hours in an atmosphere containing 10% of water vapor and then measured a solid $^{29}$Si-DD/MAS-NMR spectrum, an integral intensity area at a signal intensity of from -105 to -125 ppm is at most 25%, relative to an integral intensity area at a signal intensity of from -75 to -125 ppm.
[19] The catalyst for purifying nitrogen oxides of any one of [13] to [18], which has, as observed in a X-ray diffraction measurement thereof using CuK$\alpha$ as the X-ray source, a diffraction peak in a diffraction angle (2$\theta$) range of from 21.2 degrees to 21.6 degrees in addition to the zeolite-derived peak.
[20] The catalyst for purifying nitrogen oxides of any one of [13] to [19], which has, as observed in the X-ray diffraction measurement thereof taken after heat treatment at 700˚C or higher of the catalyst, a diffraction peak in a diffraction angle (2$\theta$) range of from 21.2 degrees to 21.6 degrees in addition to the zeolite-derived peak.
[21] The catalyst for purifying nitrogen oxides of any one of [13] to [20], wherein a metal is supported on the zeolite.
[22] A catalyst for purifying nitrogen oxides, comprising zeolite, wherein the zeolite has, when processed with water vapor at 800˚C for 10 hours in an atmosphere containing 10% of water vapor and then measured a solid $^{29}$Si-DD/MAS-NMR spectrum, an integral intensity area at a signal intensity of from -105 to -125 ppm is at most 25%, relative to an integral intensity area at a signal intensity of from -75 to -125 ppm (the seventh embodiment of the catalyst of the invention).
[23] The catalyst for purifying nitrogen oxides of [22], wherein the zeolite has a mean particle size of at least 1 $\mu$m and contains at least a silicon atom, a phosphorus atom and an aluminium atom in the skeleton structure thereof.
[24] A catalyst for purifying nitrogen oxides, comprising zeolite and a metal supported on the zeolite, wherein the zeolite contains at least a silicon atom, a phosphorus atom and an aluminium atom in the skeleton structure thereof and has a mean particle size of at least 1 $\mu$m (the eighth embodiment of the catalyst of the invention).
[25] The catalyst for purifying nitrogen oxides of [23] or [24], wherein, when the abundance ratio of the silicon atom to the total of the aluminium atom, the silicon atom and the phosphorus atom contained in the zeolite skeleton structure is represented by x, x is from 0.05 to 0.11.
[26] The catalyst for purifying nitrogen oxides of any one of [22] to [25], which has, as observed in X-ray diffraction measurement thereof using CuK$\alpha$ as the X-ray source, a diffraction peak in a diffraction angle (2$\theta$) range of from 21.2 degrees to 21.6 degrees in addition to the zeolite-derived peak.
[27] The catalyst for purifying nitrogen oxides of any one of [22] to [26], which has, as observed in the X-ray diffraction measurement thereof taken after heat treatment at 700˚C or higher of the catalyst, a diffraction peak in a diffraction angle (2$\theta$) range of from 21.2 degrees to 21.6 degrees in addition to the zeolite-derived peak.
[28] A catalyst for purifying nitrogen oxides, , comprising zeolite and a metal supported on the zeolite, wherein the catalyst has, as observed in X-ray diffraction measurement thereof using CuK$\alpha$ as the X-ray source, a diffraction

peak in a diffraction angle (2θ) range of from 21.2 degrees to 21.6 degrees in addition to the zeolite-derived peak (the ninth embodiment of the catalyst of the invention).

[29] A catalyst for purifying nitrogen oxides, which comprises: zeolite containing at least an aluminium atom and a phosphorus atom in the skeleton structure thereof; and a metal supported on the zeolite, wherein at least two absorption wavelengths exist between 1860 and 1930 $cm^{-1}$ in a difference in infrared (IR) absorption spectrum measured at 25°C before and after adsorption of nitrogen monoxide (NO) by the catalyst (the tenth embodiment of the catalyst of the invention).

[30] A catalyst for purifying nitrogen oxides, which comprises: zeolite containing at least an aluminium atom and a phosphorus atom in the skeleton structure thereof; and a metal supported on the zeolite, wherein the ratio of a maximum value of a peak intensity between 1525 and 1757 $cm^{-1}$ to a maximum value of a peak intensity between 1757 and 1990 $cm^{-1}$ is at most 1, in a difference in infrared (IR) absorption spectrum measured at 150°C before and after adsorption of nitrogen monoxide (NO) by the catalyst (the eleventh embodiment of the catalyst of the invention).

[31] A catalyst for purifying nitrogen oxides, which comprises: zeolite containing at least an aluminium atom and a phosphorus atom in the skeleton structure thereof; and copper supported on the zeolite, wherein there exist at least two types of peaks of electron spin resonance (ESR) derived from the copper(II) ion in the catalyst (the twelfth embodiment of the catalyst of the invention).

[32] The catalyst for purifying nitrogen oxides of [31], wherein the peaks of electron spin resonance (ESR) derived from the copper(II) ion in the catalyst is between 2.3 and 2.5 as the g value.

[33] The catalyst for purifying nitrogen oxides of any one of [13] top [32], wherein, when an abundance ratio of the silicon atom to the total of the silicon atom, the aluminium atom and the phosphorus atom contained in the zeolite skeleton structure is represented by x, an abundance ratio of the aluminium atom thereto is represented by y and an abundance ratio of the phosphorus atom thereto is represented by z, x is from 0.05 to 0.11, y is from 0.3 to 0.6, and z is from 0.3 to 0.6.

[34] The catalyst for purifying nitrogen oxides of any one of [13] top [33], wherein, in producing zeolite by mixing a silicon atom material, an aluminium atom material, a phosphorus atom material and a template followed by hydrothermal synthesis, as the template, at least one compound is selected from each of two groups: (1) an alicyclic heterocyclic compound containing nitrogen as a hetero atom and (2) an alkylamine.

[35] The catalyst for purifying nitrogen oxides of any one of [13] to [34], wherein a structure of the zeolite is CHA defined by IZA.

[36] A method for producing a catalyst for purifying nitrogen oxides, in which the catalyst comprises: zeolite containing at least an aluminium atom and a phosphorus atom in the skeleton structure thereof; and a metal supported on the zeolite, wherein the method comprising: preparing a mixture of the zeolite, a metal source of the metal and a dispersion medium; removing the dispersion medium from the mixture; and firing the mixture, wherein the removal of the dispersion medium is attained within a period of at most 60 minutes.

[37] The method for producing a catalyst for purifying nitrogen oxides of [36], wherein the zeolite is zeolite having a 8-membered ring structure as the skeleton structure thereof.

[38] A method for producing a catalyst for purifying nitrogen oxides, in which the catalyst comprises: zeolite having a 8-membered ring structure as the skeleton structure thereof; and a metal supported on the zeolite, wherein the method comprising: preparing a mixture of the zeolite, a metal source of the metal and a dispersion medium; removing the dispersion medium from the mixture; and firing the mixture, wherein the removal of the dispersion medium is attained within a period of at most 60 minutes.

[39] The method for producing a catalyst for purifying nitrogen oxides of any one of [36] to [38], wherein the mixture contains a template.

[40] The method for producing a catalyst for purifying nitrogen oxides of any one of [36] to [39], wherein the dispersion medium is removed by spray-drying.

[41] The method for producing a catalyst for purifying nitrogen oxides of any one of [36] to [40], wherein the zeolite further contains a silicon atom.

[42] The method for producing a catalyst for purifying nitrogen oxides of any one of [36] to [41], wherein a structure of the zeolite is CHA as a code defined by IZA.

[43] The method for producing a catalyst for purifying nitrogen oxides of any one of [36] to [42], wherein the metal is Cu or Fe.

[44] The method for producing a catalyst for purifying nitrogen oxides of any one of [36] to [43], wherein in the spray-drying, a temperature of a heat carrier to be brought into contact with the mixture for drying is from 80°C to 350°C.

[45] A mixture comprising the catalyst for purifying nitrogen oxides of any one of [13] to [35], and at least any one of a compound of a formula (I) and a silicic melt:

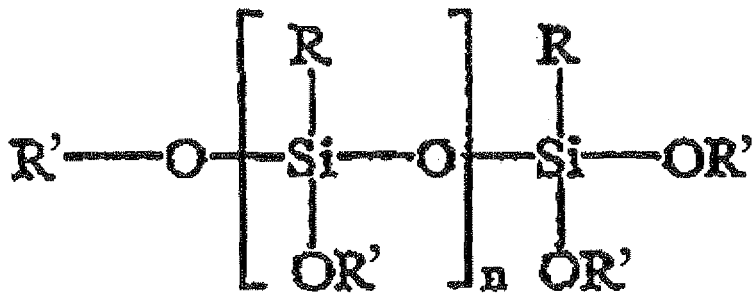

(I)

[in formula (I), R each independently represents an alkyl, aryl, alkenyl, alkynyl, alkoxy or phenoxy group, which are optionally substituted; R' each independently represents an alkyl, aryl, alkenyl or alkynyl group, which are optionally substituted; n indicates a number of from 1 to 100].

[46] The mixture of [45] comprising inorganic fibers.

[47] The mixture of [45] or [46] which comprises the compound of formula (I) in an amount of from 2 to 40 parts by weight in terms of the oxide relative to 100 parts by weight of the catalyst for purifying nitrogen oxides.

[48] A formed article obtained from the mixture of any one of [45] to [47].

[49] The formed article of [48] having a honeycomb structure.

[50] A device for purifying nitrogen oxides, which is produced by applying the catalyst for purifying nitrogen oxides of any one of [1] to [35] to a honeycomb-structure formed article.

[51] A device for purifying nitrogen oxides produced by forming the catalyst for purifying nitrogen oxides of any one of [1] to [35].

[52] A system for purifying nitrogen oxides, employing the device for purifying nitrogen oxides of [50] or [51].

ADVANTAGE OF THE INVENTION

According to the invention, there is obtained a catalyst having a high ability to remove nitrogen oxides and having a high purification capability at low temperatures, and there can be produced simply and efficiently the catalyst having a high purification capability. The catalyst obtained here secures a long-lasting durability even under the condition of repeated water adsorption/desorption in practical use thereof.

BRIEF DESCRIPTION OF THE DRAWINGS

[Fig. 1] It is a TEM image of the catalyst 2 described in Example 2A.

[Fig. 2] It is a TEM image after water vapor treatment of the catalyst 2 described in Example 2A.

[Fig. 3] It includes element maps of Si and Cu with EMPA of the catalyst 2 described in Example 2A.

[Fig. 4] It is an NO-IR spectrum at room temperature of the catalyst 2 described in Example 2A.

[Fig. 5] It is an NO-IR spectrum at 150˚C of the catalyst 2 described in Example 2A.

[Fig. 6] It is an ESR spectrum of the catalyst 2 described in Example 2A.

[Fig. 7] It is a TEM image of the catalyst 8 described in Comparative Example 5A.

[Fig. 8] It is a TEM image after water vapor treatment of the catalyst 8 described in Comparative Example 5A.

[Fig. 9] It includes element maps of Si and Cu with EMPA of the catalyst 8 described in Comparative Example 5A.

[Fig. 10] It is an NO-IR spectrum at room temperature of the catalyst 8 described in Comparative Example 5A.

[Fig. 11] It is an NO-IR spectrum at 150˚C of the catalyst 8 described in Comparative Example 5A.

[Fig. 12] It is an ESR spectrum of the catalyst 8 described in Comparative Example 5A.

[Fig. 13] It shows measured results of $^{29}$Si-NMR of the zeolite described in Example 1B.

[Fig. 14] It shows measured results of $^{29}$Si-NMR of the zeolite described in Comparative Example 3B.

[Fig. 15] It shows measured results of X-ray diffraction of the catalyst described in Example 2B.

[Fig. 16] It shows measured results of X-ray diffraction after heat treatment at 800˚C of the catalyst described in

Example 2B.
[Fig. 17] It shows measured results of X-ray diffraction of the catalyst described in Example 3B.
[Fig. 18] It shows measured results of X-ray diffraction after heat treatment at 800˚C of the catalyst described in Example 3B.
[Fig. 19] It shows measured results of X-ray diffraction of the catalyst described in Comparative Example 3B.
[Fig. 20] It shows measured results of X-ray diffraction after heat treatment at 800˚C of the catalyst described in Comparative Example 3B.
[Fig. 21] It is a SEM picture of the zeolite described in Example 1B.
[Fig. 22] It is a SEM picture of the zeolite described in Comparative Example 3B.

MODE FOR CARRYING OUT THE INVENTION

Embodiments of the invention are descried in detail hereinunder; however, the following description is for some embodiments (typical examples) of the invention, and the invention should not be limited to these contents.
"% by mass", "ppm by mass" and "part by mass" have the same meanings as "% by weight", "ppm by weight" and "part by weight", respectively.

«First Embodiment to Fourth Embodiment of Catalyst, and Fifth Embodiment to Twelfth Embodiment of Catalyst»

The first embodiment to the twelfth embodiment of the invention are described in detail hereinunder.

<Nitrogen Oxides and Their Purification>

The nitrogen oxides to be removed by the catalyst to which the invention is directed include nitrogen monoxide, nitrogen dioxide, nitrous oxide, etc. These may be collectively referred to as NOx. In this description, purifying nitrogen oxides means reacting nitrogen oxides on a catalyst to convert them into nitrogen, oxygen, etc.
In this case, nitrogen oxides may be directly reacted, or for the purpose of increasing the purification efficiency, a reducing agent may be made to coexist in the catalyst. The reducing agent includes ammonia, urea, organic amines, carbon monoxide, hydrocarbon, hydrogen, etc. Preferred are ammonia and urea.

<Catalyst>

The catalyst to which the invention is directed is meant to indicate the above-described catalyst capable of purifying nitrogen oxides, and is concretely a zeolite-containing catalyst for purifying nitrogen oxides (hereinafter this may be simply referred to as catalyst).

<Zeolite>

Zeolite in the invention includes zeolites as defined by International Zeolite Association (hereinafter IZA); and concretely zeolite includes those of which the atoms constituting the skeleton structure include at least oxygen, aluminium (Al), and phosphorus (P) (hereinafter these may be referred to as aluminophosphates), and those including at least oxygen, aluminium and silicon (Si) (hereinafter these may be referred to as aluminosilicates), etc.
Aluminophosphates include at least oxygen, aluminium (Al) and phosphorus (P) as the atoms constituting the skeleton structure thereof, and a part of these atoms may be substituted with any other atom (Me). The other atom (Me) includes, for example, an atom of at least one element selected from a group of elements of the Periodic Table Group 2A, Group 3A, Group 4A, Group 5A, Group 7A, Group 8, Group 1B, Group 2B, Group 3B except aluminium and Group 4B. Above all, preferred are Me-aluminophosphates in which the phosphorus atom is substituted with a hetero atom (Mel: Mel is an element of Group 4B of the Periodic Table).
Me-aluminophosphate may contain one type of Mel or two or more different types of Mel's. Preferably, Mel is silicon or germanium, more preferably silicon. Specifically, silicon-substituted aluminophosphates, or that is, silicoaluminophosphates are more preferred.
The constitutional ratio (by mol) of Mel, Al and P constituting the skeleton structure of aluminophosphates is not specifically defined. When the molar ratio of Mel to the total of Mel, Al and P is represented by x1, the molar ratio of Al thereto is by y1 and the molar ratio of P thereto is by z1, then x1 is generally at least 0, preferably at least 0.01, and is generally at most 0.3.
y1 is generally at least 0.2, preferably at least 0.3, and is generally at most 0.6, preferably at most 0.5.
z1 is generally at least 0.3, preferably at least 0.4, and is generally at most 0.6, preferably at most 0.5.
In case where the zeolite for use in the invention is a silicoaluminophosphate, the abundance ratio of the

aluminium atom, the phosphorus atom and the silicon atom in the zeolite is preferably as in the following formulae (I), (II) and (III):

$$0.05 \leq x1 \leq 0.11 \qquad (I)$$

(wherein x1 represents the molar ratio of silicon to the total of silicon, aluminium and phosphorus in the skeleton structure);

$$0.3 \leq y1 \leq 0.6 \qquad (II)$$

(wherein y1 represents the molar ratio of aluminium to the total of silicon, aluminium and phosphorus in the skeleton structure);

$$0.3 \leq z1 \leq 0.6 \qquad (III)$$

(wherein z1 represents the molar ratio of phosphorus to the total of silicon, aluminium and phosphorus in the skeleton structure).

In other words, the above means that, when the abundance ratio of the silicon atom to the total of the silicon atom, the aluminium atom and the phosphorus atom contained in the skeleton structure of zeolite is represented by x1, the abundance ratio of the aluminium atom thereto is by y1 and the abundance ratio of the phosphorus atom thereto is by z1, then preferred is zeolite in which x1 is generally from 0.05 to 0.11, y1 is generally from 0.3 to 0.6 and z1 is generally from 0.3 to 0.6.

More preferred is zeolite in which x1 is at least 0.06, even more preferably at least 0.07, still more preferably at least 0.075, and is generally at most 0.11, preferably at most 0.105, more preferably at most 0.100, even more preferably at most 0.095.

The zeolite skeleton in the invention may contain any other element. The other element includes lithium, magnesium, titanium, zirconium, vanadium, chromium, manganese, iron, cobalt, nickel, palladium, copper, zinc, gallium, germanium, arsenic, tin, calcium, boron, etc. Preferred are iron, copper, gallium.

The content of the other element is preferably at most 0.3 in terms of the molar ratio thereof to the total of silicon, aluminium and phosphorus in the zeolite skeleton, more preferably at most 0.1.

The elemental ratio may be determined through elementary analysis. In the invention, elementary analysis is as follows: A sample is dissolved under heat in an aqueous hydrochloric acid solution and analyzed through inductively coupled plasma (hereinafter ICP) emission spectrometry.

Aluminosilicates are those containing at least oxygen, aluminium (A1) and silicon (Si) as the atoms constituting the skeleton structure, and at least a part of those atoms may be substituted with any other atom (Me2).

The constitutional ratio (by mol) of Me2, Al and Si constituting the skeleton structure of aluminosilicates is not specifically defined. When the molar ratio of Me2 to the total of Me2, Al and Si is represented by x2, the molar ratio of A1 thereto is by y2 and the molar ratio of Si thereto is by z2, then x2 is generally from 0 to 0.3. When x2 is more than the uppermost limit, the compounds may tend to be contaminated with impurities during their production.

y2 is generally at least 0.001, preferably at least 0.02, and is generally at most 0.5, preferably at most 0.25.

z2 is generally at least 0.5, preferably at least 0.75, and is generally at most 0.999, preferably at most 0.98.

When y2 ad z2 oversteps the above range, then the compounds would be difficult to produce, or since the number of the acid points in the compounds may be too small and the compounds could not exhibit NOx decomposition activity.

The compounds may contain one or more different types of the other atoms Me2's. Preferred Me2's are elements belonging to Period 3 and Period 4 of the Periodic Table.

Zeolite preferably used in the invention is a zeolite containing at least an oxygen atom, an aluminium atom and a phosphorus atom in the skeleton structure thereof. More preferred are crystalline aluminophosphates. Even more preferred are crystalline silicoaluminophosphates.

<Skeleton Structure of Zeolite>

Zeolite is generally crystalline, and has a regular network structure in which methane-type $SiO_4$ tetrahedrons or $AlO_4$ tetrahedrons or $PO_4$ tetrahedrons (hereinafter these may be generalized to $TO_4$, in which the other atom than

oxygen contained in the structure is T atom) are bound with each other with the oxygen atom at each apex is shared between them. As the T atom, other atoms than Al, P and Si are known. One basic unit of the network structure is a structure where 8 $TO_4$ tetrahedrons are circularly bound with each other, and this is referred to as a 8-membered ring. Similarly, a 6-membered ring, a 10-membered ring and others could be basic units of zeolite structure.

In the invention, the zeolite structure may be determined through X-ray diffraction (hereinafter XRD).

Zeolite preferred for use in the invention is a zeolite having a 8-membered cyclic structure in the skeleton structure.

Concretely, the zeolite having a 8-membered cyclic structure includes, as the code defined by International Zeolite Association (IZA), ABW, AEI, AEN, AFN, AFR, AFS, AFT, AFX, AFY, ANA, APC, APD, ATN, ATT, ATV, AWO, AWW, BCT, BIK, BPH, BRE, CAS, CDO, CGF, CGS, CHA, CLO, DAC, DDR, DFO, DFT, EAB, EDI, EON, EPI, ERI, ESV, ETR, FER, GIS, GME, GOO, HEU, IHW, ITE, ITW, IWW, JBW, KFI, LAW, LEV, LOV, LTA, MAZ, MER, MFS, MON, MOR, MOZ, MTF, NAT, NSI, OBW, OFF, OSO, OWE, PAU, PHI, RHO, RRO, RSN, RTE, RTH, RWR, SAS, SAT, SAV, SBE, SFO, SIV, SOS, STI, SZR, THO, TSC, UEI, UFI, VNI, VSV, WEI, WEN, YUG, ZON. Above all, those selected from CHA, FER, GIS, LTA and MOR are preferred from the viewpoint of the catalyst activity; and CHA is more preferred.

As zeolite preferred for use in the invention, mentioned are aluminophosphates and aluminosilicates, concretely including, as the code defined by International Zeolite Association (IZA), aluminophosphates and aluminosilicates having a structure of any of AEI, AFR, AFS, AFT, AFX, AFY, AHT, CHA, DFO, ERI, FAU, GIS, LEV, LTA and VFI; more preferred are AEI, AFX, GIS, CHA, VFI, AFS, LTA, FAU and AFY; and most preferred is zeolite having a CHA structure as hardly adsorbing fuel-derived hydrocarbons.

As the zeolites for use in the invention, more preferred are zeolites of aluminophosphates containing at least an aluminium atom and a phosphorus atom in the skeleton structure thereof and having a 8-membered ring structure. Zeolites in the invention may contain any other cation species capable of ion-exchanging with any other cation, apart from the components constituting the skeleton structure as the basic unit. In this case, the cation is not specifically defined. Preferred are proton, alkali elements such as Li, Na, K, etc.; alkaline earth elements such as Mg, Ca, etc.; rare earth elements such as La, Ce, etc. Above all, more preferred are proton, alkali elements, alkaline earth elements.

The framework density (hereinafter this may be abbreviated as FD) of the zeolites in the invention is not specifically defined. In general, FD is at least 13.0 $T/nm^3$, preferably at least 13.5 $T/nm^3$, more preferably at least 14.0 $T/nm^3$, and is generally at most 20.0 $T/nm^3$, preferably at most 19.0 $T/nm^3$, more preferably at most 17.5 $T/nm^3$. The framework density ($T/nm^3$) means the number of the T atoms (atoms of other elements than oxygen constituting the zeolite skeleton) existing per the unit volume $nm^3$ of zeolite, and the value is determined depending on the structure of zeolite. When FD is less than the lowermost limit, then the structure may be unstable or the durability of zeolite may worsen; but on the other hand, when FD is more than the uppermost limit, the adsorption and the catalyst activity may lower and the zeolite would be unsuitable for use for catalyst.

Zeolite in the invention preferably has a specific water vapor adsorption characteristic of such that its water adsorption amount greatly varies within a specific relative vapor pressure range. Zeolite may be evaluated as follows, in terms of the adsorption isotherm thereof. In general, on the water vapor adsorption isotherm thereof at 25˚C, zeolite may have a water adsorption amount change of at least 0.10 g/g when the relative vapor pressure has changed by 0.05 within a relative vapor pressure range of from 0.03 to 0.25, preferably at least 0.15 g/g.

The relative water vapor pressure range is preferably from 0.035 to 0.15, more preferably from 0.04 to 0.09. The water adsorption amount change is preferably larger, but is generally at most 1.0 g/g.

Zeolite in the invention preferably has a higher adsorption retention rate in the water vapor repetitive adsorption/desorption test at 90˚C to be mentioned hereinunder, and generally has an adsorption retention rate of at least 80%, preferably at least 90%, more preferably at least 95%. The uppermost limit is not specifically defined, and it is generally at most 100%.

Zeolite in the invention preferably has an adsorption retention rate of at least 80% in the water vapor repetitive adsorption/desorption test to be mentioned below. Preferably, the water adsorption amount of zeolite in the invention after the water vapor repetitive adsorption/desorption test at 90˚C is at least 70% relative to the water adsorption amount thereof under a relative vapor pressure of 0.2, more preferably at least 80%, even more preferably at least 90%. The uppermost limit is not specifically defined, and is generally at most 100%, preferably at most 95%.

The water vapor repetitive adsorption/desorption test is as follows. A sample is held in a vacuum chamber kept at T˚C, and subjected to repeated alternative exposure to a saturated water vapor atmosphere at $T_1$˚C and a saturated water vapor atmosphere at $T_2$˚C each for 90 seconds ($T_1 < T_2 < T$). In this case, water adsorbed by the sample exposed to the saturated water vapor atmosphere at $T_2$˚C is partly desorbed in the saturated water vapor atmosphere at $T_1$˚C, and is moved to the water butt kept at $T_1$˚C. From the total amount of water moved in the water butt at 5˚C through the n'th desorption from the m'th adsorption (Qn: m(g)) and the dry weight of the sample (W (g)), the mean adsorption per once (Cn: m (g/g)) is computed as follows:

$$[Cn: m] = [Qn: m]/(n - m + 1)/W$$

In general, the adsorption/desorption cycle is repeated at least 1000 times, preferably at least 2000 times, and its uppermost limit is not defined. (The process is referred to as "T-$T_2$-$T_1$ water vapor repetitive adsorption/desorption test".) The water vapor repetitive adsorption/desorption test for zeolite for use in the invention is as follows. A zeolite sample is held in a vacuum chamber kept at 90˚C, and subjected to repeated alternative exposure to a saturated water vapor atmosphere at 5˚C and a saturated water vapor atmosphere at 80˚C each for 90 seconds. From the found data, the mean adsorption per once (Cn: m (g/g)) is computed. (This is 90-80-5 water vapor repetitive adsorption/desorption test. The process may be referred to as "water vapor repetitive adsorption/desorption test at 90˚C".)
The retention rate in the desorption test is represented by the ratio of the mean adsorption from the 1001 st to 2000th cycles to the mean adsorption from the 1st to the 1000th cycles. Zeolite having a higher mean adsorption retention rate means that the zeolite does not degrade in repetitive water adsorption/desorption. Preferably, the retention rate of zeolite is at least 80%, more preferably at least 90%, even more preferably at least 95%. The uppermost limit of 100% means no degradation of zeolite.

The change of zeolite through water vapor repetitive adsorption/desorption can be observed by the change of the water vapor adsorption isotherm of zeolite before and after the test.
In case where there is no change in the zeolite structure through repetitive water adsorption/desorption, there is no change in the water vapor adsorption isotherm; but when the zeolite structure has changed, for example, when it has broken, then water adsorption amount by zeolite lowers. In water vapor repetitive adsorption/desorption test of 2000 cycles at 90˚C, the water adsorption amount of zeolite at a relative water vapor pressure at 25˚C of 0.2 after the test is generally at least 70%, preferably at least 80%, more preferably at least 90%, of that before the test.

The zeolite in the invention has a high adsorption retention rate in the water vapor repetitive adsorption/desorption test, and is therefore excellent in purifying nitrogen oxides. When used in automobiles, etc., in fact, the catalyst of the invention is considered to be subjected to repetitive water adsorption/desorption to thereby remove nitrogen oxides, and therefore, those that do not degrade through repetitive water adsorption/desorption are considered to have a structure excellent in exhaust gas purification capability and actually have an excellent ability to remove nitrogen oxides in practical use.

The particle size of zeolite as referred to in the invention means the mean value of the primary particle diameter of arbitrarily-selected, 10 to 30 zeolite particles in observation of zeolite with an electronic microscope; and the particle size is generally at least 1 μm, preferably at least 2 μm, more preferably at least 3 μm, and is generally at most 15 μm, preferably at most 10 μm. The particle size of zeolite in the invention is the value measured as the particle size after removal of template in the production of zeolite to be mentioned below.

When processed with water vapor at 800˚C for 10 hours in an atmosphere containing 10% of water vapor, then dried in vacuum and measured a solid $^{29}$Si-DD/MAS-NMR spectrum, preferably, the zeolite in the invention generally has a small integral intensity area at a signal intensity of around -110 ppm.
The silicon atom in the zeolite structure generally takes a bonding mode of $Si(OX)_n(OY)_{4-n}$ (where X and Y each represent an atom such as Al, P, Si or the like; and n indicates from 0 to 2). The peak appearing at around -95 ppm in solid $^{29}$Si-DD/MAS-NMR corresponds to the case where X and Y are both other atoms than silicon atom. As opposed to this, the peak at around -110 ppm corresponds to the case where X and Y are both silicon atoms, indicating the formation of $SiO_2$ domain. In case where SAPO is used as a catalyst, the Si sites exiting in the skeleton are considered to function as catalyst activity points. Accordingly, in case where $SiO_2$ domains of aggregated silicon atoms are formed, these are considered to be a cause of catalytic activity depression. Therefore, the integral intensity area at a signal intensity of around -110 ppm is preferably smaller, and concretely, the integral intensity area at a signal intensity of from -105 to -125 ppm is preferably at most 25% relative to the integral intensity area at a signal intensity of from -75 to -125 ppm, more preferably at most 10%.

When processed with water vapor at 800˚C for 10 hours in an atmosphere containing 10% of water vapor, then dried and measured a solid $^{29}$Si-DD/MAS-NMR spectrum, preferably, the zeolite in the invention generally has a small integral intensity area at a signal intensity of around -100 ppm. The peak appearing at around -100 ppm corresponds to $Si(OX)_n(OY)_{3-n}(OH)$. In this, the Si-OH group is formed through hydrolysis of Si-O-X bond or Si-O-Y bond, indicting partial breakage of the zeolite skeleton structure by water vapor. In case where the zeolite skeleton structure is broken, it brings about catalytic activity depression via catalyst surface area reduction and reduction in catalyst activity points; and therefore, the integral intensity area at a signal intensity of around -100 ppm is preferably smaller. Concretely, the integral intensity area at a signal intensity of from -75 to -125 ppm is preferably at most 40% relative to the integral intensity area at a signal intensity of from -99 to -125 ppm, more preferably at most 15%.

<Production Method for Zeolite>

Zeolite in the invention is a pre-se known compound, and can be produced according to an ordinary method. The production method for zeolite in the invention is not specifically defined, and for example, it may be produced according to the method described in JP-B 4-37007, JP-B 5-21844, JP-B 5-51533, USP 4440871, JP-A 2003-183020, USP 4544538, etc.

Zeolite for use in the invention is generally obtained by mixing materials that contain the constitutive atoms and optionally a template followed by hydrothermal synthesis and template removal.

Aluminosilicates are obtained, in general, by mixing an aluminium atom material, a silicon atom material (and optionally any other atom (Me) material in case where the compound contains any other atom Me) and further optionally a template, followed by hydrothermal synthesis and template removal.

Aluminophosphates are obtained, in general, by mixing an aluminium atom material, a phosphorus atom material (and optionally any other atom (Me) material in case where the compound contains any other atom Me) and further optionally a template, followed by hydrothermal synthesis and template removal.

As a specific example of production of zeolite, a method of producing aluminophosphates (silicoaluminophosphate) containing silicon as Me is described below.

In general, silicon-containing aluminophosphates are obtained by mixing an aluminium atom material, a phosphorus atom material, a silicon atom material and optionally a template, followed by hydrothermal synthesis. In case where a template is incorporated in the system, in general, the template is removed after the hydrothermal synthesis.

<Aluminium Atom Material>

The aluminium atom material for zeolite in the invention is not specifically defined, generally including pseudoboehmite, aluminium alkoxide such as aluminium isopropoxide or aluminium triethoxide, and aluminium hydroxide, alumina sol, sodium aluminate, etc.; and preferred is pseudoboehmite.

<Phosphorus Atom Material>

The phosphorus atom material for zeolite for use in the invention is generally phosphoric acid, for which, however, aluminium phosphate is also usable.

<Silicon Atom Material>

The silicon atom material for zeolite in the invention is not specifically defined, generally including fumed silica, silica sol, colloidal silica, water glass, ethyl silicate, methyl silicate, etc.; and preferred is fumed silica.

<Template>

As the template for use in production of the zeolite in the invention, various templates for use in known methods can be used, and using the following template is preferred here.

For the template for use in the invention, at least one compound is selected from each of two groups, (1) an alicyclic heterocyclic compound containing nitrogen as the hetero atom, and (2) an alkylamine.

(1) Alicyclic heterocyclic compound containing nitrogen as hetero atom:

The hetero ring of the alicyclic heterocyclic compound containing nitrogen as the hetero atom is generally a 5- to 7-membered ring, preferably a 6-membered ring. The number of the hetero atoms contained in the hetero ring is generally at most 3, preferably at most 2. The hetero atom except nitrogen may be any arbitrary one. Preferably, the compound contains oxygen in addition to nitrogen. The position of the hetero atom is not specifically defined, but preferably, the hetero atoms are not adjacent to each other in the compound.

The molecular weight of the alicyclic heterocyclic compound containing nitrogen as the hetero atom is generally at most 250, preferably at most 200, more preferably at most 150, and is generally at least 30, preferably at least 40, more preferably at least 50.

The alicyclic heterocyclic compound containing nitrogen as the hetero atom includes morpholine, N-methylmorpholine, piperidine, piperazine, N,N'-dimethylpiperazine, 1,4-azabicyclo(2,2,2)octane, N-methylpiperidine, 3-methylpiperidine, quinuclidine, pyrrolidine, N-methylpyrrolidone, hexamethyleneimine, etc. Preferred are morpholine, hexamethyleneimine, piperidine; and more preferred is morpholine.

(2) Alkylamine:

The alkyl group of the alkylamine is generally a linear alkyl group. The number of the alkyl groups contained in one molecule of the amine is not specifically defined, but is preferably 3. The alkyl group of the alkylamine for use in the invention may be partially substituted with a substituent such as a hydroxyl group or the like. The carbon number of the alkyl group of the alkylamine in the invention is preferably at most 4, and more preferably, the total carbon number of all the alkyl groups in one molecule is at most 10. The molecular weight of the amine is generally at most 250, preferably at most 200, more preferably at most 150.

The alkylamine includes di-n-propylamine, tri-n-propylamine, tri-isopropylamine, triethylamine, triethanolamine, N,N-diethylethanolamine, N,N-dimethylethanolamine, N-methyldiethanolamine, N-methylethanolamine, di-n-butylamine, neopentylamine, di-n-pentylamine, isopropylamine, t-butylamine, ethylenediamine, di-isopropyl-ethylamine, N-methyl-n-butylamine, etc. Preferred are di-n-propylamine, tri-n-propylamine, tri-isopropylamine, triethylamine, di-n-butylamine, isopropylamine, t-butylamine, ethylenediamine, di-isopropyl-ethylamine, N-methyl-n-butylamine; and more preferred is triethylamine.

A preferred combination of the template ingredients (1) and (2) is a combination containing morpholine and triethylamine. The blend ratio of the template ingredients must be selected in accordance with the condition.
In case where two types of template ingredients are mixed, in general, the molar ratio of the two types of template ingredients may be from 1/20 to 20/1, preferably from 1/10 to 10/1, more preferably from 1/5 to 5/1.

In case where three different types of template ingredients are mixed, in general, the molar ratio of the third template ingredient may be generally from 1/20 to 20/1 to the total of the two template ingredients (1) and (2), preferably from 1/10 to 10/1, more preferably from 1/5 to 5/1.
The blend ratio of two or more different types of template ingredients is not specifically defined, and may be suitably selected in accordance with the condition.
For example, in case where morpholine and triethylamine are used, the molar ratio of morpholine/triethylamine may be generally at least 0.05, preferably at least 0.1, more preferably at least 0.2, and is generally at most 20, preferably at most 10, more preferably at most 9.

Any other template ingredient may also be incorporated, and the molar ratio of the other template is generally at most 20% to all the template ingredients, preferably at most 10%.
In case where the template is used in the invention, the Si content of zeolite can be controlled, and the Si content and the Si existence condition in zeolite can be made favorable for the catalyst for purifying nitrogen oxides. Though not clear, the reason may be presumed as follows.
For example, in case where a CHA-structure SAPO is produced, the alicyclic heterocyclic compound containing nitrogen as the hetero atom such as morpholine could facilitate the production of SAPO having a high Si content. However, for producing SAPO having a small Si content, the quantities of the dense component and the amorphous component are large and the crystallization would be difficult. On the other hand, the alkylamine such as triethylamine enables production of the CHA-structure SAPO under a limited condition, but in general, different types of SAPOs may be formed as mixed. Conversely, however, the quantities of the dense component and the amorphous component are small, and production of crystalline-structure SAPO would be easy. In other words, the respective template ingredients have their own characteristics for leading a CHA structure or for promoting SAPO crystallization. Combining these characteristics could exhibit a synergistic effect, therefore providing an effect that could not be realized independently by themselves.

<Production of Zeolite through Hydrothermal Synthesis>

The above-mentioned silicon atom material, aluminium atom material, phosphorus atom material, template and water are mixed to prepare an aqueous gel. The mixing order is not defined, and the ingredients may be mixed in any order depending on the condition employed. In general, first, water is mixed with a phosphorus atom material and an aluminium atom material, and thereafter the resulting mixture is further mixed with a silicon atom material and a template.

The composition of the aqueous gel is as follows, in terms of the molar ratio of oxides of the silicon atom material, the aluminium atom material and the phosphorus atom material. The ratio of $SiO_2/Al_2O_3$ is generally larger than 0, preferably at least 0.02, and is generally at most 0.5, preferably at most 0.4, more preferably at most 0.3. Under the same standard, the ratio of $P_2O_5/AlO_3$ is generally at least 0.6, preferably at least 0.7, more preferably at least 0.8, and is generally at most 1.3, preferably at most 1.2, more preferably at most 1.1.

The composition of the zeolite to be produced through hydrothermal synthesis has a correlation with the composition of the aqueous gel; and for obtaining zeolite having a desired composition, the composition of the aqueous gel may be good to be suitably defined. The total amount of the template may be, as represented by the molar ratio of the template to the aluminium atom material in the aqueous gel, as $Al_2O_3$, is generally at least 0.2, preferably at least 0.5, more preferably at least 1, and is generally at most 4, preferably at most 3, more preferably at most 2.5.

The sequence in mixing one or more template ingredients selected from each of the above-mentioned two groups is not specifically defined. The template ingredients may be prepared and may be mixed with the other substance, or the individual template ingredients may be separately mixed with the other substance.

The ratio of water is generally at least 3 in terms of the molar ratio thereto to the aluminium atom material, preferably at least 5, more preferably at least 10, and is generally at most 200, preferably at most 150, more preferably at most 120.

The pH of the aqueous gel is generally at least 5, preferably at least 6, more preferably at least 6.5, and is generally at most 10, preferably at most 9, more preferably at most 8.5.

If desired, the aqueous gel may contain any other ingredient than the above. The additional ingredient includes alkali metal or alkaline earth metal hydroxides, salts and hydrophilic organic solvents such as alcohols, etc. Regarding the content thereof, the alkali metal or alkaline earth metal hydroxide or salt may be in an amount of generally at most 0.2, preferably at most 0.1 in terms of the molar ratio thereof to the aluminium atom material; and the hydrophilic organic solvent such as alcohol or the like may be in an amount of generally at most 0.5, preferably at most 0.3 in terms of the molar ratio thereof to water.

The resulting aqueous gel is put into a pressure chamber, and under its own pressure or under a vapor pressure not detracting from crystallization, this is stirred or kept static therein at a predetermined temperature for hydrothermal synthesis. The reaction temperature of hydrothermal synthesis is generally not lower than 100˚C, preferably not lower than 120˚C, more preferably not lower than 150˚C, and is generally not higher than 300˚C, preferably not higher than 250˚C, more preferably not higher than 220˚C. Preferably, the system is kept for at least 1 hour in a temperature range of from 80 to 120˚C in the process of heating it up to the highest ultimate temperature in the above-mentioned temperature range, more preferably for at least 2 hours. When the heating time within the temperature range is shorter than 1 hour, then the durability of the zeolite to be obtained by firing the resulting template-containing zeolite may be insufficient. Keeping the system within the temperature range of from 80 to 120˚C for 1 hour or more is preferred from the viewpoint of the durability of the zeolite. More preferably, the system is kept within the range for 2 hours or more.

On the other hand, the uppermost limit of the time is not specifically defined. However, when the time is too long, then it would be unfavorable from the viewpoint of the production efficiency. In general, the time is at most 50 hours, preferably at most 24 hours from the viewpoint of the production efficiency.

The heating method within the above temperature range is not specifically defined. For example, the system may be heated monotonically, or may be stepwise heated, or its temperature may be changed by shaking it up and down, or these methods may be combined in various modes. In general, preferred is a method of monotonically heating the system while the heating speed is kept to be not higher than a given level, as the system control is easy.

Preferably, in the invention, the system is kept at around the highest ultimate temperature for a predetermined period of time. Around the highest ultimate temperature means a range of from a temperature lower by 5˚C than the temperature to the highest ultimate temperature; and the time for which the system is kept at the highest ultimate temperature may have some influence on the easiness in producing the desired product, and is generally at least 0.5 hours, preferably at least 3 hours, more preferably at least 5 hours, and is generally at most 30 days, preferably at most 10 days, more preferably at most 4 days.

The method of changing the temperature after the system has reached the highest ultimate temperature is not specifically defined. The temperature may be stepwise varied, or may be varied up and down to be not higher than the highest ultimate temperature by shaking the system, or these methods may be combined in various modes. In general, from the viewpoint of the durability of the zeolite to be obtained, preferred is a method where the system is kept at the highest ultimate temperature and then lowered to a temperature falling between 100˚C and room temperature.

<Zeolite Containing Template>

After the hydrothermal synthesis, the product, template-containing zeolite is separated from the hydrothermal synthesis reaction liquid. The method of separating the template-containing zeolite is not specifically defined. In general, the zeolite is separated through filtration, decantation or the like, washed with water, and dried at a temperature falling between room temperature and 150˚C to give the product.

Next, in general, the template is removed from the template-containing zeolite, and the method for the removal is not specifically defined. In general, the template-containing zeolite may be fired in an atmosphere of air or oxygen-containing inert gas or an inert gas atmosphere at a temperature of from 400˚C to 700˚C, or may be extracted with an extraction solvent of an aqueous ethanol solution, HCl-containing ether or the like, whereby the contained organic substance may be removed. Preferred is removal by firing from the viewpoint of the producibility.

In producing the catalyst of the invention, a metal may be supported by the template-free zeolite, or a metal may be supported by the template-containing zeolite and then the template may be removed. Preferred is the method where a metal is supported by the template-containing zeolite and the template is removed, since the number of the processing steps is small and since the method is simple.

In case where a metal is supported by zeolite, zeolite from which the template is removed by firing is employed

in an ordinary ion-exchange method. This is because the metal may be introduced through ion exchange into the fine pores of the zeolite from which the template has been removed, thereby giving an ion-exchanged zeolite; however, the template-containing zeolite could not be processed for ion exchange, and is therefore unfavorable for catalyst production in the mode of ion exchange. In the production method of the invention, the ion-exchange method is not employed but the template-containing zeolite is used. In the method, the dispersion medium is removed from the metal-containing mixture dispersion and the dispersion is fired in the manner mentioned below thereby giving the intended catalyst simultaneously with template removal. Accordingly, the method of the invention is advantageous from the viewpoint of the producibility.

In case where a metal is supported after template removal, in general, the contained template may be removed according to various methods of a method of firing at a temperature generally falling between 400˚C and 700˚C in an air or oxygen-containing inert gas atmosphere or an inert gas atmosphere, or a method of extraction with an extractant such as an aqueous ethanol solution, HCl-containing ether or the like.

The catalyst for purifying nitrogen oxides of the invention can be obtained generally by making zeolite support a metal having a catalytic activity.

<Metal>

Not specifically defined, the metal for use in the invention may be any one capable of being supported by zeolite to exhibit the catalytic activity thereof. Preferably, the metal is selected from iron, cobalt, palladium, iridium, platinum, copper, silver, gold, cerium, lanthanum, praseodymium, titanium, zirconia, etc. More preferably, it is selected from iron or copper. Zeolite may support two or more different types of metals as combined.

In the invention, "metal" does not always mean an element in a zero-valent state. "Metal" herein referred to includes its state of being held in the catalyst, for example, in the state of being ionic or being in any other species.
The metal source of the metal to be supported by zeolite in the invention is not specifically defined, for which are employable metal salts, metal complexes, metal elementary substances, metal oxides, etc. Preferred are inorganic acid salts such as nitrates, sulfates, hydrochlorides, etc.; or organic acid salts such as acetates, etc. The metal source may be soluble or insoluble in the dispersion medium to be mentioned below.

The amount of the metal to be supported in the invention is not specifically defined. The amount may be generally at least 0.1 % in terms of the ratio thereof by weight to zeolite, preferably at least 0.5%, more preferably at least 1%, and is generally at most 10%, preferably at most 8%, more preferably at most 5%. When the amount is less than the lowermost limit, then the active points tend to decrease and the catalyst could not exhibit the catalytic performance. When the amount is more than the uppermost limit, the metal aggregation would be noticeable and the catalytic performance may lower.

The catalyst of the invention may be used along with a reducing agent. Combined use of a reducing agent is preferred, as the catalyst can attain purification more efficiently. As the reducing agent, usable are ammonia, urea, organic amines, carbon monoxide, hydrocarbons, hydrogen, etc. Preferred is ammonia and urea.

<Catalyst for purifying Nitrogen Oxides>

The catalyst for purifying nitrogen oxides of the invention can be analyzed for the electron microscale distribution of the metal therein through electron mapping with an electron microprobe analysis (hereinafter EMPA). The observation method is generally as follows. A catalyst powder is embedded in a resin, cut with a cross section microtome (diamond edge), and then analyzed through metal element mapping in a range of from 10 to 50 $\mu m^2$, thereby forming an electron map with 200 x 200 pixels.

In the catalyst of the invention, in general, the metal distribution in zeolite is inhomogeneous and the metal is partly localized, and preferably, a large quantity of the metal is supported by the catalyst surface. Concretely, in the electron mapping, the metal distribution in zeolite is inhomogeneous, which may be indicated by the height of the fluctuation coefficient in the map of the metal intensity in EMPA. The fluctuation coefficient is at least 20%, preferably at least 25%. The fluctuation coefficient may be obtained by dividing the standard deviation of the metal intensity of all the pixels in the element map by the mean value of all the pixels.

This may be presumed because, in the catalyst produced according to the ordinary ion-exchange method, the metal could be uniformly distributed inside the zeolite crystal and therefore the metal amount on the zeolite crystal surface for actual reaction would reduce and the purification performance of the catalyst would lower. Not specifically defined, the production method for the catalyst of the invention may be any method where the metal distribution in zeolite can be inhomogeneous. Preferably, a mixture of zeolite, a metal source for the metal and a dispersion medium is prepared, and the dispersion medium is remove to thereby make the zeolite support the metal; and according to the method, the metal may be localized in the zeolite surface and the metal amount to contribute toward the reaction may increase, whereby the purification performance of the catalyst could increase. In case where the metal fluctuation

coefficient in the above map is not more than 20%, the metal is uniformly dispersed inside zeolite and the purification performance of the catalyst is low. The uppermost limit is not specifically defined, but is generally at most 100%, preferably at most 50%.

The particle size of the metal in the catalyst of the invention can be determined with a transmission electron microscope (hereinafter TEM).
The particle size of the metal held in the catalyst of the invention is not specifically defined. The diameter may be generally from 0.5 nm to 20 nm, and preferably, its lowermost limit is at least 1 nm and its uppermost limit is at most 10 nm, more preferably at most 5 nm.

In case where a catalyst is produced according to an ordinary ion-exchange method, the metal is finely dispersed inside zeolite as ions, and the particle size thereof is less than 0.5 nm; and therefore the metal could not be observed with TEM. It is considered that the ion-exchanged metal could not contribute toward direct purification reaction, and the metal aggregates would contribute toward purification reaction. In case where drying is attained in a dipping method, the metal may aggregate to give particles larger than 20 nm in size. In case where the metal aggregates into large particles of more than 20 nm, the specific surface area of the metal decreases and the metal surface capable of contributing toward may be small and the purification performance of the catalyst would lower.

TEM observation may be attained generally as follows. A catalyst power prepared by milling is dispersed in ethanol, then dried, and the resulting sample is observed. The sample amount is not specifically defined. Preferably, the sample amount is enough for such that the zeolite particles overlap little with each other in TEM observation and a larger amount of the zeolite particles could be taken in one photographic picture of a few μm square. In TEM observation, Cu particles are seen dark on bright zeolite.

The accelerating voltage in observation is preferably from 200 kV to 800 kV. When the voltage is lower than 200 kV, then it could not transmit through the zeolite crystal and the supported metal particles could not be observed; but when higher than 800 kV, then the sight may lose the contrast and the metal particles could not be observed. For the observation, used is a high-sensitivity CCD camera for picture taking. In picture taking on a negative film, the dynamic range is narrow and the zeolite particles would be seen dark, and the metal particles could not be observed.

<Ammonia TPD>

The ammonia adsorption and adsorption intensity of the catalyst of the invention can be determined from the ammonia adsorption characteristics measured according to an ammonia temperature programmed desorption test (hereinafter TPD method).
Not specifically defined, the peak temperature in the ammonia TPD method of the catalyst of the invention is preferably higher than that of the catalyst supported through ion exchange, and is generally not lower than 250˚C, preferably not lower than 280˚C, and is generally not higher than 500˚C, preferably not higher than 350˚C.

The adsorption amount of ammonia in the catalyst of the invention, as measured through ammonia TPD is, though not specifically defined, preferably larger as the adsorption by the reducing agent to reduce nitrogen oxides is larger, and in general, it is at least 0.6 mol/kg, preferably at least 0.8 mol/kg, more preferably at least 0.9 mol/kg. The uppermost limit is not specifically defined, and may be generally at most 5 mol/kg.

In case where a metal such as copper, iron or the like is supported by zeolite, the metal is ionized and is held by the acid points of zeolite. Accordingly, ammonia could be hardly adsorbed by the acid point of zeolite that has supported the active metal, and ammonia is weakly adsorbed by the active metal. As a result, the desorption temperature in ammonia TPD is low, therefore having a peak top generally at from 150 to 250˚C. However, for use as a catalyst for purifying nitrogen oxides, it is considered desirable that ammonia is adsorbed by the catalyst more strongly as promoting the reaction at a high SV.

The peak top temperature and the adsorption amount of ammonia in the catalyst of the invention in ammonia TPD can be determined as follows. For removing the adsorbed water, the sample is first heated at 400 to 500˚C in an inert atmosphere, and kept as such for about 1 hour. Subsequently, while this is kept at 100˚C, ammonia is led to circulate around it for 15 go 30 minutes and is thereby adsorbed by the sample. For removing the ammonia having been hydrogen-bonded to the ammonium ions adsorbed by the acid points of zeolite, water vapor is introduced into the system and kept in contact with the sample for 5 minutes. This operation is repeated 5 to 10 times. After the treatment, the sample is heated from 100 up to 610˚C at a rate of 10˚C/min under an inert gas circulation atmosphere, and the amount of ammonia desorbed at different temperatures is measured. The data of the ammonia amount are plotted on a graph in which the vertical axis indicates the temperature, in which the peak top is read as the peak top temperature of ammonia TPD. The total amount of ammonia desorbed in the heating process is taken as the ammonia adsorption.

In the fifth embodiment of the invention, the catalyst has an adsorption retention rate of at least 80% in the water vapor repetitive adsorption/desorption test.
Preferably, the catalyst of the invention has a higher adsorption retention rate in the water vapor repetitive adsorption/desorption test at 90˚C; and in general, the adsorption retention rate of the catalyst is at least 80%, preferably at least

90%, more preferably at least 95%, and the uppermost limit is 100%. The water vapor repetitive adsorption/desorption test is the same as the water vapor repetitive adsorption/desorption test for zeolite described above.

Preferably, the catalyst of the invention has, as measured in the water vapor repetitive adsorption/desorption test at 90˚C, a water adsorption amount of at least 70% relative to the water adsorption amount thereof under a relative vapor pressure of 0.2, more preferably at least 80%, even more preferably at least 90%.

The test condition is the same as that for the test for zeolite described above.

Concretely, in the water vapor repetitive adsorption/desorption test for a total of 2000 cycles at 90˚C, the water adsorption amount of the sample at 25˚C and at a relative water vapor of 0.2 after the test is generally at least 70% of the water adsorption amount thereof before the test, preferably at least 80%, more preferably at least 90%.

The change in the catalyst through repetitive adsorption/desorption cycles can be checked based on the change of the water vapor adsorption isotherm of the catalyst before and after the test.

In case where there is no change in the catalyst structure through the repetition of water adsorption/desorption, there is also no change in the water vapor adsorption isotherm; but in case where the catalyst has changed, for example, when the catalyst structure has been broken, the adsorption level is lowered.

The catalyst of the invention has a high adsorption retention rate in the water vapor repetitive adsorption/desorption test, and is therefore excellent in the ability to remove nitrogen oxides and is highly stable. When used in automobiles, etc., in fact, the catalyst of the invention is considered to be subjected to repetitive water adsorption/desorption to thereby remove nitrogen oxides, and therefore, those that do not degrade through repetitive water adsorption/desorption are considered to have a structure excellent in exhaust gas purification capability and actually have an excellent ability to remove nitrogen oxides in practical use.

<NO-IR>

The condition of the metal existing in the catalyst of the invention, and the reaction intermediate to form through reaction of the metal and nitrogen oxides can be observed through the IR absorption spectrum of the catalyst having adsorbed nitrogen monoxide (hereinafter this is referred to as NO-IR).

Preferably, the catalyst of the invention has at least two absorption wavelengths existing between 1860 and 1930 $cm^{-1}$ in the difference in NO-IR measured at 25˚C before and after adsorption of hydrogen monoxide (NO) by the catalyst.

Also preferably, the catalyst of the invention has a ratio of the maximum peak intensity at 1525 to 1757 $cm^{-1}$ to the maximum peak intensity at 1757 to 1990 $cm^{-1}$ of at most 1 in the difference in NO-IR measured at 150˚C before and after adsorption of hydrogen monoxide (NO) by the catalyst.

The catalyst having a high ability to remove nitrogen oxides contains somewhat aggregated metal particles of from 0.5 nm to 20 nm in size, in addition to the finely dispersed metal ions therein. When nitrogen monoxide is adsorbed by the particles at room temperature, then both the metal ions and the metal aggregate particles adsorb nitrogen monoxide, and therefore the catalyst gives at least two peaks in the range of from 1860 to 1930 $cm^{-1}$. The catalyst produced according to an ordinary ion-exchange method carries metal ions alone as uniformly supported by zeolite therein. When nitrogen monoxide is adsorbed by the catalyst of the type at room temperature, then the nitrogen monoxide adsorbed by the metal ions gives a single absorption peak in the range of from 1860 to 1930 $cm^{-1}$ in NO-IR. However, the metal as uniformly supported by the carrier as single ion has a low ability to remove nitrogen oxides.

Of nitrogen oxides, nitrogen monoxide is known as poorly reactive. Accordingly, nitrogen monoxide is first oxidized by the catalyst to form nitrogen dioxide. The formed nitrogen dioxide reacts with nitrogen monoxide to be decomposed into nitrogen and water. Nitrogen monoxide and nitrogen dioxide are detected at 1757 to 1990 $cm^{-1}$ and at 1525 to 1757 $cm^{-1}$, respectively, in NO-IR; and therefore, the reactivity of nitrogen monoxide and nitrogen dioxide adsorbed by the catalyst can be evaluated through NO-IR.

In case where the reactivity of nitrogen dioxide adsorbed by a catalyst is low, then nitrogen dioxide could not be removed from the catalyst even though the temperature is elevated, and therefore in NO-IR, a strong peak is detected at 1525 to 1757 $cm^{-1}$. The fact that the peak at 1525 to 1757 $cm^{-1}$ in NO-IR is small means that nitrogen dioxide rapidly reacts with nitrogen monoxide and is removed from the surface of the catalyst.

NO-IR of the catalyst of the invention can be measured as follows.

Room temperature measurement:

The catalyst powder is put in an adsorption test cell and heated up to 150˚C in vacuum and kept as such for 1 hour for pretreatment. This is cooled to 30˚C, and its IR spectrum is measured to be the background spectrum. NO under 20 Pa is introduced into the cell, and the varying IR spectrum is taken.

150˚C measurement:

After the room temperature measurement, the sample cell is heated up to 150˚C, and kept as such for 1 hour for pretreatment. Still kept at 150˚C, the IR spectrum of the sample is taken to be the background. NO under 20 Pa is introduced into the cell, and the varying IR spectrum is taken.

<Electron Spin Resonance>

In case where copper is held in the catalyst of the invention, the electron spin resonance (hereinafter ESR) spectrum of the catalyst can clarify the coordination structure of the ligand (e.g., oxygen) relative to the copper(II) ion and the bonding mode between the metal ion and the ligand.
In the catalyst of the invention, the metal distribution is inhomogeneous. In the catalyst of the type, there exist at least two different modes of copper. For example, there exist an ion-exchanged copper and slightly aggregated copper particles having a size of from 5 to 20 nm or so, as combined therein. Accordingly, in the ESR spectrum, the catalyst having at least two g|| factors attributable to the copper(II) ion is desirable as having a high denitration activity. More preferably, at least two these g|| factors both have a value falling between 2.3 and 2.5. The catalyst produced according to an ordinary ion-exchange method carries only one type of metal ion uniformly supported by zeolite. The ESR spectrum of the catalyst of the type shows only one type of g|| factor attributable to the copper(II) ion. However, the metal thus uniformly supported as the single ion thereof has a low ability to remove nitrogen oxides.
The ESR spectrum of the catalyst of the invention can be measured as follows.
60 mg of the catalyst powder is loaded in a quartz tube having a diameter of 5 mm, then dried therein at 150˚C for 5 hours, and the tube is sealed up. The sample tube is set in an ESR analyzer, and its ESR spectrum is measured in a magnetic field modulation of 100 kHz, for a response term of 0.1 seconds, for a magnetic field sweeping time of 15 minutes and at a microwave output power of 0.1 mW. The center magnetic field and the sweeping magnetic field width may be determined in any desired manner.
The particle size of the catalyst for purifying nitrogen oxides of the invention is generally at most 15 $\mu$m, preferably at most 10 $\mu$m, and its lowermost limit is generally 0.1 $\mu$m. If desired, the catalyst may be dry-ground with a jet mill or the like, or may be wet-ground with a ball mill or the like. The method for measuring the mean particle size of the catalyst is the same as that for measuring the particle size of zeolite mentioned above.
Preferably, the catalyst for purifying nitrogen oxides of the invention has, as observed in XRD thereof using CuK$\alpha$ as the X-ray source, a diffraction peak in a diffraction angle (2$\theta$) range of from 21.2 degrees to 21.6 degrees in addition to the zeolite-derived peak. Having the diffraction peak means that the peak height at from 21.2 to 21.6 degrees is at least 1% relative to the peak height of the highest intensity in the diffraction range of from 3 to 50 degrees, preferably at least 2%, more preferably at least 5%. The peak height indicates the height up to the peak top from the base line with no diffraction peak existing therein.
The X-ray diffraction measurement of the metal-supporting zeolite catalyst may be attained with no treatment of the catalyst or after heat treatment thereof. In case where the catalyst is heat-treated, the heat treatment temperature is generally not lower than 700˚C, preferably not lower than 750˚C, and is generally not higher than 1200˚C, preferably not higher than 1000˚C, more preferably not higher than 900˚C. The heat treatment time is generally at least 1 hour, preferably at least 2 hours and is generally at most 100 hours, preferably at most 24 hours.
The catalyst for purifying nitrogen oxides of the invention can be obtained generally by making zeolite support a metal having a catalytic activity.

[Metal Supporting Method]

The method for making zeolite support a metal species in producing the catalyst of the invention is not specifically defined. Employable are an ordinary ion-exchange method, a dipping method, a precipitation method, a solid-phase ion-exchange method, a CVD method, etc. Preferred is an ion-exchange method and a dipping method.
The metal source of the metal species is not specifically defined. Ordinary metal salts are employable, including, for example, nitrates, sulfates, acetates, hydrochlorides, etc.
In dipping for making the catalyst support a metal, preferably, the slurry is dried within a short period of time, more preferably dried according to a spray-drying method.
The drying is followed by heat treatment generally at 400˚C to 900˚C. The heat treatment enhances the metal dispersion and enhances the interaction of metal with the zeolite surface; and therefore, the heat treatment is attained preferably at 700˚C or higher. The atmosphere for the heat treatment is not specifically defined. The heat treatment may be attained in air, in nitrogen or in an inert atmosphere such as argon or the like, in which water vapor may be contained. The heat treatment as referred to herein includes the water vapor treatment for measurement of the physical properties of the catalyst for purifying nitrogen oxides of the invention mentioned above, and also the firing treatment in producing

nitrogen oxides of the invention to be mentioned below.
The method of heat treatment is not specifically defined. For example, a muffle furnace, a kiln, a fluidized bed firing furnace or the like may be used. Preferred is a method of firing with circulating the above-mentioned vapor through the system. The vapor circulation speed is not specifically defined. In general, the system is heat-treated with vapor circulation at a vapor circulation rate per gram of powder of at least 0.1 ml/min, preferably at least 5 ml/min, and generally at most 100 ml/min, preferably at most 20 ml/min to produce the catalyst.
In case where the vapor circulation rate per gram of powder is less than the above-mentioned lowermost limit, then the acid remaining in the dry powder could not be removed during heating and there is a possibility that zeolite may be broken by the acid; but when the rate is more than the above-mentioned uppermost limit, then the powder may scatter.
The temperature for the heat treatment in the invention is not specifically defined. In general, it is not lower than 250˚C, preferably not lower than 500˚C, and is generally not higher than 1000˚C, preferably not higher than 900˚C. When the temperature is lower than the lowermost limit, then the metal source could not decompose; but when higher than the uppermost limit, the zeolite structure may be broken.
The method for producing the catalyst for purifying nitrogen oxides of the invention comprises, as described above, removing the dispersion medium from a mixture of zeolite at least containing an aluminium atom and a phosphorus atom or zeolite having a 8-membered ring structure, with a metal source and a dispersion medium, followed by firing, in which the dispersion medium removal is attained within a period of 60 minutes. The production method of the invention is descried in detail hereinunder.

<Production Method for Catalyst for purifying Nitrogen Oxides>

The production method for the catalyst for purifying nitrogen oxides of the invention comprises, as described above, preparing a mixture of zeolite, a metal and a dispersion medium, removing the dispersion medium from the mixture and firing the mixture, wherein the removal of the dispersion medium is attained within a period of at most 60 minutes.

<Mixture of Zeolite, Metal Source and Dispersion Medium>

First a mixture of zeolite, a metal source and a dispersion medium (hereinafter this may be simply referred to as mixture) is prepared.
The dispersion medium in the invention is a liquid for dispersing zeolite therein. The mixture for use in the invention is generally slurry or cake, but is preferably slurry from the viewpoint of the operation aptitude.
The type of the dispersion medium for use in the invention is not specifically defined. In general, used is water, alcohol, ketone or the like; and from the viewpoint of the safety in heating, water is preferred for the dispersion medium.
The sequence of mixing the ingredients to prepare the mixture in the invention is not specifically defined. In general, a metal source is first dissolved or dispersed in a dispersion medium, and zeolite is added thereto. The solid proportion in the slurry as prepared by mixing the above ingredients is from 5% by mass to 60% by mass, preferably from 10% by mass to 50% by mass. When the solid proportion is less than the lowermost limit, the amount of the dispersion medium to be removed is too much and the dispersion medium removing step would be thereby interfered with. On the other hand, when the solid proportion is more than the uppermost limit, uniform metal dispersion on zeolite would be difficult.
The temperature in preparing the mixture for use in the invention is generally not lower than 0˚C, preferably not lower than 10˚C, and is generally not higher than 80˚C, preferably not higher than 60˚C.
In general, zeolite may generate heat when mixed with a dispersion medium, and therefore when the temperature for preparation is higher than the uppermost limit, then zeolite itself may be decomposed by acid or alkali. The lowermost limit of the temperature for preparation is the melting point of the dispersion medium.
Not specifically defined, the pH of the mixture in preparation thereof for use in the invention is generally at least 3, preferably at least 4, more preferably at least 5, and is generally at most 10, preferably at most 9, more preferably at most 8. When the pH in preparing the mixture is less than the lowermost limit or more than the uppermost limit, then zeolite may be broken.
Various additives may be added to the mixture for use in the invention for the purpose of viscosity control of the mixture or for particle morphology or particle size control after removal of dispersion medium. The type of the additive is not specifically defined. Preferred are inorganic additives, including inorganic sol, clay-type additives, etc. As the inorganic sol, usable are silica sol, alumina sol, titania sol, etc.; and silica sol is preferred. The mean particle size of the inorganic sol is from 4 to 60 nm, preferably from 10 to 40 nm. The clay-type additives include sepiolite, montmorillonite, kaolin, etc.
Not specifically defined, the amount of the additive may be at most 50%, in terms of by weight, relative to zeolite, preferably at most 20%, more preferably at most 10%. When weight ratio is more than the uppermost limit, the

catalyst performance may lower.
The method of mixing the ingredients to prepare the mixture for use in the invention may be any one capable of fully mixing or dispersing zeolite and the metal source; and various known methods are employable. Concretely, stirring, ultrasonic waves, homogenizers and the like are used.

<Removal of Dispersion Medium>

Next, the dispersion medium is removed from the mixture for use in the invention. Not specifically defined, the method for removing the dispersion medium may be any method capable of removing the dispersion medium within a short period of time. Preferred is a method of removal within a short period of time via a uniformly sprayed state; and more preferred is a method of removal by contact with a high-temperature heat carrier via a uniformly sprayed state; and even more preferred is a method of removal by contact with hot air serving as a high-temperature heat carrier via a uniformly sprayed state thereby giving a uniform powder, "spray drying".

In case where spray drying is applied to the invention, centrifugal spraying with a rotating disc, pressure spraying with a pressure nozzle, or spraying with a two-fluid nozzle, a four-fluid nozzle or the like may be employed as the spraying method.
The sprayed slurry is brought into contact with a heated metal plate or with a heat carrier such as a high-temperature gas by which the dispersion medium is removed. In any case, the temperature of the heat carrier is not specifically defined, and may be generally from 80˚C to 350˚C. When the temperature is lower than the lowermost limit, the dispersion medium could not be fully removed from the slurry, but when higher than the uppermost limit, the metal source may decompose and the metal oxide may aggregate.

In case where spray drying is employed, the drying condition is not specifically defined. In general, the gas inlet port temperature may be from about 200 to 300˚C, and the gas outlet port temperature may be from about 60 to 200˚C. The time necessary for removing the dispersion medium from the mixture for use in the invention means the time to be taken until the amount of the dispersion medium in the mixture could be at most 1% by mass. The drying time in a case where water is the dispersion medium means the time to be taken until the amount of water contained in the mixture could reach at most 1% by mass of the obtained mixture from the time when the mixture temperature has reached 80˚C or higher. The drying time in the other case where any other than water is the dispersion medium means the time to be taken until the amount of the dispersion medium contained in the mixture could reach at most 1% by mass of the obtained mixture from the time when the mixture temperature has reached a temperature lower by 20˚C than the boiling point at normal pressure of the dispersion medium. The time for dispersion medium removal is at most 60 minutes, preferably at most 10 minutes, more preferably at most 1 minute, even more preferably at most 10 seconds. The lowermost limit is not specifically defined since the drying is attained preferably within a shorter period of time, but is generally at least 0.1 seconds.

When the dispersion medium is removed from the mixture taking a time longer than the uppermost limit, then the metal source may aggregate on the surface of zeolite that carries the metal and may be thereby inhomogeneously held thereon, therefore causing catalyst activity depression. In general, the metal source is acidic or alkaline, and therefore in case where the mixture containing such a metal in the presence of a dispersion medium is exposed to a high-temperature condition for a long period of time, then the destruction of the structure of zeolite that carries the metal atom is considered to be promoted. Accordingly, it is considered that when the drying time is longer, then the catalyst activity may lower more.

The mean particle size of the dry powder obtained after removal of dispersion medium is not specifically defined. In order that the drying could be finished within a short period of time, preferably, the dispersion medium is removed so that the particle size could be generally at most 1 mm, preferably at most 200 μm, and generally at least 2 μm.

<Firing>

After removal of dispersion medium, the resulting dry powder is fired to give the catalyst of the invention. The firing method is not specifically defined, for which a muffle furnace, a kiln, a fluidized bed firing furnace or the like may be used. Preferred is a method of firing with vapor circulation to give the catalyst of the invention. The vapor circulation speed is not specifically defined. In general, the vapor circulation rte is generally at least 0.1 ml/min per gram of the powder, preferably at least 5 ml/min, and is generally at most at most 100 ml/min, preferably at most 20 ml/min. With the vapor circulation, the powder is fired to give the catalyst of the invention. When the vapor circulation rate per gram of the powder is lower than the lowermost limit, then the remaining acid could not be removed during heating and zeolite may be thereby broken; but when the circulation rate is higher than the uppermost limit, the powder may scatter.

Not specifically defined, the vapor to be circulated includes air, nitrogen, oxygen, helium, argon or their mixed vapor; and preferred is air. The vapor to be circulated may contain water vapor, The firing may be attained in a reducing atmosphere; and in this case, hydrogen may be mixed in the vapor, or an organic substance such as oxalic acid or the

like may be mixed in the powder and fired to give the catalyst.
Not specifically defined, the temperature for firing in the invention is generally not lower than 250˚C, preferably not lower than 500˚C and is generally not higher than 1000˚C, preferably not higher than 900˚C. When the temperature is lower than the lowermost limit, then the metal source could not decompose; but when higher than the uppermost limit, the zeolite structure may be broken.

The firing time may be from 1 second to 24 hours, preferably from 10 seconds to 8 hours, more preferably from 30 minutes to 4 hours. After fired, the catalyst may be ground.

[Zeolite]

Zeolite for use in the invention contains a silicon atom, an aluminium atom and a phosphorus atom in the skeleton thereof.

The framework density of the zeolite for use in the invention is a parameter reflecting the crystal structure thereof, and is not specifically defined. As the code by IZA described in ATLAS OF ZEOLITE FRAMEWORK TYPES, Fifth Revised Edition 2001, the density is generally at least 10.0 T/1000 $Å^3$, preferably at least 12.0 T/1000 $Å^3$.
Also in general, the density is at most 18.0 T/1000 $Å^3$, preferably at most 16.0 T/1000 $Å^3$, more preferably at most 15.0 T11000 $Å^3$.

<Catalyst Mixture>

The zeolite-containing catalyst of the invention may be used directly as it is powdery, or may be used after mixed with a binder such as silica, alumina, clay mineral or the like as a catalyst-containing mixture (hereinafter this may be referred to as catalyst mixture).

For enhancing the shapability and the strength thereof, various substances may be added to the catalyst not detracting from the performance of the resulting catalyst. Concretely, inorganic fibers such as alumina fibers, glass fibers or the like, as well as clay minerals such as sepiolite or the like may be added. Preferred are inorganic fibers such as alumina fibers, glass fibers, etc.

<Binder>

The binder that may be in the catalyst mixture generally may be any of inorganic binders, for example, clay minerals such as silica, alumina, sepiolite, etc., and organic binders, and may also be substances capable of denaturing through crosslinking bonding or the like or capable of reacting with any others to function as a binder such as silicones, silicic melts, specific silica sol or alumina sol or the like (hereinafter these may be referred to as binder precursors).

Silicones as referred to herein are meant to include oligomers and polymers having a polysiloxane bond as the main chain, further including those in which the substituents in the main chain of the polysiloxane bond are partly substituted to be OH groups. Silicones and silicic melts undergo condensation in a low temperature range of from room temperature to 300˚C or so. "Specific silica gel" means one that undergoes condensation in the temperature range.

As the binder to be contained in the catalyst mixture, preferred are silicones, silicic melts, specific silica sol or alumina sol and their mixtures capable of denaturing through crosslinking bonding or the like or capable of reacting with any others in the process of mixing or the like to thereby express the function as a binder; more preferred are silicones, silicic melts and their mixtures from the viewpoint of the strength in shaping as described below; and even more preferred are compounds of a formula (I) or silicic melts, and their mixtures.

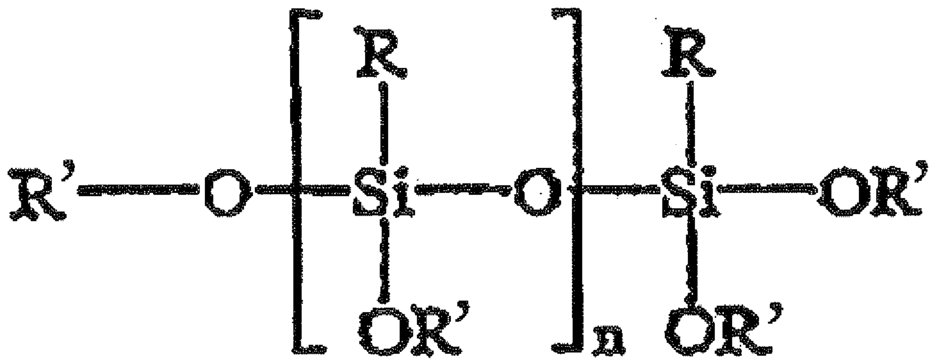

(I)

[In formula (I), R each independently represents an alkyl, aryl, alkenyl, alkynyl, alkoxy or phenoxy group optionally substituted; R' each independently represents an alkyl, aryl, alkenyl or alkynyl group optionally substituted; n indicates a number of from 1 to 100.]

R is preferably an alkyl group having from 1 to 6 carbon atoms, an aryl group having from 6 to 12 carbon atoms, an alkenyl group having from 2 to 6 carbon atoms, an alkynyl group having from 2 to 6 carbon atoms, an alkoxy group having from 1 to 6 carbon atoms, or an aryloxy group having from 6 to 12 carbon atoms, and these may be optionally substituted. More preferably, R is independently an unsubstituted alkoxy, alkyl or aryloxy group, even more preferably an alkoxy group, still more preferably an ethoxy group or a methoxy group. Most preferred is a methoxy group.

R' is preferably an alkyl group having from 1 to 6 carbon atoms, an aryl group having from 6 to 12 carbon atoms, an alkenyl group having from 2 to 6 carbon atoms, or an alkynyl group having from 2 to 6 carbon atoms, and these may be optionally substituted. Preferred is an unsubstituted alkyl group having from 1 to 5 carbon atoms; more preferred is a methyl group or an ethyl group; and most preferred is a methyl group.

A partial hydrolyzate of the above formula (I) is one in which at least a part of R and R' is hydrolyzed to be an OH group. The recurring unit number n is generally from 2 to 100, preferably from 2 to 50, more preferably from 3 to 30.

Depending on the value of n, the compound of formula (I) may exist here as a monomer form, or a long chain form or an arbitrarily branched chain form.

Silicones for use in the invention commonly include alkyl silicates such as methyl silicate or ethyl silicate.

Silicic melts in the invention are those prepared by removing the alkali metal ion from an alkali silicate solution. The method of removing alkali metal ion is not specifically defined. For example, any known method of ion exchange or the like is employable. For example, as described in Japanese Patent 3540040 and JP-A 2003-26417, a sodium silicate solution is brought into contact with an $H^+$-type cation exchange resin to prepare a silicic melt. As the alkali silicate, usable is potassium silicate in addition to sodium silicate, as well as their mixture. From the viewpoint of availability, preferred is sodium silicate. The $H^+$-type cation exchange resin may be prepared by ion-changing a commercial product, for example, Diaion SKT-20L (by Mitsubishi Chemical), Amberlite IR-120B (by Mitsubishi Chemical) or the like into an $H^+$-type one. The necessary amount of the cation exchange resin to be used may be determined from known knowledge, and in general, the amount is one capable of obtaining a cation exchange capability on the same level as that of the alkali metal ion amount in the alkali silicate. The ion exchange may be attained in any mode of flow-type or batch-type system, but generally employed is a flow-type system.

The $SiO_2$ concentration in the silicic melt is not specifically defined, but is generally from 1 to 10% by mass, preferably from 2 to 8% by mass from the viewpoint of the strength in shaping as described below. The silicic melt may contain, as a stabilizer, a small amount of an alkali metal ion or an organic base such as an organic amine or a quaternary ammonium. The concentration of the stabilizer is not specifically defined. As an example, the concentration of an alkali metal ion in a silicic melt is generally at most 1 % by mass, preferably at most 0.2% by weight from the viewpoint of the adsorption capacity, more preferably from 0.0005 to 0.*15%* by mass.

Regarding the control of the alkali metal ion concentration, a soluble salt such as alkali metal hydroxide, hydroxide, sodium silicate or the like may be added to the silicic melt from which the alkali metal ion has been removed to a level of at most 100 ppm or so, or the remaining alkali metal ion concentration may be controlled by controlling the ion-exchange condition.

<Formed article>

The catalyst for purifying nitrogen oxides or the catalyst composition of the invention can be granulated or shaped for use.

The method for granulation or shaping is not specifically defined, for which usable are various known methods. In general, the catalyst mixture is shaped and used as the formed article thereof. The form of the formed article is preferably a honeycomb structure.

In case where the catalyst is used as an exhaust gas catalyst for automobiles, etc., a coating method or a shaping method may be used to form a honeycomb catalyst. In the coating method, in general, the catalyst for purifying nitrogen oxides of the invention is mixed with an inorganic binder such as silica, alumina or the like to prepared a slurry, and the slurry is applied onto the surface of a honeycomb structure of an inorganic substance such as cordierite or the like and fired thereon to produce a formed article. In the shaping method, in general, the catalyst for purifying nitrogen oxides of the invention is kneaded with an inorganic binder such as silica, alumina or the like and inorganic fibers such as alumina fibers, glass fibers or the like, then shaped according to an extrusion method, a compression method or the like, and subsequently fired to give preferably a honeycomb catalyst.

After the formed article has been formed, a binder may be applied onto the surface thereof to thereby reinforce the formed article. In this case, as the binder, any of the above-mentioned binders can be used; however, preferred are silicones, silicic melts and their mixtures from the viewpoint of the strength in shaping to be mentioned below, and more preferred are the compounds of formula (I) or silicic melts, or their mixtures.

The formed article of the invention is produced preferably according to a process comprising the following three steps.

(1) A first step of mixing the catalyst for purifying nitrogen oxides, and inorganic fibers such as alumina fibers, glass fibers or the like, and a binder to prepare a catalyst mixture;

(2) A second step of shaping the catalyst mixture prepared in the first step, through extrusion to give a formed article precursor;

(3) A third step of firing the formed article precursor formed in the second step at a temperature falling within a range of from 150˚ to 800˚C.

(First Step)

In the first step, at least the catalyst for purifying nitrogen oxides, and inorganic fibers such as alumina fibers, glass fibers or the like, and a binder are mixed to prepare a catalyst mixture.

The blend ratio of the catalyst for purifying nitrogen oxides and the binder in the catalyst mixture may be generally such that the binder accounts for from 2 to 40 parts by weight in terms of the oxide, relative to 100 parts by weight of the catalyst for purifying nitrogen oxides, preferably from 5 to 30 parts by weight from the viewpoint of the balance between the strength and the catalyst performance.

In general, water is incorporated in the catalyst mixture. Its blend ratio may be generally from 10 to 500 parts by weight of the catalyst for purifying nitrogen oxides, though depending on the shaping method. For example, in shaping through extrusion, the proportion of water may be from 10 to 50 parts by weight of the catalyst for purifying nitrogen oxides, preferably from 10 to 30 parts by weight. A plasticizer such as celluloses, e.g., methyl cellulose, or starch, polyvinyl alcohol or the like may be added to the catalyst mixture in accordance with the property of the mixture in kneading and extrusion in the second step and for the purpose of enhancing the flowability thereof. Its blend ratio is from 0.1 to 5 parts by weight relative to 100 parts by weight of the catalyst for purifying nitrogen oxides, preferably from 0.5 to 2 parts by weight from the viewpoint of the strength.

(Second Step)

In the second step, the catalyst mixture prepared in the first step is shaped through extrusion to give a formed article precursor.

The apparatus for extrusion shaping may be any known extrusion-shaping machine. In general, the catalyst for purifying nitrogen oxides, inorganic fibers, a binder, water and optionally a plasticizer are kneaded and then shaped, using an extrusion shaping machine. Not specifically defined, the pressure in shaping may be generally from 5 to 500 $kgf/cm^2$ or so. After granulation, in general, the granules may be dried at a temperature of from about 50˚C to 150˚C to give the intended formed article precursor.

(Third Step)

In the third step, the formed article precursor formed in the second step is fired at a temperature falling within a range of from 150˚C to 900˚C. The temperature is preferably not lower than 200˚C, more preferably not lower than 250˚C, even more preferably not lower than 300˚C, and in general, preferably not higher than 800˚C, more preferably not higher than 700˚C. Fired within the temperature range, the binder precursor substantially attains crosslinking bonding therefore giving a formed article having a high strength.

The catalyst for purifying nitrogen oxides of the invention may be brought into contact with exhaust gas that contains nitrogen oxides thereby purifying the nitrogen oxides. Regarding the contact condition between the catalyst for purifying nitrogen oxides and the exhaust gas, the space velocity is generally at least 100/hr, preferably at least 1000/hr, and at most 500000/hr, preferably at most 100000/hr. The temperature may be 100˚C or higher, preferably not lower than 150˚C, and is not higher than 700˚C, preferably not higher than 500˚C.

<Method of Using Catalyst>

The zeolite-containing catalyst of the invention may be used directly as it is powder, or may be mixed with a binder such as silica, alumina, clay mineral or the like and may be granulated or shaped for use. In case where the catalyst is used as an exhaust gas catalyst for automobiles, etc., it may be shaped according to a coating method or a shaping method preferably to give a honeycomb structure.

In case where the formed article of the catalyst of the invention (hereinafter this may be simply referred to as element) is produced according to a coating method, in general, the zeolite catalyst is mixed with an inorganic binder such as silica, alumina or the like to give a slurry, the slurry is applied onto the surface of a formed article of an inorganic substance such as cordierite or the like, and fired to give the intended formed article. Preferably, the slurry is applied onto a formed article having a honeycomb structure, thereby giving a honeycomb-structured catalyst.

In case where the formed article of the catalyst of the invention is produced according to a shaping method, in general, zeolite is kneaded with an inorganic binder such as silica, alumina or the like, and inorganic fibers such as alumina fibers, glass fibers or the like, then the mixture is shaped according to an extrusion method, a compression method or the like and is thereafter fired. Preferably, the mixture is shaped into a honeycomb structure, thereby giving a honeycomb element.

The catalyst of the invention is brought into contact with exhaust gas that contains nitrogen oxides, thereby purifying the nitrogen oxides. The exhaust gas may contain any other ingredient than nitrogen oxides, and for example, may contain hydrocarbons, carbon monoxide, carbon dioxide, hydrogen, nitrogen, oxygen, sulfur oxides, water. Concretely, according to the method of the invention, nitrogen oxides contained in a number of different types of exhaust gas discharged from diesel automobiles, gasoline automobiles, stationary power plants, ships, agricultural machines, construction machines, two-wheel vehicles, airplanes and the like can be removed.

In use of the catalyst of the invention, the contact condition between the catalyst and exhaust gas is not specifically defined. The space velocity is generally at least 100/hr, preferably at least 1000/hr, and at most 500000/hr, preferably at most 100000/hr. The temperature may be generally 100˚C or higher, preferably not lower than 150˚C, and is not higher than 700˚C, preferably not higher than 500˚C.

In the process of the latter stage after purification of nitrogen oxides by the use of the catalyst for purifying nitrogen oxides of the invention, a catalyst for oxidizing the excessive reducing agent not consumed for purification of nitrogen oxides may be used to thereby lower the amount of the reducing agent in the exhaust gas. In this case, an oxidization catalyst prepared by applying a metal such as a platinum-group metal or the like to a carrier such as zeolite or the like for adsorbing the reducing agent may be used, in which the zeolite and the catalyst of the invention may be used for the zeolite and the oxidization catalyst.

EXAMPLES

The invention is described more concretely with reference to the following Examples; however, the invention is not limited by the following Examples.

<Examples 1A to 3A, Comparative Examples 1A to 5A>

Examples of the first to fourth embodiments of the invention are shown below.

(Measurement Method for XRD)

X-ray source: Cu-Kα ray
Output setting: 40 kV, 30 mA

Optical condition in measurement:

Divergence slit = 1°
Scattering slit = 1°
Receiving slit = 0.2 mm
Position of diffraction peak: 2θ (diffraction angle)
Detection range: 2θ = 3 to 50 degrees
Scanning speed: 3.0° (2θ/sec), continuous scanning
Sample preparation: About 100 mg of a sample ground by hand using an agate mortar is controlled to have a constant sample weight, using a sample holder having the same shape.

(Method of Compositional Analysis)

The sample is fused with alkali and dissolved in acid, and the resulting solution is analyzed through inductively-coupled plasma atomic emission spectrometry (ICP-AES).

(Measurement Method with TEM)

For sample preparation, ethanol and a catalyst powder are put into a mortar, and ground therein for about 10 minutes. Then, using an ultrasonic washing machine, the catalyst is dispersed in ethanol, and after left for a few minutes, a suitable amount of the dispersion is dropwise applied onto a microgrid with a carbon thin film (nominal thickness, at most 15 nm) laid thereon, and then spontaneously dried.
TEM Observation Condition:

Apparatus: H-9000UHR, by Hitachi (now Hitachi High-Technologies)
Accelerating voltage: 300 kV, conditioned for producing high-resolution images Photographing: high-sensitivity CCD camera, AMT's Advantage HR-B200
Under the above condition, the zeolite crystal in a region of at least 3500 $\mu m^2$ is observed.

(Measurement Method with Electron Microprobe Analyzer, EMPA)

For pretreatment, a catalyst powder is embedded in a resin, and cut with a cross section microtome (diamond edge) followed by Au vapor deposition.

Apparatus: JEOL's JXA-8100
Electron gun: W emitter, accelerating voltage 15 kV, radiation current 20 nA
Electron mapping: Analytical area 15.6 $\mu m^2$ (for ×5000), acquisition time 200 msec/point
Object element (dispersive crystal) Si (PET), Cu (LIFH) (ammonia TPD)
Apparatus: BEL Japan's Model TP5000
Sample amount: 30 mg
Gas used in the test: Carrier gas He, adsorption gas 5% $NH_3$/He
Pretreatment: The sample is heated up to 450°C in He (50 ml/min), then kept for 1 hour, and cooled to 100°C.
Ammonia adsorption: While kept at 100°C, the sample is made to adsorb 5% $NH_3$/He gas (50 ml/min) for 15 minutes.

Water vapor treatment: After degassed in vacuum, water vapor is introduced into the system and kept in contact with the sample therein for 5 minutes, and then the system is degassed in vacuum. This cycle is repeated for a total of 7 times.
Adsorption measurement: The sample is heated in He (50 ml/min) from 100°C up to 610°C at a rate of 10°C/min.

<Water Vapor Repetitive Adsorption/Desorption Test ("90-80-5 repetitive durability test")>

The water vapor repetitive adsorption/desorption test is as follows. A sample is held in a vacuum chamber kept at 90°C, and subjected to repeated alternative exposure to a saturated water vapor atmosphere at 5°C and a saturated

water vapor atmosphere at 80˚C each for 90 seconds. In this case, water adsorbed by the sample exposed to the saturated water vapor atmosphere at 80˚C is partly desorbed in the saturated water vapor atmosphere at 5˚C, and is moved to the water butt kept at 5˚C. From the total amount of water moved in the water butt at 5˚C through the n'th desorption from the m'th adsorption (Qn: m(g)) and the dry weight of the sample (W (g)), the mean adsorption per once (Cn: m (g/g)) is computed as follows:

$$[Cn: m] = [Qn: m]/(n - m + 1)/W$$

In general, the adsorption/desorption cycle is repeated at least 1000 times, preferably at least 2000 times, and its uppermost limit is not defined. (The process is referred to as "water vapor repetitive adsorption/desorption test at 90˚C".)

(NO-IR)

Apparatus for measurement: JASCO's FT-IR6200 FV Model
Detector: MCT
Resolution power: 4 $cm^{-1}$
Cumulated number: 256 times
Sample amount: about 5 mg
Gas used for the test: 10% NO/He
Sampling: The sample is directly rubbed against a roughly-polished CaF plate in an air atmosphere, and then sealed up in an adsorption measurement cell. Pretreatment (room temperature): The sample is heated in vacuum up to 150˚C in the adsorption measurement cell, kept as such for 1 hour for pretreatment, and then cooled to 30˚C. In this stage, the spectrum is taken to be the background. NO adsorption (room temperature): After the pretreatment (room temperature), 20 Pa NO is introduced into the cell according to the indication by the pressure gauge in the vacuum line, and the varying IR spectrum is taken.
Pretreatment (150˚C): After NO adsorption (room temperature), the sample in the adsorption measurement cell is heated up to 150˚C in vacuum, then kept as such for 1 hour for pretreatment, and thereafter further kept as such at 150˚C. In this stage, the spectrum of the sample is taken to be the background.
NO adsorption (150˚C): 20 Pa NO is introduced into the cell according to the indication by the pressure gauge in the vacuum line, and the varying IR spectrum is taken.

(ESR)

Apparatus for measurement: JEOL's FA300
Condition for measurement: arbitrary center magnetic field
Sweeping magnetic field width: arbitrary
Magnetic field modulation: 100 kHz
Response: 0.1 sec
Magnetic field sweeping time: 15 min

Microwave output: 0.1 mW

60 mg of a catalyst powder sample is loaded in a quartz tube having a diameter of 5 mm, dried at 150˚C for 5 hours, and the tube is sealed up.

(Method for Evaluation of Catalyst Activity)

The prepared catalyst was evaluated for the catalyst activity thereof according to the following method.

Catalyst Evaluation 1:

The prepared catalyst was pressed, then ground and granulated into 16 to 28-mesh particles. 5 ml of the thus-granulated catalyst was loaded in a normal-pressure fixed-type fluidized bed reactor tube. While a gas having the composition shown in Table 1 was circulated around the catalyst layer at 2900 ml/min (space velocity SV = 35000/her), the catalyst layer was heated. At a temperature of 150˚C and 175˚C when the outlet port NO concentration became constant, the nitrogen oxide-purifying activity of the catalyst was evaluated based on the following value:

(NO Purifying Ratio) = {(inlet port NO concentration) - (outlet port NO concentration)}/(inlet port NO concentration)

Catalyst Evaluation 2:

The nitrogen oxide purifying activity of each catalyst was evaluated according to the same method as the above-mentioned evaluation method except that the catalyst amount was 1 ml and the space velocity for gas circulation, SV = 100000/hr.

[Table 1]

| Gas Ingredient | Concentration |
|---|---|
| NO | 350 ppm |
| $NH_3$ | 385 ppm |
| $O_2$ | 15 % by volume |
| $H_2O$ | 5 % by volume |
| $N_2$ | balance of the above |

(Example 1A)

According to the method disclosed in Example 2 in JP-A 2003-183020, silicoaluminophosphate zeolite was produced. The obtained zeolite was analyzed for XRD, which confirmed the CHA structure thereof (frame work density = 14.6 T/1,000 $Å^3$). The zeolite composition was analyzed through ICP. The compositional ratio (by mol) of the elements, silicon, aluminium and phosphorus constituting the skeleton structure is as follows, each relative to the total of those elements. Silicon is 0.092, aluminium is 0.50 and phosphorus is 0.40.

Next, 9.4 g of copper(II) acetate monohydrate (by Kishida Chemical) was dissolved in 200 g of pure water added thereto, and 100 g of the above zeolite was further added thereto and stirred to give an aqueous slurry. The aqueous slurry at room temperature was spray-dried on a metal plate at 170˚C to give a catalyst precursor. The time for drying was not longer than 10 seconds. The catalyst precursor was fired in air at 500˚C for 4 hours with air circulation therearound at a rate of 12 ml/min per gram of the catalyst, thereby giving a catalyst 1. The catalyst 1 was evaluated for the NO purifying ratio thereof under the condition of the above Catalyst Evaluations 1 and 2. The result in Catalyst Evaluation 1 is shown in Table 2, and the result in Catalyst Evaluation 2 is in Table 3. The catalyst 1 was analyzed through ammonia TPD, in which the peak top was 321 ˚C. The adsorption amount of ammonia in the catalyst 1 was 1.1 mol/kg.

(Example 2A)

2 kg of the zeolite described in Example 1A, 188 g of copper(II) acetate monohydrate (by Kishida Chemical) and 3266 g of pure water were stirred to give an aqueous slurry. The aqueous slurry at room temperature was dried, using a 1200-ϕ disc rotating spray drier. The drying condition was as follows. The inlet port temperature was 200˚C, the outlet port temperature was 120˚C. The disc rotation speed was 18000 rpm. The slurry was fed into the device at a rate of 1.5 kg/hr, and 577 g of a dry powder was collected within 1 hour. The time for drying was not longer than 10 seconds. The dry power was fired in the same manner as in Example 1A to give a catalyst 2. Similar to Example 1A, the catalyst 2 was evaluated for the NO purifying ratio thereof under the condition of Catalyst Evaluation 1. The result is shown in

Table 2. In addition, the catalyst was evaluated for the NO purifying ratio thereof under the condition of Catalyst Evaluation 2. The result is shown in Table 3.

The TEM image of the catalyst 2 was taken. As in Fig. 1, copper particles of from 1 to 3 nm were seen dispersed on zeolite. The catalyst 2 was treated with water vapor in an atmosphere containing 10% of water vapor, at 800˚C for 5 hours, and its TEM image was taken in the same manner as before. As in Fig. 2, copper particles of from 1 to 3 nm were seen dispersed on zeolite.

The catalyst 2 was embedded in a resin, cut with a cross section microtome and then analyzed through element mapping with EPMA. As in Fig. 3, it is known that much Cu or little Cu is detected locally and partly even in the site where Si is seen in zeolite. The Cu intensity ratio fluctuation coefficient in individual 200 $\times$ 200 pixels was determined and was 33%.
The catalyst 2 was analyzed through ammonia TPD, in which the peak top was 306˚C. The adsorption amount of ammonia in the catalyst 2 was 1.1 mol/kg.
The catalyst 2 was analyzed for NO-IR, which gave two peaks at 1886 $cm^{-1}$ and 1904 $cm^{-1}$ in a range of from 1860 to 1930 $cm^{-1}$ at room temperature. At 150˚C, the ratio of the peak intensity in a range of from 1525 to 1757 $cm^{-1}$ to the peak intensity in a range of from 1757 to 1990 $cm^{-1}$ was 0.1.
The ESR spectrum of the catalyst 2 was measured, which showed two types of copper(II) ions having two values of g| | = 2.38 and g| | = 2.33.

(Example 3A)

According to the method disclosed in Example 2 in JP-A 2003-183020, template-containing silicoaluminophosphate zeolite was produced. The silicoaluminophosphate contains template in a total of 20% by weight. The template-containing silicoaluminophosphate zeolite and 9.4 g of copper(II) acetate monohydrate (by Kishida Chemical) were dissolved in 200 g of pure water added thereto, and 100 g of the above zeolite was added thereto and stirred to give an aqueous slurry. The aqueous slurry at room temperature was spray-dried on a metal plate at 170˚C to give a catalyst precursor. The time for drying was not longer than 10 seconds. The catalyst precursor was fired in air at 700˚C for 2 hours with air circulation therearound at a rate of 12 ml/min per gram of the catalyst, thereby removing the template and giving a catalyst 7. The catalyst 7 was evaluated for the NO purifying ratio thereof under the condition of the above Catalyst Evaluation 2. The result is shown in Table 3.

(Example 4A)

40 g of pure water was added to 1.1 g of basic copper(II) carbonate (by Kishida Chemical) as a water-insoluble copper source, thereby giving an aqueous dispersion. 20 g of the zeolite used in Example 2A was added thereto, and further stirred to give an aqueous slurry. The aqueous slurry at room temperature was spray-dried on a metal plate at 170˚C to give a catalyst precursor. The time for drying was not longer than 10 seconds.
The catalyst precursor was fired in air at 850˚C for 2 hours with air circulation therearound at a rate of 12 ml/min per gram of the catalyst, thereby giving a catalyst 9.

(Example 5A)

A catalyst 10 was produced in the same manner as in Example 2A, except that the firing after spray drying was attained in a rotary kiln at 750˚C for 2 hours.
The catalyst 10 was analyzed for NO-IR, which gave two peaks at 1886 $cm^{-1}$ and 1904 $cm^{-1}$ in a range of from 1860 to 1930 $cm^{-1}$ at room temperature. At 150˚C, the ratio of the peak intensity in a range of from 1525 to 1757 $cm^{-1}$ to the peak intensity in a range of from 1757 to 1990 $cm^{-1}$ was 0.1.
The ESR spectrum of the catalyst 10 was measured, which showed two types of copper(II) ions having two values of g| | = 2.38 and g| | = 2.33.

(Comparative Example 1A)

Aqueous 5.9 mas.% copper(II) acetate solution was added to the zeolite in Example 1A to give a slurry, and filtered to be cake. While ground at 100˚C, the resulting cake was dried. The drying time was 2 hours. Subsequently, the dry powder was fired in the same manner as in Example 1A to give a catalyst 3. The catalyst 3 was evaluated for the NO purifying ratio thereof under the condition of Catalyst Evaluation 1 in the same manner as in Example 1A. The result is shown in Table 2.

(Comparative Example 2A)

Using aqueous 8.9 mas.% copper(II) nitrate solution, the zeolite in Example 1A was made to support 3% by mass of copper by dipping. After dried with a drier at 100˚C, this was fired in the same manner as in Example 1A to give a catalyst 4. The drying time was 24 hours. The catalyst 4 was evaluated for the NO purifying ratio thereof under the condition of Catalyst Evaluation 1 in the same manner as in Example 1A. The result is shown in Table 2.

(Comparative Example 3A)

Aqueous 5.9 mas.% copper(II) acetate solution was added to the zeolite in Example 1A, then heated at 60˚C, stirred for 4 hours, filtered and washed to thereby make the zeolite support copper(II) ion through ion-exchange. After dried with a drier at 100˚C, this was fired in the same manner as in Example 1A to give a catalyst 5. The drying time was 24 hours. The catalyst 5 was evaluated for the NO purifying ratio thereof under the condition of Catalyst Evaluation 1 in the same manner as in Example 1A. The result is shown in Table 2.

(Comparative Example 4A)

Aqueous 5.9 mas.% copper(II) acetate solution was added to the zeolite in Example 1A to give a slurry, and filtered to be cake. While ground at 85˚C, the resulting cake was dried. The drying time was 2 hours. Subsequently, the dry powder was fired in a muffle furnace at 500˚C for 4 hours to give a catalyst 6. The catalyst 6 was evaluated for the NO purifying ratio thereof under the condition of Catalyst Evaluation 1 in the same manner as in Example 1A. The result is shown in Table 2.

(Comparative Example 5A)

80.7 g of 85% phosphoric acid was added to 188 g of water, and 54.4 g of pseudoboehmite (Pural SB, by Condea, 75% $Al_2O_3$) was added thereto, and stirred for 2 hours. 6.0 g of fumed silica (Aerosil 200) was added to the mixture, and further, 336.6 g of aqueous 35% TEAOH (tetraethylammonium hydroxide) solution was added thereto and stirred for 2 hours. The mixture was fed into a 1-liter stainless autoclave equipped with a fluororesin-made inner cylinder, and reacted therein at 190˚C for 24 hours with stirring at 150 rpm. After the reaction, zeolite was obtained in the same manner as in Example 1A. The zeolite was analyzed through XRD, which confirmed the CHA structure thereof. The compositional ratio (by mol) of the elements, aluminium, phosphorus and silicon constituting the skeleton structure was as follows, each relative to the total of those elements. Silicon was 0.097, aluminium was 0.508 and phosphorus was 0.395.

9.1 g of the above zeolite was added to 107 g of aqueous 6.0 mas.% copper(II) acetate solution, and stirred for 4 hours or more. After filtered and washed with water, the residue was dried with a drier at 100˚C. The drying time was 24 hours. Using the dry powder and 107 g of aqueous 6.0 mas.% copper(II) acetate solution, the same copper ion exchange operation was repeated. The ion exchange operation was repeated for a total of 6 times. After the copper ion exchange for a total of 6 times, the dry powder was fired in air at 750˚C for 2 hours with air circulation therearound at a rate of 120 ml/min, thereby giving a catalyst 8. The catalyst 8 was evaluated for the NO purifying ratio thereof under the condition of the Catalyst Evaluation 2. The result is shown in Table 3.

The TEM image of the catalyst 8 was taken. As in Fig. 7, ions were taken inside the zeolite crystal, and therefore no copper particles were seen on the zeolite. The catalyst 8 was treated with water vapor at 800˚C for 5 hours in an atmosphere containing 10% of water vapor, and its TEM image was taken. As in Fig. 8, there occurred no specific change, and no copper particles were still seen on the zeolite.

The catalyst 8 was embedded in a resin, cut with a cross section microtome and then analyzed through element mapping with EPMA. As in Fig. 9, Cu distributed uniformly in the entire area, and almost nowhere high-level data were detected locally. The Cu intensity ratio fluctuation coefficient in individual 200 $\times$ 200 pixels was determined and was 15%.

The catalyst 8 was analyzed through ammonia TPD, in which the peak top was 185˚C. The adsorption amount of ammonia in the catalyst 8 was 0.86 mol/kg.

The catalyst 8 was analyzed for NO-IR, which gave only one peak at 1904 $cm^{-1}$ in a range of from 1860 to 1930 $cm^{-1}$ at room temperature. At 150˚C, the ratio of the peak intensity in a range of from 1525 to 1757 $cm^{-1}$ to the peak intensity in a range of from 1757 to 1990 $cm^{-1}$ was 9.

The ESR spectrum of the catalyst 8 was measured, which showed one type of copper(II) ion having a value of g| | = 2.38.

[Table 2]

| | | Drying Time | NO Purifying Ratio (%) | |
|---|---|---|---|---|
| | | | Reaction Temperature | |
| | | | 150˚C | 175˚C |
| Example 1A | Catalyst 1 | 10 sec or less | 75 | 96 |
| Example 2A | Catalyst 2 | 10 sec or less | 84 | 100 |
| Comparative Example 1A | Catalyst 3 | 2 hr | 44 | 72 |
| Comparative Example 2A | Catalyst 4 | 24 hr | 11 | 14 |
| Comparative Example 3A | Catalyst 5 | 24 hr | 36 | 65 |
| Comparative Example 4A | Catalyst 6 | 2 hr | 34 | 56 |

[Table 3]

| | | Drying Time | NO Purifying Ratio (%) | |
|---|---|---|---|---|
| | | | 150˚C | 175˚C |
| Example 1A | Catalyst 1 | 10 sec or less | 67 | 95 |
| Example 2A | Catalyst 2 | 13 sec or less | 62 | 92 |
| Example 3A | Catalyst 7 | 10 sec or less | 67 | 96 |
| Example 4A | Catalyst 9 | 10 sec or less | 69 | 89 |
| Example 5A | Catalyst 10 | 10 sec or less | 76 | 96 |
| Comparative Example 5A | Catalyst 8 | 24 hr | 33 | 71 |

The catalysts obtained in Comparative Examples 1A to 4A had a low SCR catalyst activity at 175˚C or lower. In any of Comparative Examples 1A to 4A, the amount of the residual dispersion medium in drying for 60 minutes was more than 1% by mass. The catalysts of the invention dried within 10 seconds or rapidly dried in a mode of spray drying has a high NOx purifying ratio and exhibited a high activity at low temperature of up to 175˚C. As compared with that of the catalysts produced according to the known methods, the activity at 150˚C of the catalysts of the invention was at most 7.5 times and was at least 1.7 times, and at 175˚C the activity thereof was at most 7 times and at least 1.3 times.

<Examples 1B to 3B, Comparative Examples 1B to 3B>

Examples of the fifth to ninth embodiments of the invention are shown below.
In Examples and Comparative Examples, measuring the physical data and the treatment were attained under the condition mentioned below.

Water Vapor Adsorption Isotherm:

The sample was degassed in vacuum at 120˚C for 5 hours, and the water vapor adsorption isotherm thereof at 25˚C was determined using a water vapor adsorptiometer (BELSORB 18, by BEL Japan) under the condition mentioned below.
Air thermostat tank temperature: 50˚C
Adsorption temperature: 25˚C
Initial introduction pressure: 3.0 Torr
Number of introduction pressure set point: 0
Saturated vapor pressure: 23.755 Torr
Equilibration time: 500 sec

[Water Vapor Treatment]

The zeolite of the invention is, after treated with water vapor, measured a solid $^{29}Si$-DD/MAS-NMR spectrum mentioned below. The water vapor treatment in the invention is attained according to the following process. 3 g of zeolite is loaded in a quartz tube having an inner diameter of 33 mm, and the quartz tube is set in a cylindrical electric furnace. The electric furnace is electrically put with air circulation in the loaded layer at a rate of 100 ml/min, and heated up to 800˚C taking 1 hour. When the catalyst layer temperature has reached 800˚C, pure water is introduced into the quartz tube via a pump running at a feeding rate of 0.6 ml/hr. Pure water is injected to be fully upstream the catalyst layer and to reach the quartz tube part at 200˚C or higher so that that the injected pure water could completely vaporize upstream the catalyst layer. When the injected pure water completely vaporizes, the formed water vapor accounts for 10% of the vapor stream running through the catalyst layer. In that manner, the catalyst layer is processed at 800˚C for 10 hours, then the pump is stopped and the catalyst is left cooled to room temperature.

[Solid $^{29}Si$-DD/MAS-NMR spectrum]

In the invention the solid $^{29}Si$-DD/MAS-NMR spectrum is as follows. The water vapor-treated zeolite sample is dried in vacuum in a Schlenk flask for at least 2 hours, then sampled in a nitrogen atmosphere, and analyzed under the condition mentioned below using silicone rubber as the standard substance.

[Table 4]

| | |
|---|---|
| Apparatus | Varian NMR Systems 400 WB |
| Probe | Probe for 7.5 mmf CP/MAS |
| Measurement method | DD (dipolar decoupling)/MAS (magic angle spinning) method |
| $^{29}Si$ resonance frequency | 79.43 MHz |
| $^{1}H$ resonance frequency | 399.84 MHz |
| $^{29}Si$ 90˚ pulse width | 5 μsec |
| $^{1}H$ decoupling frequency | 50 kHz |
| MAS rotation frequency | 4 kHz |
| Waiting* | 60 sec |
| Measurement temperature | room temperature |
| Chemical shift standard | silicone rubber defined as -22.333 ppm |

XRD Measurement Condition:

X-ray source: Cu-Kα ray (λ = 1.54184 Å)
Output setting: 40 kV, 30 mA

Optical condition in measurement:

Divergence slit = 1˚
Scattering slit= 1˚
Receiving slit = 0.2 mm
Position of diffraction peak: 2θ (diffraction angle)
Detection range: 20 = 3 to 60 degrees
Sample preparation: About 100 mg of a sample ground by hand using an agate mortar is controlled to have a constant sample weight, using a sample holder having the same shape.

(Example 1B)

According to the method disclosed in Example 2 in JP-A 2003-183020, silicoaluminophosphate zeolite was produced. 101 g of 85% phosphoric acid and 68 g of pseudo boehmite (containing 25% water, by Sasol) were gradually added to 253 g of water, and stirred. This is a liquid A. Apart from the liquid A, 7.5 g of fumed silica (Aerosil 200, by Nippon Aerosil), 43.5 g of morpholine, 55.7 g of triethylamine and 253 g of water were mixed to prepare a liquid. This was gradually added to the liquid A, and stirred for 3 hours to prepare an aqueous gel. The aqueous gel was fed into a 1-liter stainless autoclave equipped with a fluororesin-made inner cylinder, then linearly heated from 30˚C up to 190˚C with stirring at a heating rate of 16˚C/hr, and reacted at the highest ultimate temperature of 190˚C for 50 hours. During the process of heating up to the highest ultimate temperature, the time for which the system was kept in the range of from 80˚C to 120˚C was 2.5 hours. After the reaction, the system was cooled and the supernatant was removed through decantation to collect the precipitate. The precipitate was washed three times with water, then collected through filtration and dried at 120˚C. (The obtained zeolite was ground with a jet mill to have a median diameter of 3 $\mu$m.) Subsequently, this was fired in an air current at 560˚C to remove the template.

Thus obtained, the zeolite was analyzed for XRD, which confirmed the CHA structure thereof (frame work density = 14.6 T/1,000 $Å^3$). This was dissolved under heat in aqueous hydrochloric acid solution, and processed for elementary analysis through ICP. The compositional ratio (by mol) of the elements, silicon, aluminium and phosphorus constituting the skeleton structure was as follows, each relative to the total of those elements. Silicon was 0.088, aluminium was 0.500 and phosphorus was 0.412.

The water vapor adsorption isotherm of the zeolite at 25˚C was determined; and the adsorption change at a relative vapor pressure of from 0.04 to 0.09 was 0.17 g/g.

The water vapor adsorption isotherm at 25˚C was determined; and the water adsorption amount at a relative vapor pressure of 0.2 was 0.28 g/g.

The zeolite was tested in a water vapor repetitive adsorption/desorption test for a total of 2000 times at 90˚C (90-80-5 water vapor repetitive adsorption/desorption test), and its retention rate was 100%. After the test for a total of 2000 times, the sample was analyzed for the water vapor adsorption isotherm thereof at 25˚C. The water adsorption amount at a relative vapor pressure of 0.2 was 0.27 g/g, and this was 96% before the repetitive adsorption/desorption test.

3 g of the zeolite was treated with water vapor at 800˚C for 10 hours in an air current with 10 % water vapor at 100 ml/min, and its solid $^{29}$Si-DD/MAS-NMR spectrum is shown in Fig. 13. In Fig. 13, the integral intensity area at a signal intensity of from -99 to -125 ppm to the integral intensity area at a signal intensity of from -75 to -125 ppm was 13%; and the integral intensity area at a signal intensity of from -105 to -125 ppm was 4%.

Aqueous copper(II) nitrate solution was applied to the zeolite thus obtained in the manner as above to thereby make the zeolite support 3% by weight of copper, and the zeolite was dried with grinding. The drying time was 30 minutes. Subsequently, this was fired at 500˚C for 4 hours to give an SCR catalyst.

(Example 2B)

Aqueous copper acetate solution was applied to the zeolite obtained in Example 1B to thereby make the zeolite support 3% by weight of Cu metal, and the zeolite was dried with a spray drier. The drying time was within 10 seconds. After dried, this was fired at 750˚C for 4 hours to give an SCR catalyst. In XRD, the catalyst gave a peak not derived from the CHA structure at 21.4 degrees.

(Example 3B)

Aqueous copper acetate solution was applied to the zeolite obtained in Example 1B to thereby make the zeolite support 3% by weight of Cu metal, and the zeolite was dried with a spray drier. The drying time was within 10 seconds. After dried, this was fired at 500˚C for 4 hours to give an SCR catalyst. In XRD, the catalyst gave no peak at 21.4 degrees. The SCR catalyst was left in an atmosphere with 10 vol.% water vapor at 800˚C for 5 hours, and analyzed through XRD, in which this gave a peak not derived from the CHA structure at 21.4 degrees.

(Example 4B)

According to the method disclosed in Example 2 in JP-A 2003-183020, silicoaluminophosphate zeolite was produced. 69.2 g of 85% phosphoric acid and 48 g of pseudoboehmite (containing 25% water, by Sasol) were gradually added to 150 g of water, and stirred for 2 hours. 8.5 g of granular silica and 210 g of water were added thereto. This is a liquid A. Apart from the liquid A, 30.8 g of morpholine and 35.7 g of triethylamine were mixed. This is a liquid B. The liquid B was gradually added to the liquid A, and stirred for 2 hours to give an aqueous gel. The composition of the aqueous gel was 1 $Al_2O_3$/0.4 $SiO_2$/0,85 $P_2O_5$/1 morpholine/1 triethylamine/60 $H_2O$. The aqueous gel was fed into a 1-liter stainless autoclave equipped with a fluororesin-made inner cylinder, then linearly heated from 30˚C up to 190˚C with stirring at a heating rate of 16˚C/hr, and reacted at the highest ultimate temperature of 190˚C for 24 hours. During the process of heating up to the highest ultimate temperature, the time for which the system was kept in the range of from 80˚C to 120˚C was 2.5 hours. After the reaction, the system was cooled and the supernatant was removed through decantation to collect the precipitate. The precipitate was washed three times with water, then collected through filtration and dried at 100˚C. The obtained dry powder was ground with a jet mill to have a median diameter of 3 μm., and then fired in an air current at 550˚C to remove the template.

Thus obtained, the zeolite was analyzed for XRD, which confirmed the CHA structure thereof (frame work density = 14.6 T/1,000 $Å^3$). This was processed for elementary analysis through ICP. The compositional ratio (by mol) of the elements, silicon, aluminium and phosphorus constituting the skeleton structure was as follows, each relative to the total of those elements. Silicon was 0.12, aluminium was 0.50 and phosphorus was 0.38.

The zeolite was tested in a 90-80-5 water vapor repetitive adsorption/desorption test for a total of 2000 times, and its retention rate was 86%.

Aqueous copper nitrate solution was applied to the zeolite thus obtained in the manner as above to thereby make the zeolite support 3% by weight of copper. This was dried and then fired at 750˚C for 2 hours to give an SCR catalyst.

(Example 5B)

20.2 g of 85% phosphoric acid was added to 74.3 g of water, and 13.6 g of pseudoboehmite (Pural SB, by Condea, 75% $Al_2O_3$) was added thereto, and stirred for 1 hour. 1.5 g of fumed silica (Aerosil 200) was added to the mixture. This is a liquid A. Apart from the liquid A, a mixed solution of 42.1 g of aqueous 35% TEAOH (tetraethylammonium hydroxide) solution and 5.9 g of isopropylamine was prepared. This is a liquid B. The liquid B was added to the liquid A, and stirred for 2 hours. The mixture was fed into a 1-liter stainless autoclave equipped with a fluororesin-made inner cylinder, and reacted at 190˚C for 48 hours with stirring at 150 rpm. After the reaction, a zeolite was obtained according to the same method as in Example 1B. The zeolite was analyzed for XRD, which confirmed the CHA structure thereof. The compositional ratio (by mol) of the elements, aluminium, phosphorus and silicon constituting the skeleton structure was as follows, each relative to the total of those elements. Silicon was 0.08, aluminium was 0.50 and phosphorus was 0.42.

The zeolite was tested in a water vapor repetitive adsorption/desorption test for a total of 2000 times at 90˚C (90-80-5 water vapor repetitive adsorption/desorption test), and its retention rate was 92%.

Next, 16 g of pure water was added to 0.78 g of copper(II) acetate monohydrate (by Kishida Chemical), and 8.0 g of the above zeolite was added thereto and further stirred to give an aqueous slurry. The aqueous slurry was dried by spraying on a metal plate at 170˚C to give a catalyst precursor. The catalyst precursor was fired at 750˚C for 2 hours in air circulation at 12 ml/min per gram of the catalyst, to give an SCR catalyst.

(Example 6B)

An SCR catalyst was produced in the same manner as in Example 2B, except that unground zeolite was used in place of the ground zeolite in Example 2B. The particle size of the zeolite was 11 μm. The obtained catalyst was evaluated for the NO purifying ratio thereof under the condition of Catalyst Reaction test 2. The result is shown in Table 7.

(Comparative Example 1B)

72 g of aluminium isopropoxide was added to 128 g of water and stirred, and 39 g of 85% phosphoric acid was added thereto and stirred for 1 hour. 1.2 g of fumed silica (Aerosil 200) was added to the solution, and further, 89 g of aqueous 35% TEAOH (tetraethylammonium hydroxide) solution was added thereto and stirred for 4 hours. The mixture was fed into a 500-cc stainless autoclave equipped with a fluororesin-made inner cylinder, and reacted therein at 180˚C for 48 hours with stirring at 100 rpm. After the reaction, zeolite was obtained in the same manner as in Example 1B. The zeolite was analyzed through XRD, which confirmed the CHA structure thereof. The compositional ratio (by mol) of the elements, aluminium, phosphorus and silicon constituting the skeleton structure was as follows, each relative to the total of those elements. Silicon was 0.033, aluminium was 0.491 and phosphorus was 0.476.

(Comparative Example 2B)

69.2 g of 85% phosphoric acid and 40.8 g of pseudoboehmite (containing 25% water, by Sasol) were gradually added to 152 g of water, and stirred. This is a liquid A. Apart from the liquid A, 7.2 g of fumed silica (Aerosil 200), 52.2 g of morpholine and 86.0 g of water were mixed to prepare a liquid. This was gradually added to the liquid A, and stirred for 3 hours to prepare an aqueous gel having the composition mentioned below. The aqueous gel was fed into a 1-liter

stainless autoclave equipped with a fluororesin-made inner cylinder, then linearly heated from 30˚C up to 190˚C with stirring at a heating rate of 16˚C/hr, and reacted at the highest ultimate temperature of 190˚C for 24 hours. During the process of heating up to the highest ultimate temperature, the time for which the system was kept in the range of from 80˚C to 120˚C was 2.5 hours. After the reaction, zeolite was obtained in the same manner as in Example 1B. The zeolite was analyzed through XRD, which confirmed the CHA structure thereof. This was dissolved under heat in aqueous hydrochloric acid solution, and processed for elementary analysis through ICP. The compositional ratio (by mol) of the elements, silicon, aluminium and phosphorus constituting the skeleton structure was as follows, each relative to the total of those elements. Silicon was 0.118, aluminium was 0.496 and phosphorus was 0.386.

(Comparative Example 3B)

28.8 g of 85% phosphoric acid and 17.0 g of pseudoboehmite (containing 25% water, by Condea) were gradually added to 35.7 g of water, and stirred for 2 hours. 3.0 g of fumed silica (Aerosil 200) was added thereto, and then tetraethylammonium hydroxide (aqueous 35% solution, by Aldrich) was gradually added thereto. The mixture was stirred for 2 hours to give a starting gel. The starting gel was fed into a 200-cc stainless autoclave equipped with a Teflon® inner cylinder, and reacted therein with rotating at 200˚C for 48 hours. After thus reacted, this was cooled and centrifuged to remove the supernatant, thereby collecting the precipitate. The resulting precipitate was washed with water, collected through filtration and dried at 100˚C. This was fired with air circulation at 550˚C for 6 hours to give zeolite. Through its powdery XRD, the zeolite was identified as a CHA-type silicoaluminophosphate. Through its ICP analysis, the compositional ratio (by mol) of the elements, aluminium, phosphorus and silicon constituting the skeleton structure was as follows, each relative to the total of those elements. Silicon was 0.11, aluminium was 0.49 and phosphorus was 0.40.

The water vapor adsorption isotherm of the zeolite at 50˚C was determined, and the water adsorption amount thereof at a relative water vapor pressure of 0.2 was 0.26 g/g. At 90˚C, this was tested in a water vapor repetitive adsorption/desorption test for a total of 2000 times, and its retention rate was 60%. After the test for a total of 2000 times, the sample was analyzed for the water vapor adsorption isotherm thereof at 50˚C. The water adsorption amount at a relative vapor pressure of 0.2 was 0.14 g/g, and this was 54% before the repetitive adsorption/desorption test.

3 g of the zeolite was heat-treated in 10% water vapor-containing air circulation at 100 ml/min, at 800˚C for 10 hours, and its solid $^{29}$Si-DD/MAS-NMR spectrum is shown in Fig. 14. In Fig. 14, the integral intensity area at a signal intensity of from -99 to -125 ppm to the integral intensity area at a signal intensity of from -75 to -125 ppm, was 47%; and the integral intensity area at a signal intensity of from -105 to -125 ppm was 29%.

Using aqueous copper acetate solution, the zeolite was ion-exchanged to support Cu metal. After dried, this was fired at 500˚C for 4 hours to give an SCR catalyst. Its XRD analysis gave no peak at 21.4 degrees except CHA structure-derived ones.

The SCR catalyst was left in a 10 vol.% water vapor atmosphere at 800˚C for 5 hours, and analyzed through XRD, which gave no peak at 21.4 degrees.

(Comparative Example 4B)

Based on the information disclosed in US 2009/0196812A1, zeolite was produced according to the following method. 98.2 g of 85% phosphoric acid was added to 236.2 g of water, and 54.4 g of pseudoboehmite (Pural SB, by Condea, 75% $Al_2O_3$) was added thereto, and stirred for 2 hours. 118.1 g of morpholine was added to the mixture, and kept stirred at room temperature until the mixture could reach 28˚C. After the mixture reached 28˚C, 1.8 g of pure water, 40.7 g of silica sol (Ludox AS40) and 16.5 g of pure water were added thereto in that order, and stirred for 2 hours. The mixture was fed into a 1-liter stainless autoclave equipped with a fluororesin-made inner cylinder, and the autoclave was heated up to 170˚C with stirring at 150 rpm, taking 8 hours. Kept as such at 170˚C for 48 hours, the contents were reacted in a mode of hydrothermal reaction. After the reaction, zeolite was obtained according to the same method as in Example 1. The zeolite was analyzed for XRD, which confirmed the CHA structure thereof. Regarding the compositional ratio (by mol) of the elements, aluminium, phosphorus and silicon constituting the skeleton structure relative to the total of those elements, silicon was found to account for 0.23 as a result of elementary analysis.

The zeolite was tested in a water vapor repetitive adsorption/desorption test for a total of 2000 times at 90˚C (90-80-5 water vapor repetitive adsorption/desorption test), and its retention rate was 19%.

Next, based on the information disclosed in US 2009/0196812A1, a catalyst was produced according to the following method. First, 45 g of aqueous ammonium nitrate solution was dissolved in 105 g of pure water added thereto, and 1 g of the above zeolite was added thereto. With stirring the mixture, aqueous 1 mol/L ammonia solution was dropwise added thereto to make the mixture have a pH of 3.2. This was processed for ammonium ion exchange at 80˚C for 1 hour, then filtered and washed. This operation was repeated again, and the resulting cake was dried at 100˚C to give an ammonium-type zeolite. 2.4 g of copper(II) acetate monohydrate (by Kishida Chemical) was dissolved in 60 g of water added thereto, and 15.0 g of the above ammonium-type zeolite was added thereto and processed for copper ion

exchange at 70˚C for 1 hour. This was filtered, washed with water and dried at 100˚C. The resulting dry powder was fired at 400˚C for 1 hour to give a comparative catalyst. The comparative catalyst was tested for the NO purifying ratio thereof under the condition of Catalyst Reaction Test 2. The result is shown in Table 7.

<Catalyst Reaction Test 1>

The catalyst was tested in a water vapor repetitive adsorption/desorption test (90-80-5 water vapor repetitive adsorption/desorption test), and its retention rate was computed. The result is shown in Table 6.
The prepared catalyst was pressed, then ground and granulated into 16 to 28-mesh particles. 5 cc of the thus-granulated catalyst was loaded in a normal-pressure fixed-type fluidized bed reactor tube. Ammonia was circulated around the catalyst layer at 150˚C for 10 minutes to thereby make the catalyst adsorb ammonia. While a gas having the composition shown in Table 5 was circulated around the catalyst layer at a space velocity SV = 30000/hr, the catalyst was evaluated for the steady-state nitrogen oxide removing ratio thereof at a temperature of from 150 to 200˚C. The removing ratio at 175˚C is shown in Table 6.

<Catalyst Reaction Test 2>

The catalyst was evaluated for the nitrogen oxide purifying ratio thereof according to the same method as that for the Catalyst Reaction Test 1, except that the catalyst amount was changed to 1 cc and SV was changed to 100,000/hr.

<Hydrothermal Durability Test>

The SCR catalyst that had been evaluated for the purifying ratio thereof as above was exposed to an atmosphere of 10 vol.% water vapor at 800˚C at a space velocity SV = 3000/hr for 5 hours for hydrothermal treatment, and then tested in the same catalyst reaction test to thereby evaluate the durability of the catalyst to high-temperature water vapor. The result is shown in Table 7.

<Water Vapor Repetitive Adsorption/Desorption Test of Catalyst>

For simulating the repetitive adsorption/desorption condition similar to implementation condition, the catalyst was tested according to "90-80-5 water vapor repetitive adsorption/desorption test". The water vapor repetitive adsorption/desorption test was the same as the above "90-80-5 water vapor repetitive adsorption/desorption test" except that the 80˚C saturated water vapor atmosphere was changed to 60˚C saturated water vapor atmosphere. After the test, the sample was collected and evaluated for the NO purifying ratio thereof under the condition of the above Catalyst Reaction Test 2. 2.0 g of the catalyst was divided into four of 0.5 g each, and these were individually put into four sample chambers and sealed up therein. These were tested according to the 90-80-5 water vapor repetitive adsorption/desorption test. The repetition frequency of adsorption/desorption was 2000 times. The sample was collected from four chambers after the water vapor repetitive adsorption/desorption test therein, and evaluated for the NO purifying ratio thereof under the condition of the Catalyst Reaction Test 2. Based on the data, the durability of the catalyst to repetitive adsorption/desorption was evaluated. The result is shown in Table 8.
This experiment is to simulate the repetitive condition near the implementation condition. The exhaust gas from the diesel engine of automobiles or the like contains from 5 to 15% by volume of water therein. During driving, automobiles have a high temperature of 200˚C or higher and have a low relative humidity of 5% or less, and the catalyst therein is in a water-desorbed state. However, in stopping, the relative humidity in automobiles reaches 15% or more at around 90˚C, and the catalyst adsorbs water. Under this condition, the water-adsorbing catalyst at 90˚C is exposed to a relative humidity of 28%. In actual use, the repetitive durability under the condition near to the implementation condition is an important factor for the catalyst.
The SCR catalyst described in Example 1B has a nitrogen oxide purifying ratio of 99% in the catalyst reaction test after the hydrothermal durability test, and this did not degrade in the hydrothermal durability test.
The 10 vol.% atmosphere at 800˚C is an atmosphere at the highest temperature to be simulated for the exhaust gas of diesel automobiles, and the low degradation under the condition is an important matter for practical use of catalyst.
[Table 5]

| Vapor Composition in Catalyst Reaction Test | |
|---|---|
| Vapor | Concentration |
| NO | 350 ppm |
| $NH_3$ | 385 ppm |
| $O_2$ | 15 vol.% |
| $H_2O$ | 5 vol.% |
| $N_2$ | balance of the above vapors |

[Table 6]

| | Si (molar ratio) | Al (molar ratio) | P (molar ratio) | Retention Rate of Zeolite in Adsorption/ Desorption Test (%) | Retention Rate of Catalyst in Adsorption/ Desorption Test (%) | Nitrogen Oxide Removing Ratio (%) |
|---|---|---|---|---|---|---|
| Example 1B | 0.088 | 0.500 | 0.412 | 100% | 100% | 99% |
| Comparative Example 1B | 0.033 | 0.491 | 0.476 | 43% | 38% | 57% |
| Comparative Example 2B | 0.118 | 0.496 | 0.386 | 28% | 20% | 66% |
| Comparative Example 3B | 0.110 | 0.490 | 0.400 | 60% | 50% | 59% |

[Table 7]

| | | Heat Treatment | XRD Peak | NO Purifying Ratio (%) | | |
|---|---|---|---|---|---|---|
| | | | | Redaction Temperature | | |
| | | | | 150˚C | 175˚C | 200˚C |
| Example 2B | before heat treatment | no | ○ | 74 | 91 | 98 |
| | after heat treatment | 800˚C hydrothermal treatment | ○ | 74 | 92 | 99 |
| Example 3B | before heat treatment | no | × | 72 | 90 | 97 |
| | after heat treatment | 800˚C hydrothermal treatment | ○ | 74 | 95 | 99 |
| Comparative Examples 3B | before heat treatment | no | × | 32 | 65 | 82 |
| | after heat treatment | 800˚C hydrothermal treatment | × | 42 | 74 | 89 |
| Example 4B | before heat treatment | no | ○ | 61 | 93 | 98 |
| | after heat treatment | 800˚C hydrothermal treatment | ○ | 62 | 93 | 98 |

(continued)

| | | Heat Treatment | XRD Peak | NO Purifying Ratio (%) | | |
|---|---|---|---|---|---|---|
| | | | | Redaction Temperature | | |
| | | | | 150˚C | 175˚C | 200˚C |
| Example 5B | before heat treatment | no | ○ | 53 | 87 | 97 |
| | after heat treatment | 800˚C hydrothermal treatment | ○ | 56 | 88 | 98 |
| Example 6B | before heat treatment | no | × | 72 | 96 | 99 |
| | after heat treatment | 800˚C hydrothermal treatment | ○ | 68 | 94 | 99 |
| Comparative Example 4B | before heat treatment | no | × | 49 | 82 | 94 |
| | after heat treatment | 800˚C hydrothermal treatment | × | 43 | 80 | 95 |

[Table 8]

| | | NO Purifying Ratio (%) | | |
|---|---|---|---|---|
| | | Reaction Temperature | | |
| | | 150˚C | 175˚C | 200˚C |
| Example 2B | before adsorption/desorption durability test | 74 | 91 | 98 |
| | after adsorption/desorption durability test | 40 | 84 | 89 |
| Comparative Example 3B | before adsorption/desorption durability test | 32 | 65 | 82 |
| | after adsorption/desorption durability test | 6 | 18 | 37 |
| Comparative Example 4B | before adsorption/desorption durability test | 49 | 82 | 94 |
| | after adsorption/desorption durability test | 7 | 30 | 59 |

While the invention has been described in detail and with reference to specific embodiments thereof, it will be apparent to one skilled in the art that various changes and modifications can be made therein without departing from the spirit and scope thereof. The present application is based on a Japanese patent application filed January 22, 2009 (Patent Application No. 2009-011590), a Japanese patent application filed May 15, 2009 (Patent Application No. 2009-118945), a Japanese patent application filed June 12, 2009 (Patent Application No. 2009-141397), a Japanese patent application filed July 17, 2009 (Patent Application No. 2009-169338) and a Japanese patent application filed December 22, 2009 (Patent Application No. 2009-291476), the contents thereof being hereby incorporated by reference.

INDUSTRIAL APPLICABILITY

The method for producing a catalyst for purifying nitrogen oxides of the invention provides a high-activity catalyst for purifying nitrogen oxides in a simplified manner.
Use of the catalyst for purifying nitrogen oxides of the invention provides a catalyst having a high nitrogen oxide purifying capability, and in particular, provides an exhaust gas catalyst inexpensive and favorable for purification of nitrogen oxides from exhaust gas especially from the exhaust gas from diesel engines. Further, the catalyst is usable for purifying nitrogen oxides in air.

## Claims

1. A catalyst for purifying nitrogen oxides, which comprises: zeolite at least containing an aluminium atom and a phosphorus atom in the skeleton structure thereof; and a metal supported on the zeolite, wherein the metal is, as

observed with a transmission electronic microscope, supported in the catalyst as particles having a diameter of from 0.5 nm to 20 nm.

**2.** The catalyst for purifying nitrogen oxides as claimed in claim 1, wherein the metal is, when observed with a transmission electronic microscope after the catalyst is processed with water vapor at 800˚C for 5 hours in an atmosphere containing 10% of water vapor, supported in the catalyst as particles having a diameter of from 0.5 nm to 20 nm.

**3.** A catalyst for purifying nitrogen oxides, which comprises: zeolite at least containing an aluminium atom and a phosphorus atom in the skeleton structure thereof; and a metal supported on the zeolite, wherein a fluctuation coefficient of intensity of the metal is at least 20%, when performing an element mapping of the metal in the catalyst with an electron probe microanalyzer.

**4.** A catalyst for purifying nitrogen oxides, which comprises: zeolite having a 8-membered ring structure as the skeleton structure thereof; and a metal supported on the zeolite, wherein a fluctuation coefficient of intensity of the metal is at least 20%, when performing an electron mapping of the metal in the catalyst with an electron probe microanalyzer.

**5.** A catalyst for purifying nitrogen oxides, which comprises: zeolite containing at least an aluminium atom and a phosphorus atom in the skeleton structure thereof; and a metal supported on the zeolite, wherein a peak top temperature for ammonia desorption after water vapor treatment of the catalyst according to an ammonia TPD (temperature programmed desorption) method falls between 250˚C and 500˚C.

**6.** The catalyst for purifying nitrogen oxides as claimed in claim 5, wherein an adsorption amount of the ammonia in the catalyst according to an ammonia TPD (temperature programmed desorption) method is at least 0.6 mol/kg.

**7.** The catalyst for purifying nitrogen oxides as claimed in any one of claims 1 to 6, wherein the zeolite further contains a silicon atom.

**8.** The catalyst for purifying nitrogen oxides as claimed in any one of claims 1 to 7, wherein the zeolite has, when processed with water vapor at 800˚C for 10 hours in an atmosphere containing 10% of water vapor and then measured a solid $^{29}$Si-DD/MAS-NMR spectrum, an integral intensity area at a signal intensity of from -105 to -125 ppm of at most 25%, relative to an integral intensity area at a signal intensity of from -75 to -125 ppm.

**9.** The catalyst for purifying nitrogen oxides as claimed in any one of claims 1 to 8, wherein a structure of the zeolite is CHA as a code defined by IZA.

**10.** The catalyst for purifying nitrogen oxides as claimed in claim 8 or 9, wherein, when an abundance ratio of the silicon atom to the total of the silicon atom, the aluminium atom and the phosphorus atom contained in the zeolite skeleton structure is represented by x, an abundance ratio of the aluminium atom thereto is represented by y and an abundance ratio of the phosphorus atom thereto is represented by z, x is from 0 to 0.3, y is from 0.2 to 0.6, and z is from 0.3 to 0.6.

**11.** The catalyst for purifying nitrogen oxides as claimed in any one of claims 1 to 10, wherein the metal is Cu or Fe.

**12.** The catalyst for purifying nitrogen oxides as claimed in any one of claims 1 to 11, which is produced by preparing a mixture of the zeolite, a metal source for the metal and a dispersion medium and spray-drying the mixture to remove the dispersion medium.

**13.** A catalyst for purifying nitrogen oxides, which comprises at least zeolite, a silicon atom, a phosphorus atom and an aluminium atom, and has an adsorption retention rate of at least 80%, when tested in a water vapor repetitive adsorption/desorption test at 90˚C.

**14.** The catalyst for purifying nitrogen oxides as claimed in claim 13, wherein, when an amount of water adsorption of the catalyst is measured under a relative vapor pressure of 0.2 as measured on a water vapor adsorption isotherm of the catalyst at 25˚C, before and after the water vapor repetitive adsorption/desorption test, a ratio of the amount of water adsorption thereof after the test to the amount of water adsorption thereof before the test is at least 0.7.

**15.** The catalyst for purifying nitrogen oxides as claimed in claim 13 or 14, wherein the zeolite contains at least a silicon atom, a phosphorus atom and an aluminium atom, and has an adsorption retention rate of at least 80% in the water vapor repetitive adsorption/desorption test at 90˚C.

**16.** A catalyst for purifying nitrogen oxides, which comprises the zeolite containing at least a silicon atom, a phosphorus atom and an aluminium atom, and having an adsorption retention rate of at least 80% in a water vapor repetitive adsorption/desorption test at 90˚C.

**17.** The catalyst for purifying nitrogen oxides as claimed in any one of claims 13 to 16, wherein, when an amount of the water adsorption of the zeolite is measured under a relative vapor pressure of 0.2 as measured on a water vapor adsorption isotherm of the zeolite at 25˚C, before and after the water vapor repetitive adsorption/desorption test, a ratio of the amount of water adsorption thereof after the test to the amount of water adsorption thereof before the test is at least 0.7.

**18.** The catalyst for purifying nitrogen oxides as claimed in any one of claims 13 to 17, wherein the zeolite has, when processed with water vapor at 800˚C for 10 hours in an atmosphere containing 10% of water vapor and then measured a solid $^{29}$Si-DD/MAS-NMR spectrum, an integral intensity area at a signal intensity of from -105 to -125 ppm is at most 25%, relative to an integral intensity area at a signal intensity of from -75 to -125 ppm.

**19.** The catalyst for purifying nitrogen oxides as claimed in any one of claims 13 to 18, which has, as observed in a X-ray diffraction measurement thereof using CuKα as the X-ray source, a diffraction peak in a diffraction angle (2θ) range of from 21.2 degrees to 21.6 degrees in addition to the zeolite-derived peak.

**20.** The catalyst for purifying nitrogen oxides as claimed in any one of claims 13 to 19, which has, as observed in the X-ray diffraction measurement thereof taken after heat treatment at 700˚C or higher of the catalyst, a diffraction peak in a diffraction angle (2θ) range of from 21.2 degrees to 21.6 degrees in addition to the zeolite-derived peak.

**21.** The catalyst for purifying nitrogen oxides as claimed in any one of claims 13 to 20, wherein a metal is supported on the zeolite.

**22.** A catalyst for purifying nitrogen oxides, comprising zeolite, wherein the zeolite has, when processed with water vapor at 800˚C for 10 hours in an atmosphere containing 10% of water vapor and then measured a solid $^{29}$Si-DD/MAS-NMR spectrum, an integral intensity area at a signal intensity of from 1.05 to -125 ppm is at most 25%, relative to an integral intensity area at a signal intensity of from -75 to -125 ppm.

**23.** The catalyst for purifying nitrogen oxides as claimed in claim 22, wherein the zeolite has a mean particle size of at least 1 μm and contains at least a silicon atom, a phosphorus atom and an aluminium atom in the skeleton structure thereof.

**24.** A catalyst for purifying nitrogen oxides, comprising zeolite and a metal supported on the zeolite, wherein the zeolite contains at least a silicon atom, a phosphorus atom and an aluminium atom in the skeleton structure thereof and has a mean particle size of at least 1 μm.

**25.** The catalyst for purifying nitrogen oxides as claimed in claim 23 or 24, wherein, when the abundance ratio of the silicon atom to the total of the aluminium atom, the silicon atom and the phosphorus atom contained in the zeolite skeleton structure is represented by x, x is from 0.05 to 0.11.

**26.** The catalyst for purifying nitrogen oxides as claimed in any one of claims 22 to 25, which has, as observed in X-ray diffraction measurement thereof using CuKα as the X-ray source, a diffraction peak in a diffraction angle (2θ) range of from 21.2 degrees to 21.6 degrees in addition to the zeolite-derived peak.

**27.** The catalyst for purifying nitrogen oxides as claimed in any one of claims 22 to 26, which has, as observed in the X-ray diffraction measurement thereof taken after heat treatment at 700˚C or higher of the catalyst, a diffraction peak in a diffraction angle (2θ) range of from 21.2 degrees to 21.6 degrees in addition to the zeolite-derived peak.

**28.** A catalyst for purifying nitrogen oxides, , comprising zeolite and a metal supported on the zeolite, wherein the catalyst has, as observed in X-ray diffraction measurement thereof using CuKα as the X-ray source, a diffraction peak in a diffraction angle (2θ) range of from 21.2 degrees to 21.6 degrees in addition to the zeolite-derived peak.

**29.** A catalyst for purifying nitrogen oxides, which comprises: zeolite containing at least an aluminium atom and a phosphorus atom in the skeleton structure thereof; and a metal supported on the zeolite, wherein at least two absorption wavelengths exist between 1860 and 1930 $cm^{-1}$ in a difference in infrared (IR) absorption spectrum

measured at 25°C before and after adsorption of nitrogen monoxide (NO) by the catalyst.

**30.** A catalyst for purifying nitrogen oxides, which comprises: zeolite containing at least an aluminium atom and a phosphorus atom in the skeleton structure thereof; and a metal supported on the zeolite, wherein the ratio of a maximum value of a peak intensity between 1525 and 1757 $cm^{-1}$ to a maximum value of a peak intensity between 1757 and 1990 $cm^{-1}$ is at most 1, in a difference in infrared (IR) absorption spectrum measured at 150°C before and after adsorption of nitrogen monoxide (NO) by the catalyst.

**31.** A catalyst for purifying nitrogen oxides, which comprises: zeolite containing at least an aluminium atom and a phosphorus atom in the skeleton structure thereof; and copper supported on the zeolite, wherein there exist at least two types of peaks of electron spin resonance (ESR) derived from the copper(II) ion in the catalyst.

**32.** The catalyst for purifying nitrogen oxides as claimed in claim 31, wherein the peaks of electron spin resonance (ESR) derived from the copper(II) ion in the catalyst is between 2.3 and 2.5 as the g value.

**33.** The catalyst for purifying nitrogen oxides as claimed in any one of claims 13 to 32, wherein, when an abundance ratio of the silicon atom to the total of the silicon atom, the aluminium atom and the phosphorus atom contained in the zeolite skeleton structure is represented by x, an abundance ratio of the aluminium atom thereto is represented by y and an abundance ratio of the phosphorus atom thereto is represented by z, x is from 0.05 to 0.11, y is from 0.3 to 0.6, and z is from 0.3 to 0.6.

**34.** The catalyst for purifying nitrogen oxides as claimed in any one of claims 13 to 33, wherein, in producing zeolite by mixing a silicon atom material, an aluminium atom material, a phosphorus atom material and a template followed by hydrothermal synthesis, as the template, at least one compound is selected from each of two groups: (1) an alicyclic heterocyclic compound containing nitrogen as a hetero atom and (2) an alkylamine.

**35.** The catalyst for purifying nitrogen oxides as claimed in any of claims 13 to 34, wherein a structure of the zeolite is CHA defined by IZA.

**36.** A method for producing a catalyst for purifying nitrogen oxides, in which the catalyst comprises: zeolite containing at least an aluminium atom and a phosphorus atom in the skeleton structure thereof; and a metal supported on the zeolite, wherein the method comprising: preparing a mixture of the zeolite, a metal source of the metal and a dispersion medium; removing the dispersion medium from the mixture; and firing the mixture, wherein the removal of the dispersion medium is attained within a period of at most 60 minutes.

**37.** The method for producing a catalyst for purifying nitrogen oxides as claimed in claim 36, wherein the zeolite is zeolite having a 8-membered ring structure as the skeleton structure thereof.

**38.** A method for producing a catalyst for purifying nitrogen oxides, in which the catalyst comprises: zeolite having a 8-membered ring structure as the skeleton structure thereof; and a metal supported on the zeolite, wherein the method comprising: preparing a mixture of the zeolite, a metal source of the metal and a dispersion medium; removing the dispersion medium from the mixture; and firing the mixture, wherein the removal of the dispersion medium is attained within a period of at most 60 minutes.

**39.** The method for producing a catalyst for purifying nitrogen oxides as claimed in any one of claims 36 to 38, wherein the mixture contains a template.

**40.** The method for producing a catalyst for purifying nitrogen oxides as claimed in any one of claims 36 to 39, wherein the dispersion medium is removed by spray-drying.

**41.** The method for producing a catalyst for purifying nitrogen oxides as claimed in any one of claims 36 to 40, wherein the zeolite further contains a silicon atom.

**42.** The method for producing a catalyst for purifying nitrogen oxides as claimed in any one of claims 36 to 41, wherein a structure of the zeolite is CHA as a code defined by IZA.

**43.** The method for producing a catalyst for purifying nitrogen oxides as claimed in any one of claims 36 to 42, wherein the metal is Cu or Fe.

**44.** The method for producing a catalyst for purifying nitrogen oxides as claimed in any one of claims 36 to 43, wherein in the spray-drying, a temperature of a heat carrier to be brought into contact with the mixture for drying is from 80˚C to 350˚C.

**45.** A mixture comprising: the catalyst for purifying nitrogen oxides of any one of claims 13 to 35; and at least any one of a compound of a formula (I) and a silicic melt:

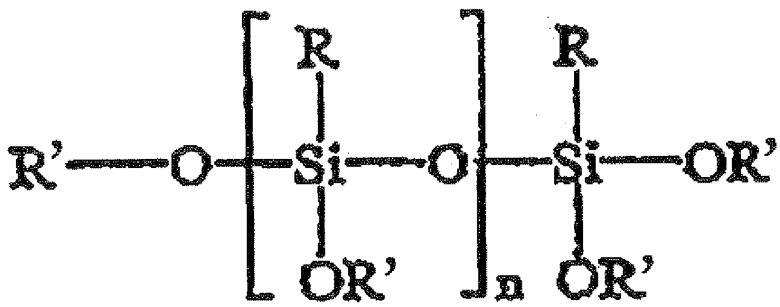

(I)

[in formula (I), R each independently represents an alkyl, aryl, alkenyl, alkynyl, alkoxy or phenoxy group, which are optionally substituted; R' each independently represents an alkyl, aryl, alkenyl or alkynyl group, which are optionally substituted; n indicates a number of from 1 to 100].

**46.** The mixture as claimed in claim 45, comprising an inorganic fiber.

**47.** The mixture as claimed in claim 45 or 46, which comprises the compound of formula (I) in an amount of from 2 to 40 parts by weight in terms of the oxide relative to 100 parts by weight of the catalyst for purifying nitrogen oxides.

**48.** A formed article obtained from the mixture of any one of claims 45 to 47.

**49.** The formed article as claimed in claim 48, having a honeycomb structure.

**50.** A device for purifying nitrogen oxides, which is produced by applying the catalyst for purifying nitrogen oxides of any one of claims 1 to 35 to a honeycomb-structure formed article.

**51.** A device for purifying nitrogen oxides produced by forming the catalyst for purifying nitrogen oxides of any one of claims 1 to 35.

**52.** A system for purifying nitrogen oxides, employing the device for purifying nitrogen oxides of claim 50 or 51.

[Fig. 1]

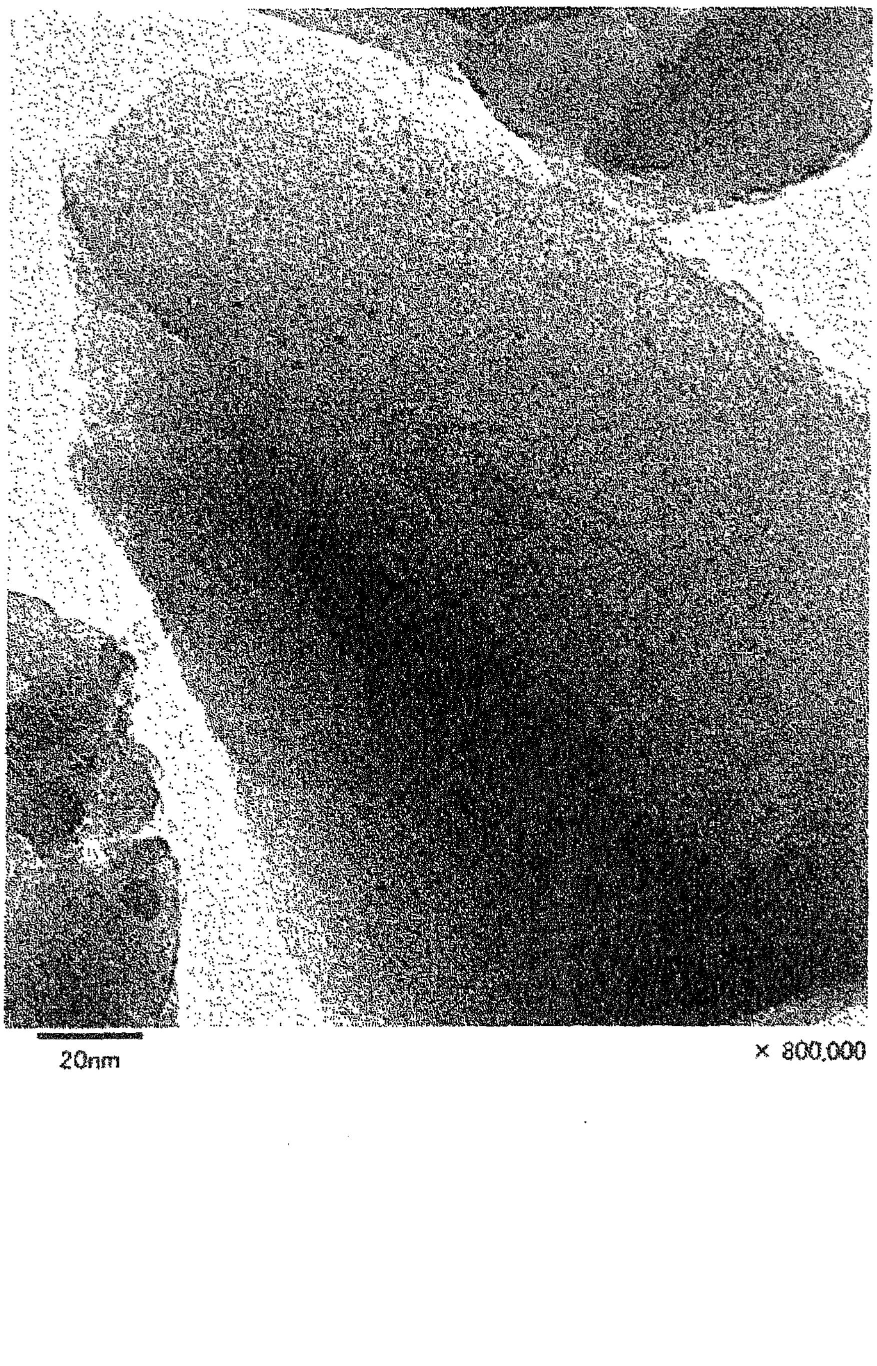

[Fig. 2]

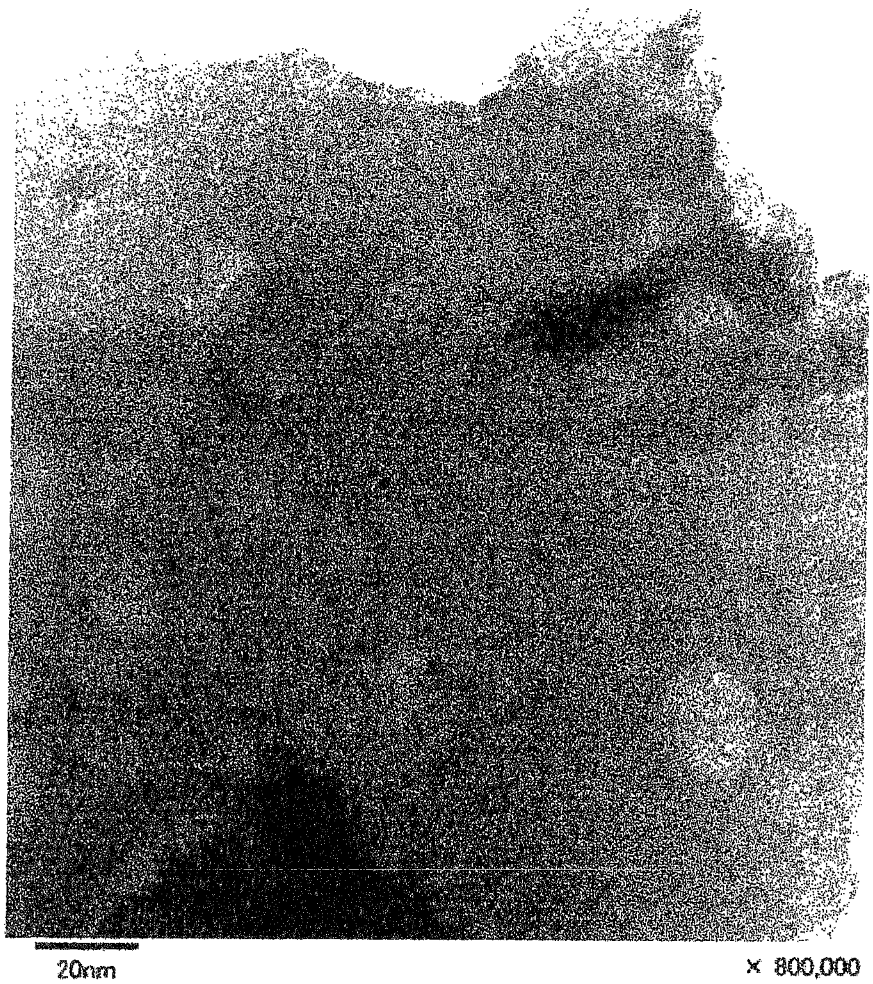

[Fig.3]

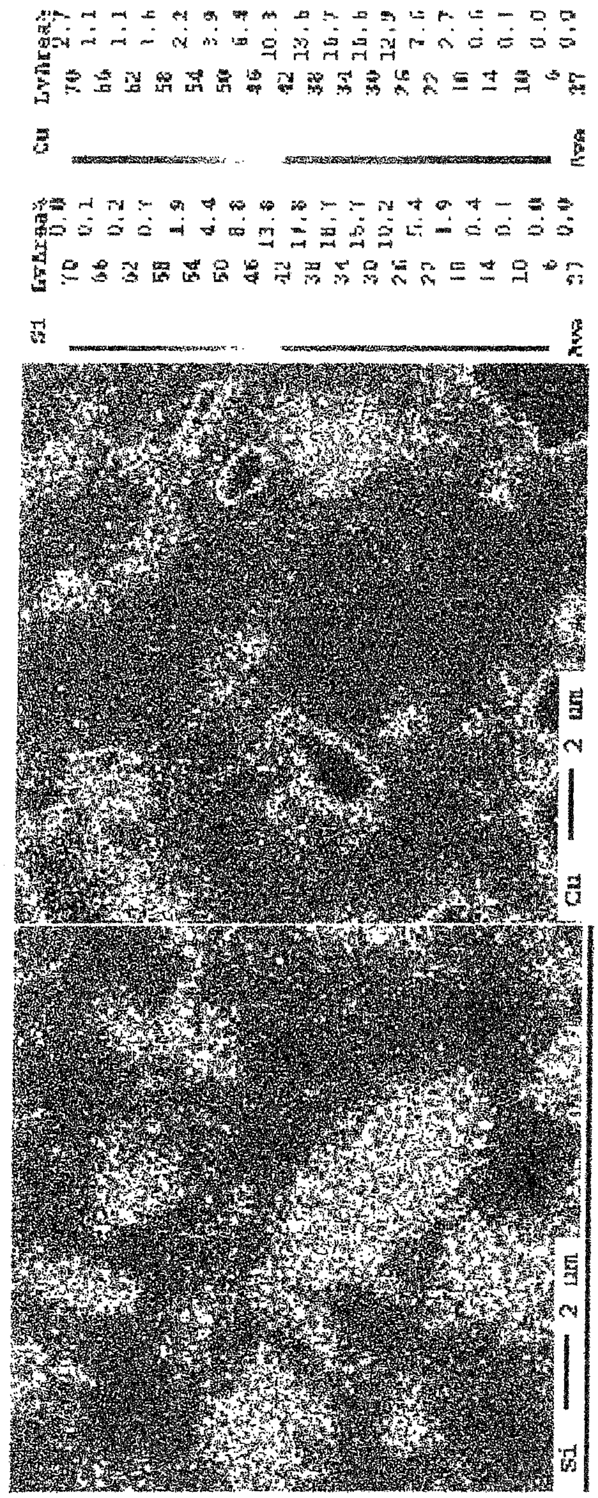

[Fig. 4]

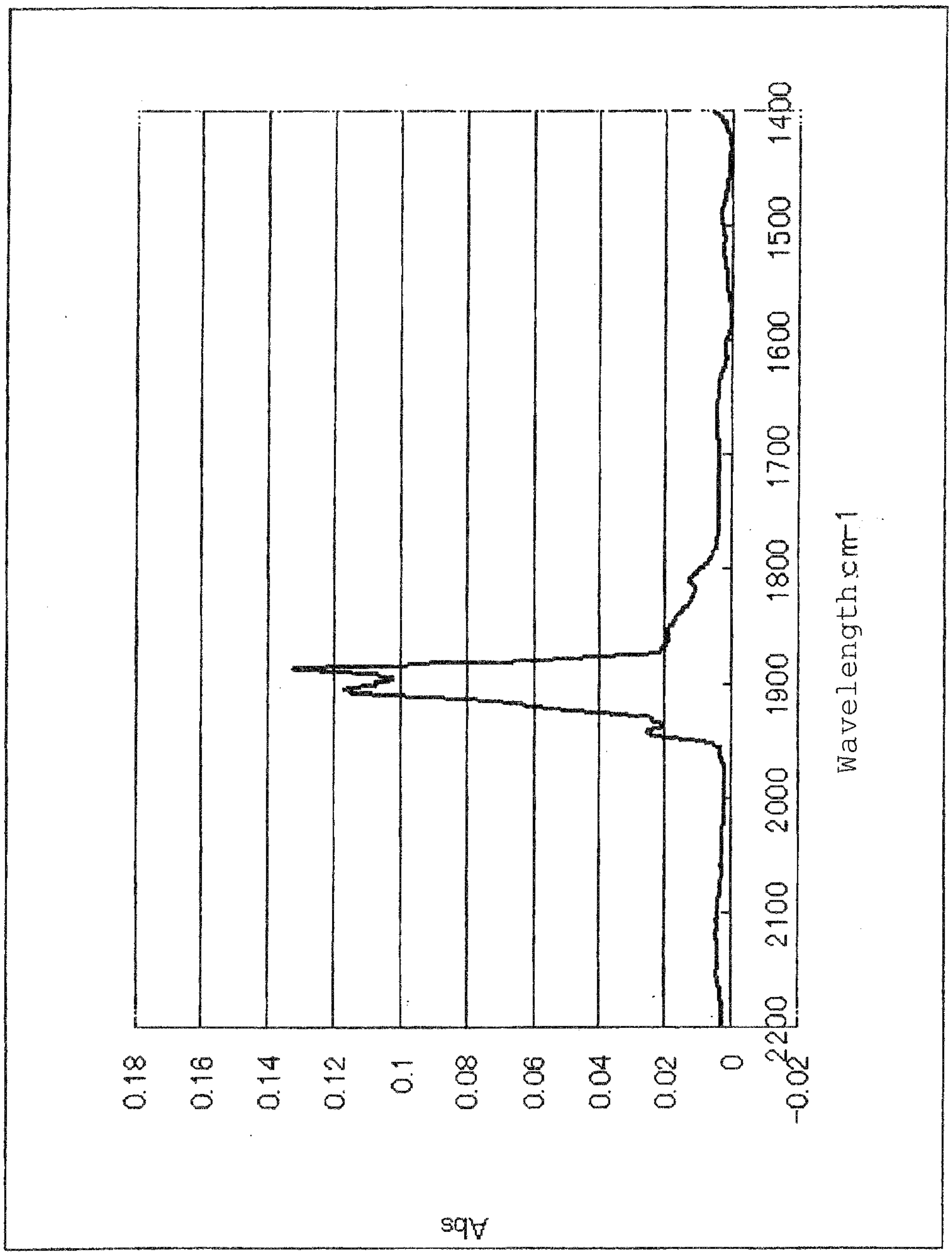
Abs
0.18
0.16
0.14
0.12
0.1
0.08
0.06
0.04
0.02
0
-0.02
2200
2100
2000
1900
1800
1700
1600
1500
1400
Wavelength cm-1

[Fig.5]

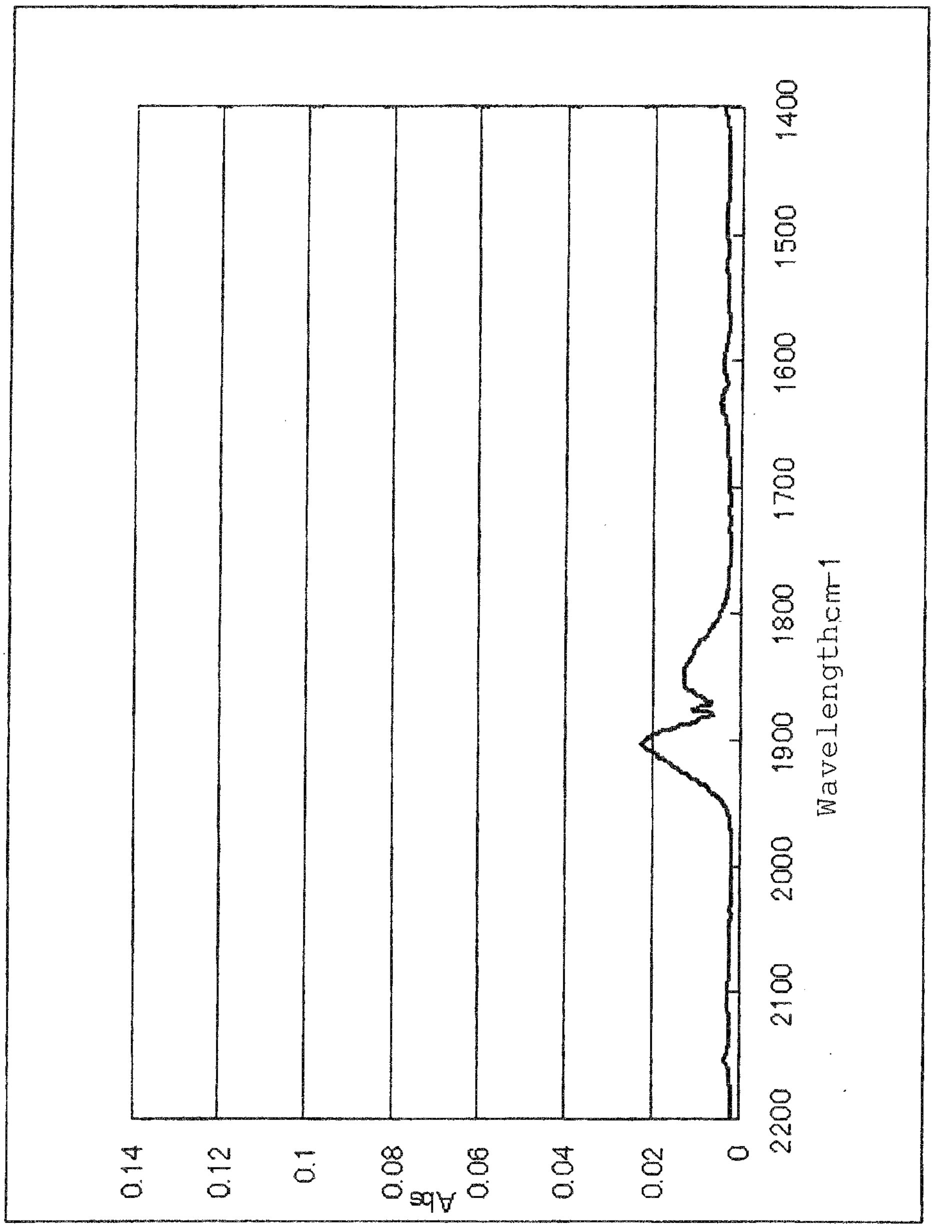
Abs
0.14
0.12
0.1
0.08
0.06
0.04
0.02
0
2200
2100
2000
1900
1800
1700
1600
1500
1400
Wavelength,cm-1

[Fig. 6]

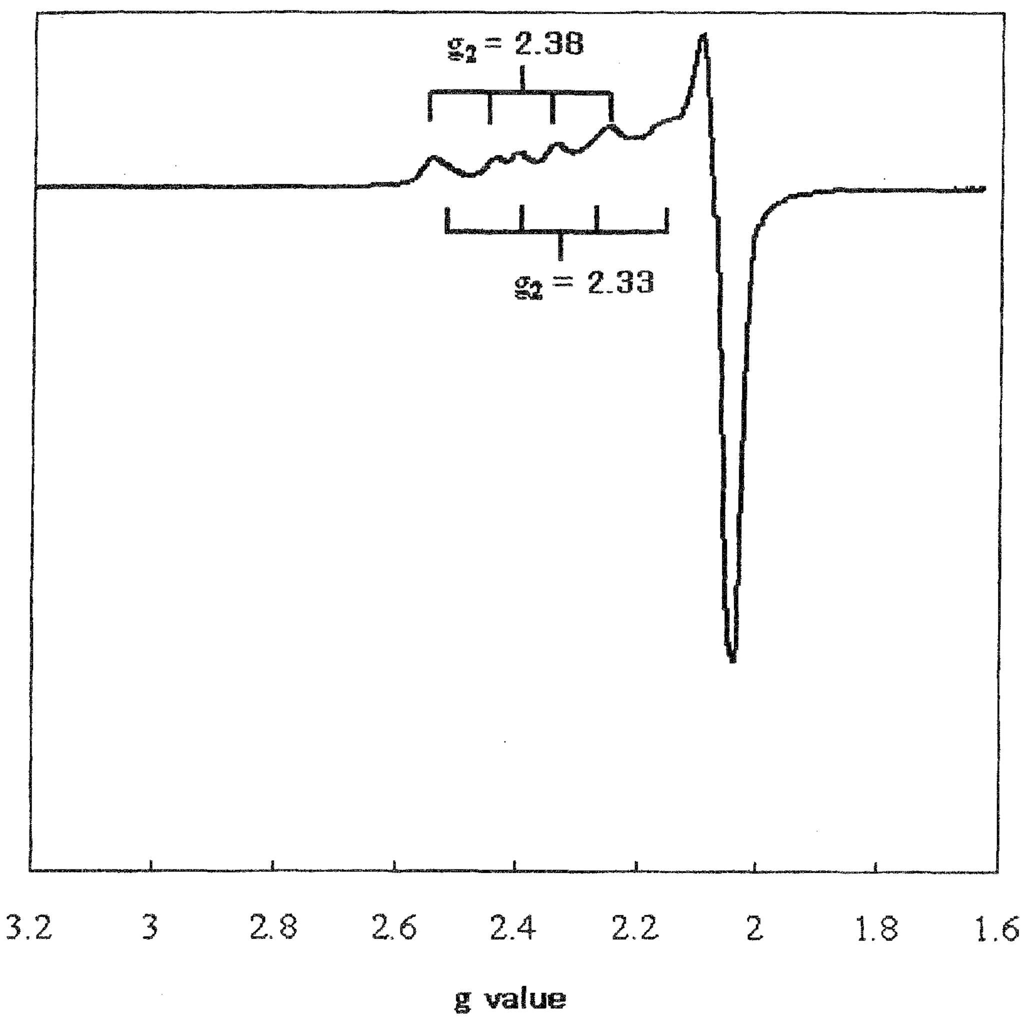

[Fig. 7]

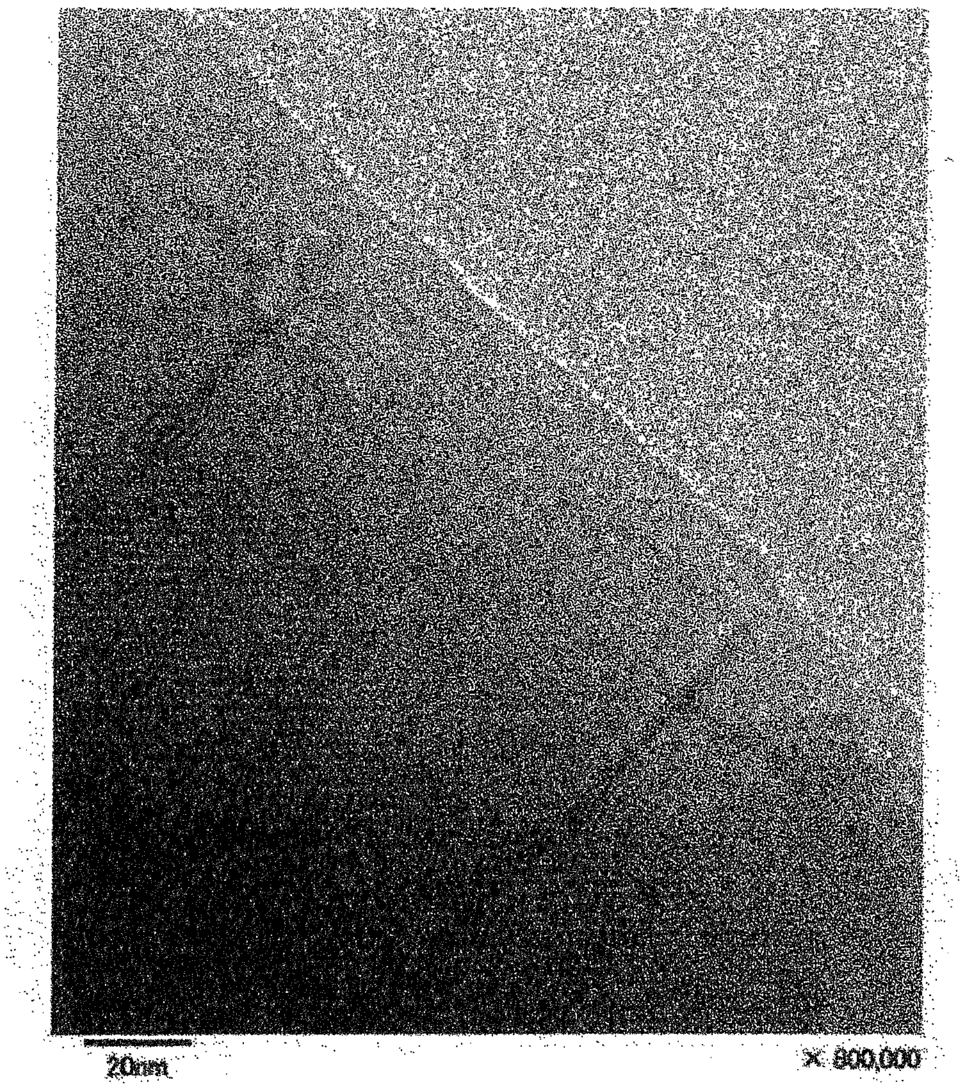

[Fig. 8]

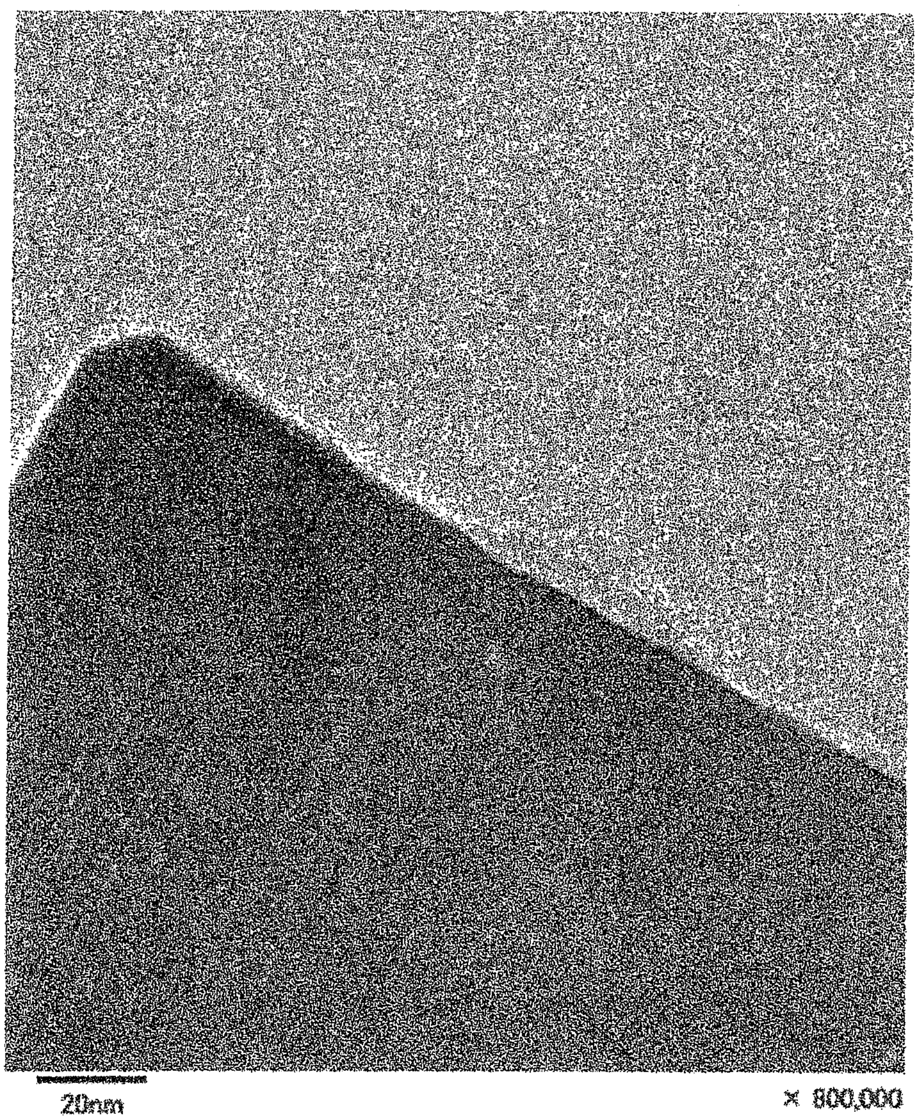

[Fig. 9]

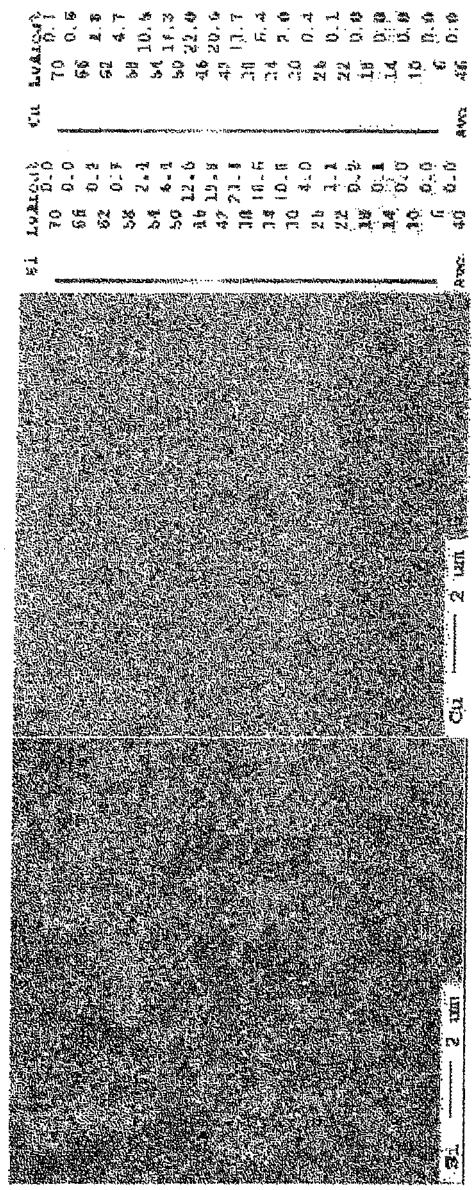

[Fig. 10]

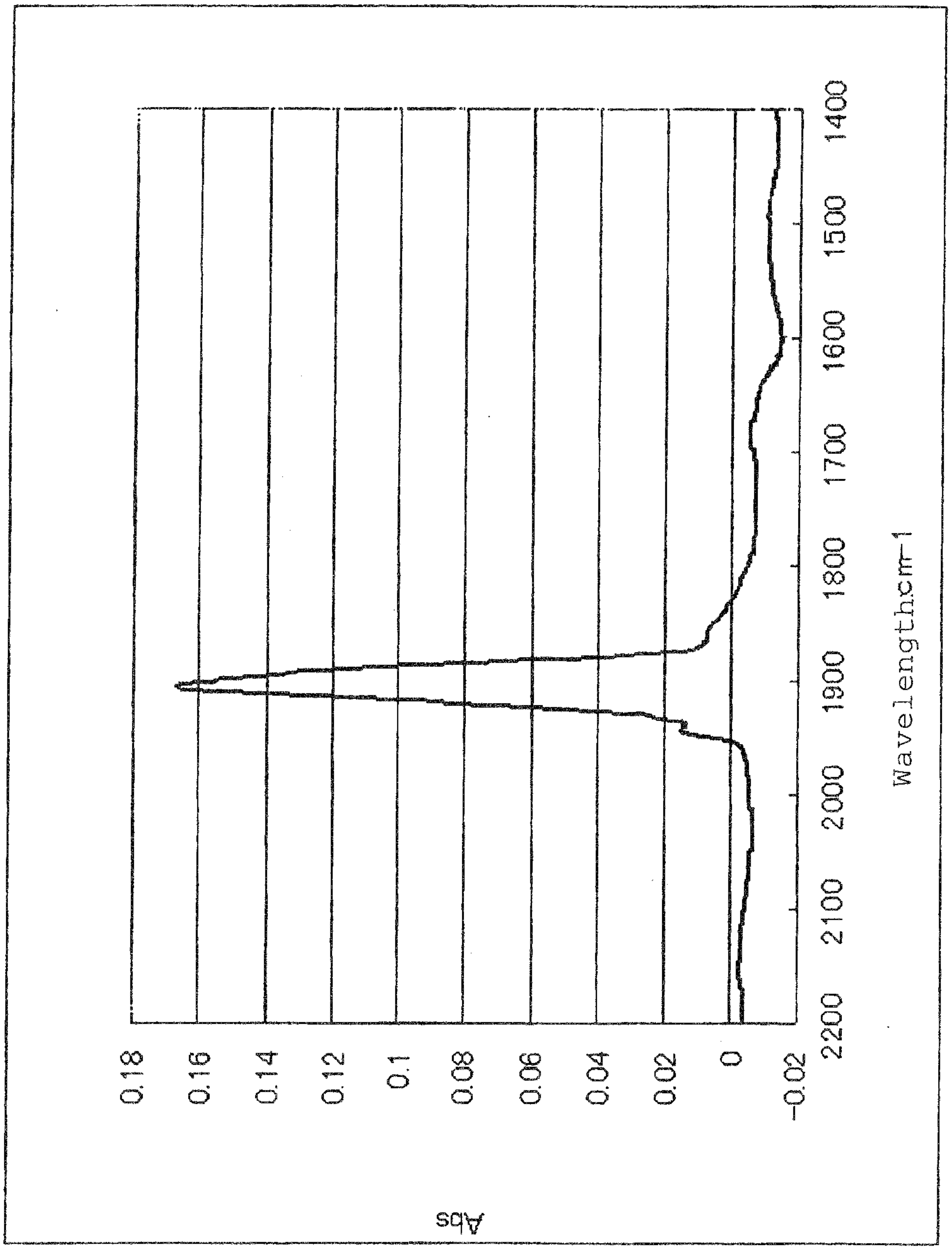
Abs
0.18
0.16
0.14
0.12
0.1
0.08
0.06
0.04
0.02
0
-0.02
2200
2100
2000
1900
1800
1700
1600
1500
1400
Wavelength cm-1

[Fig.11]

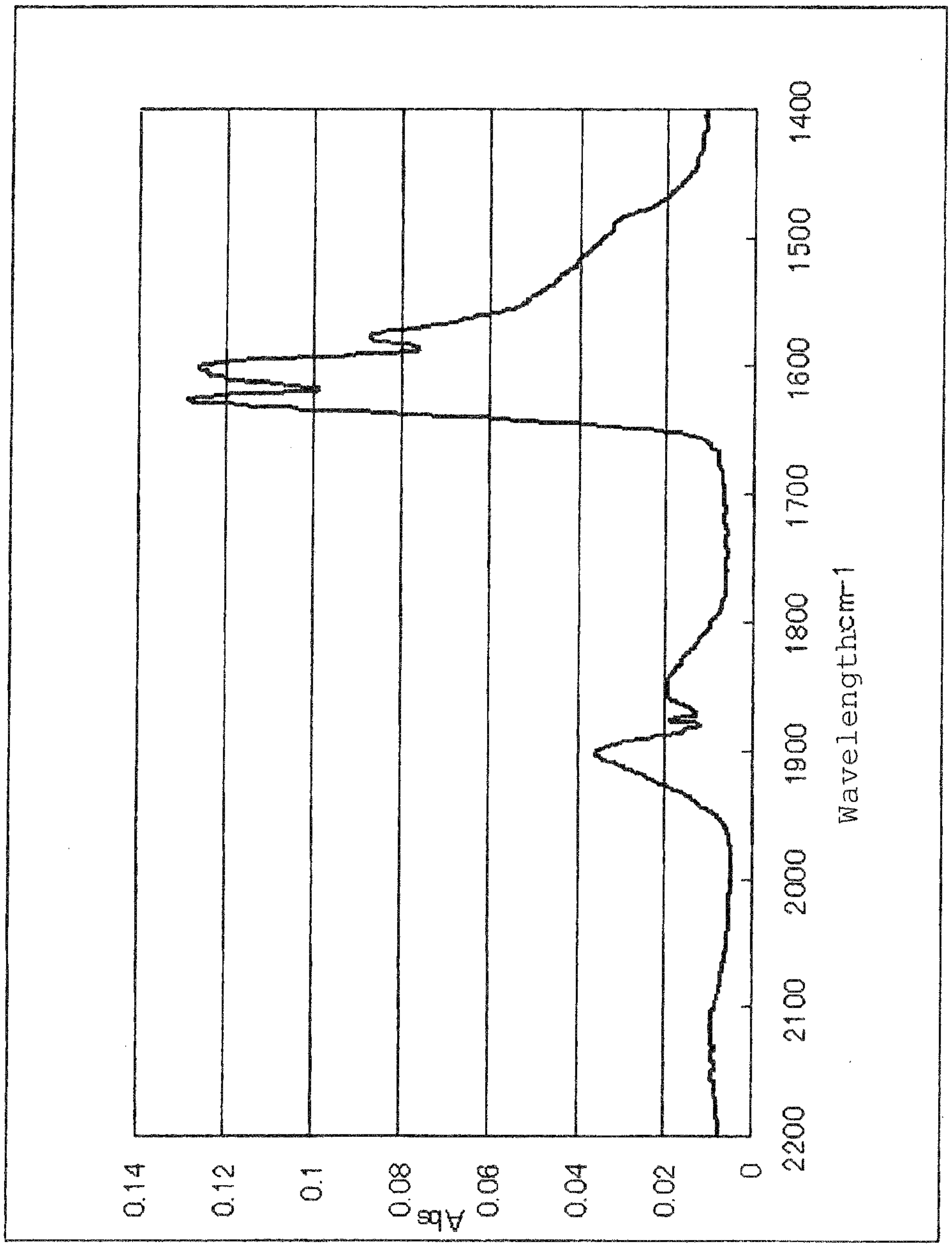

Abs
0.14
0.12
0.1
0.08
0.06
0.04
0.02
0
Wavelengthcm-1
2200
2100
2000
1900
1800
1700
1600
1500
1400

[Fig.12]

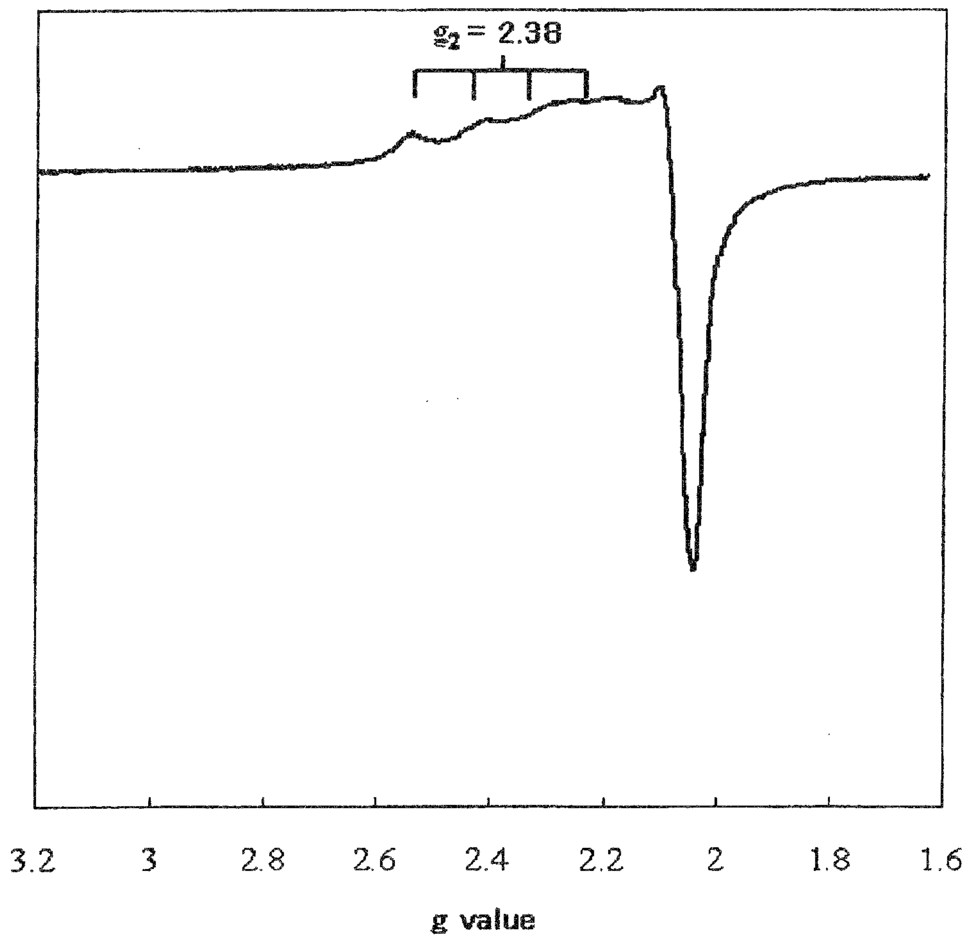

[Fig. 13]

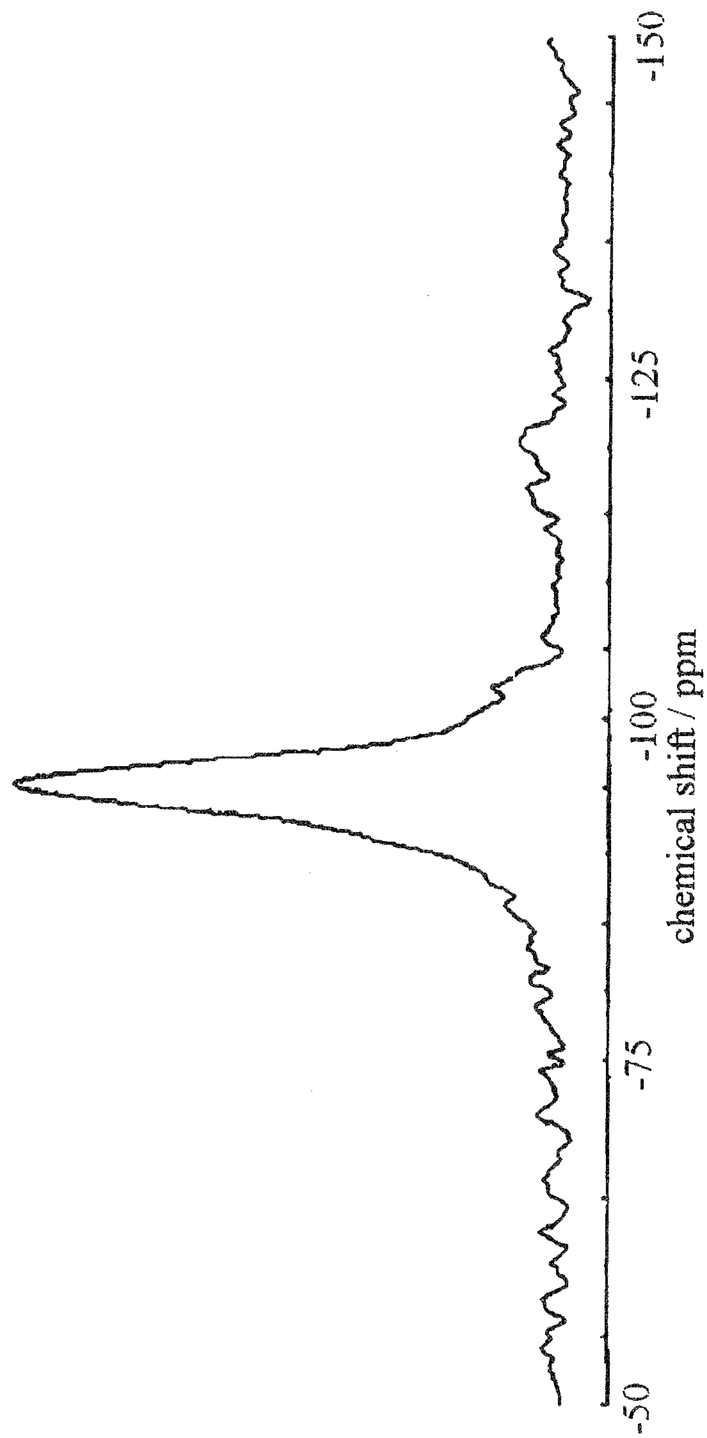

[Fig. 14]

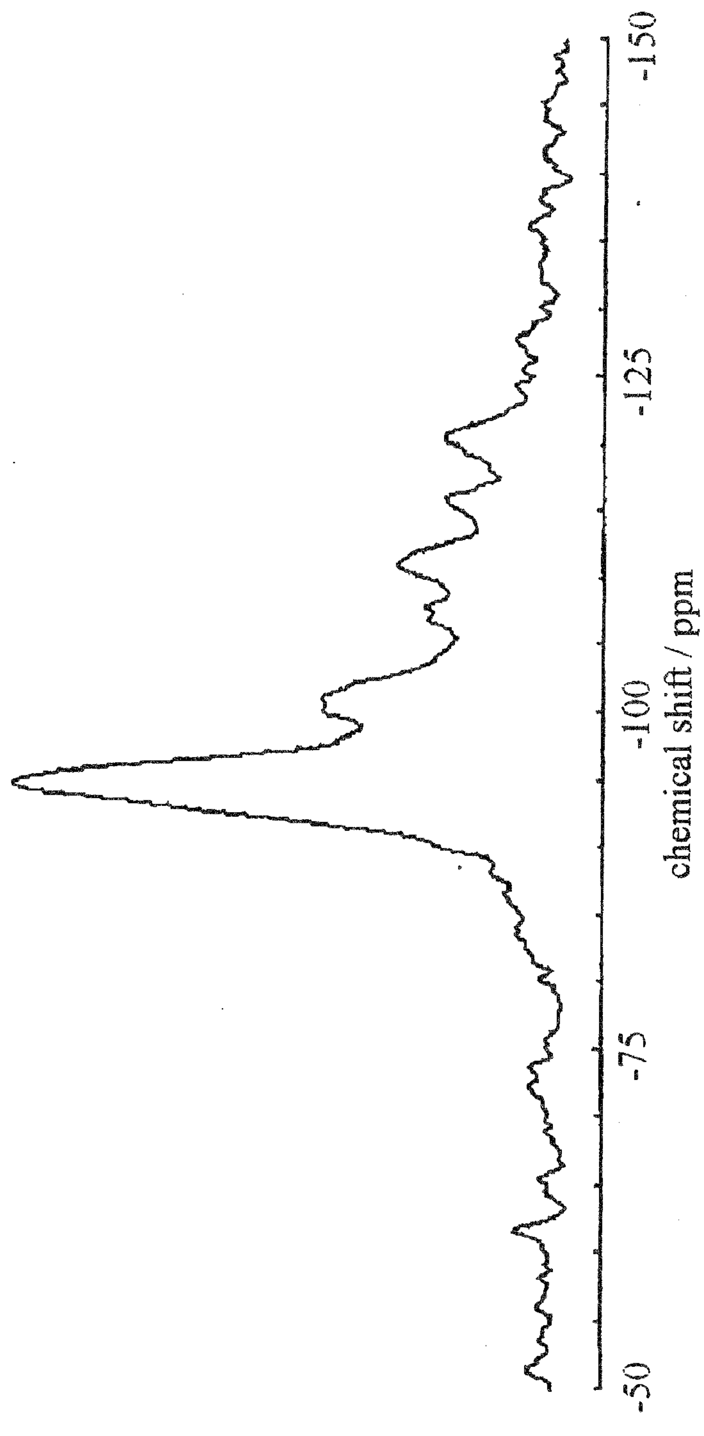

[Fig. 15]

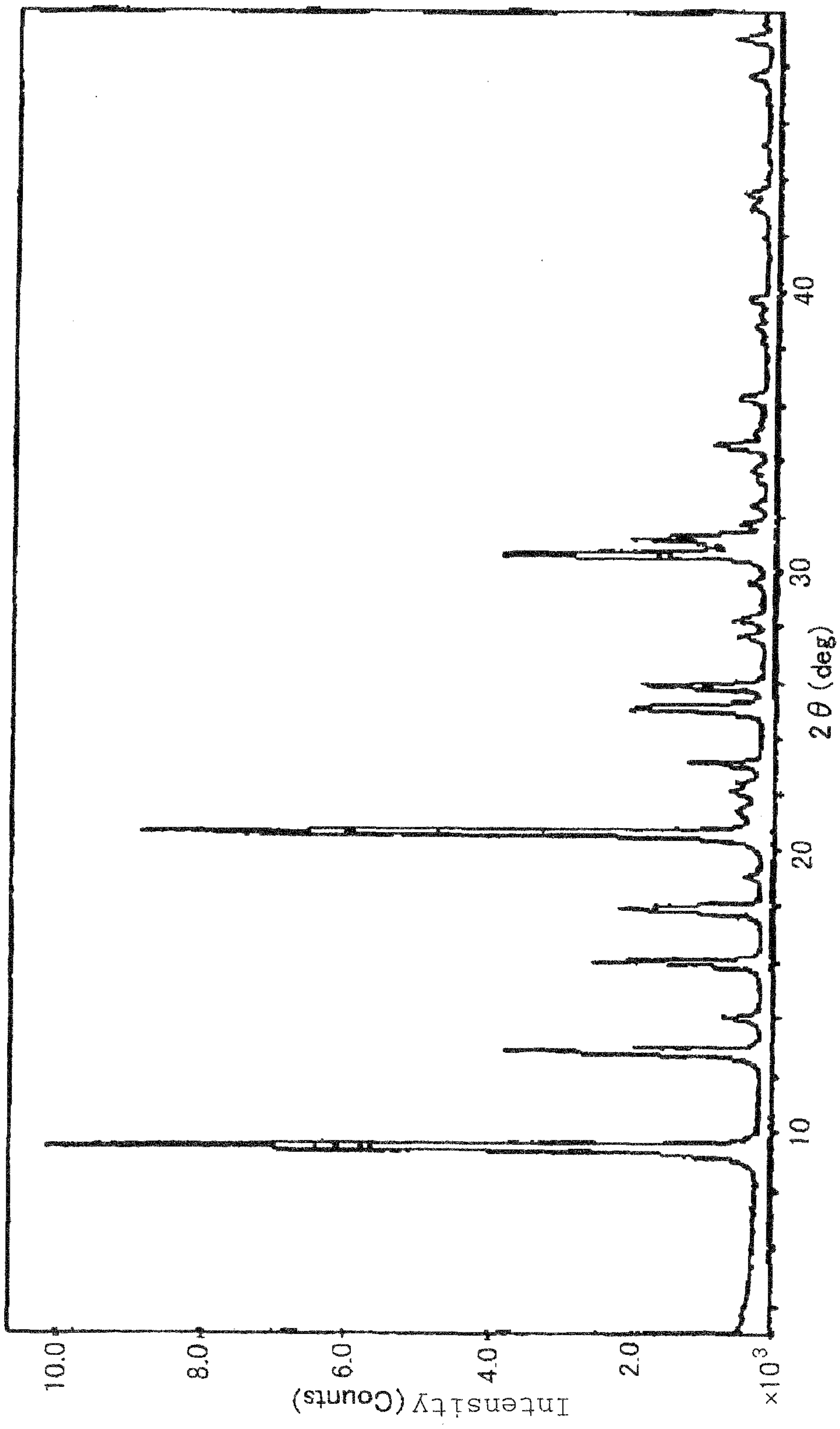

[Fig. 16]

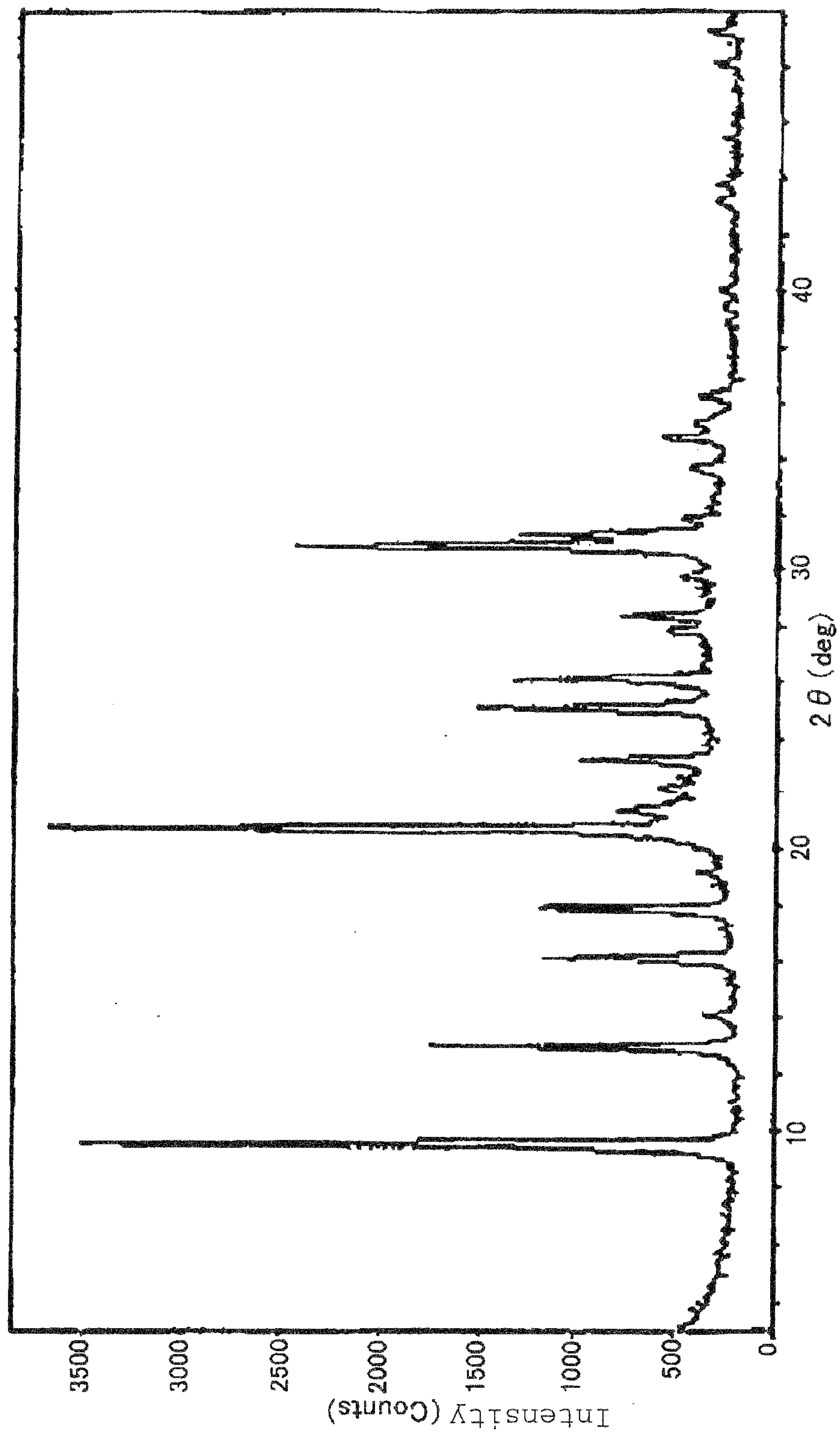
Intensity (Counts)
0
500
1000
1500
2000
2500
3000
3500
2θ (deg)
10
20
30
40

[Fig.17]

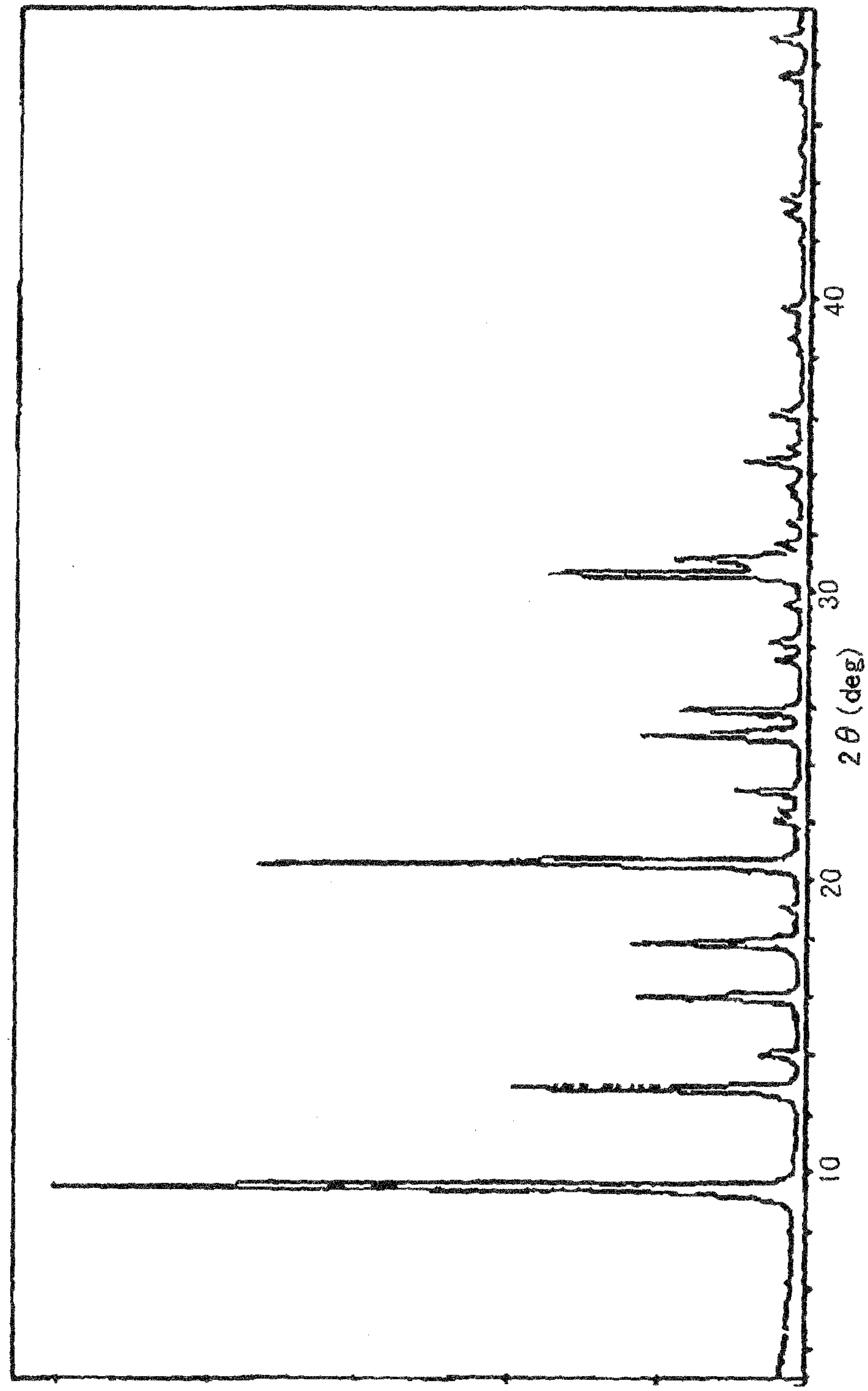

[Fig.18]

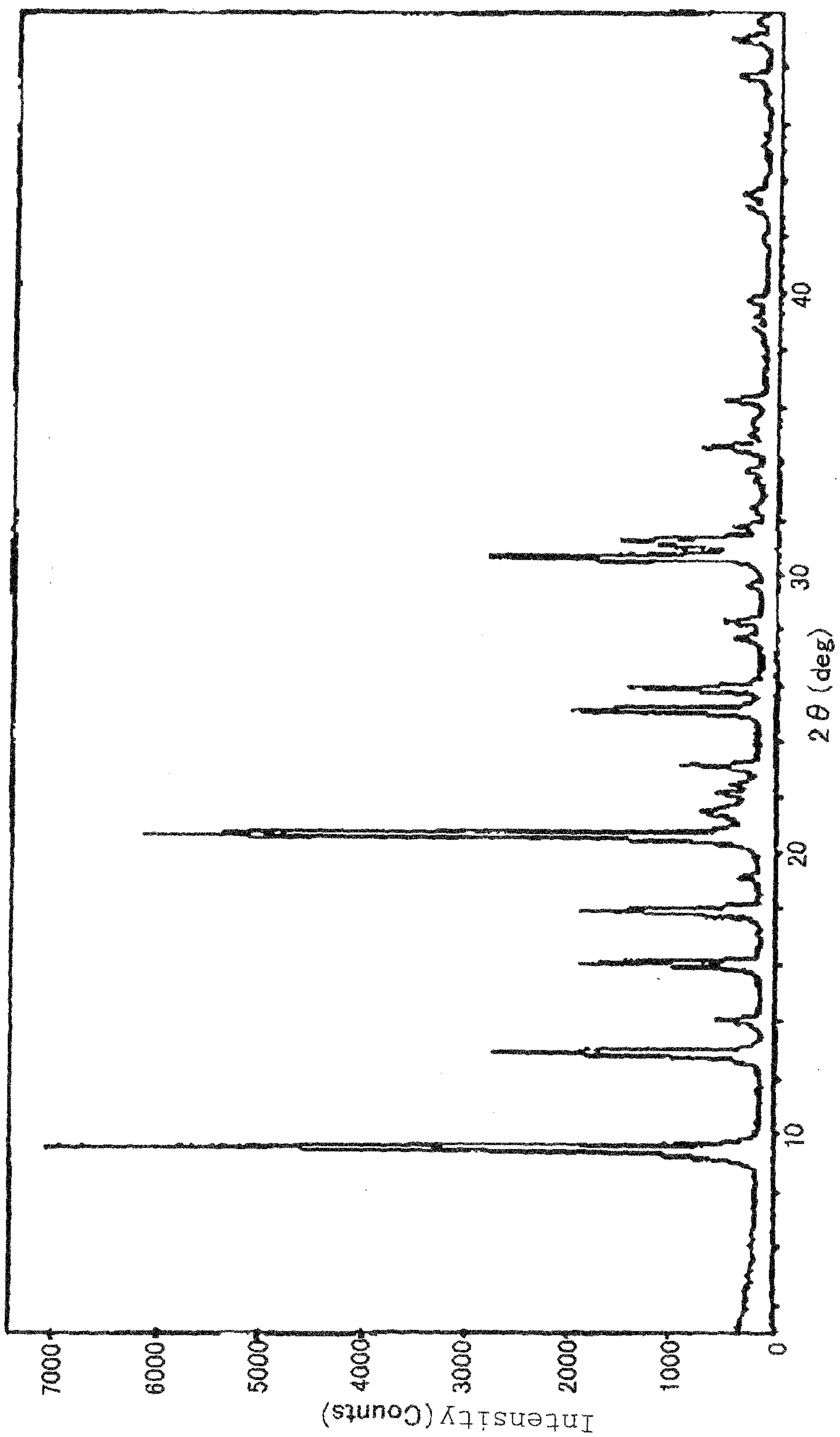
Intensity (Counts)
7000
6000
5000
4000
3000
2000
1000
0
10
20
30
40
2θ (deg)

[Fig. 19]

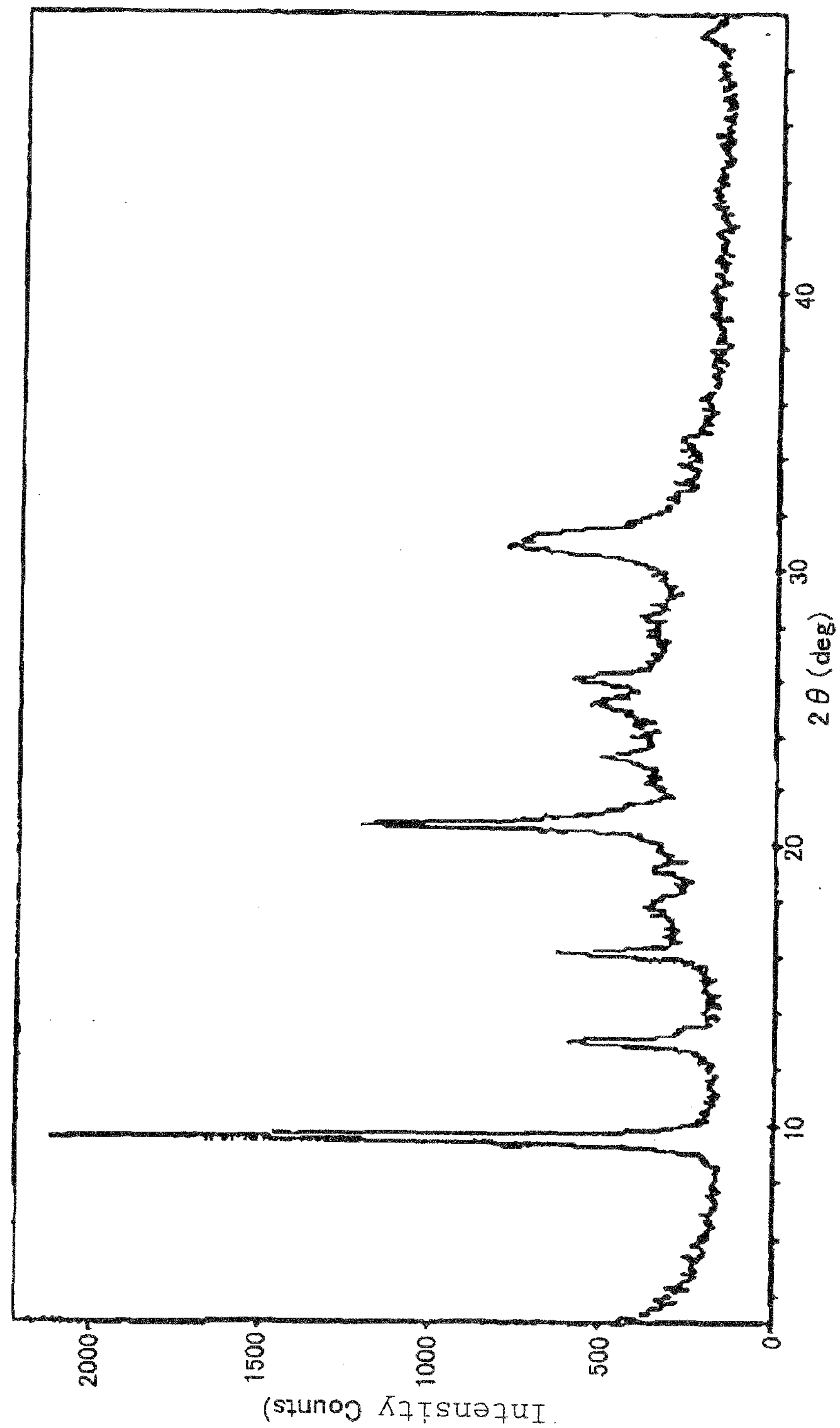

[Fig.20]

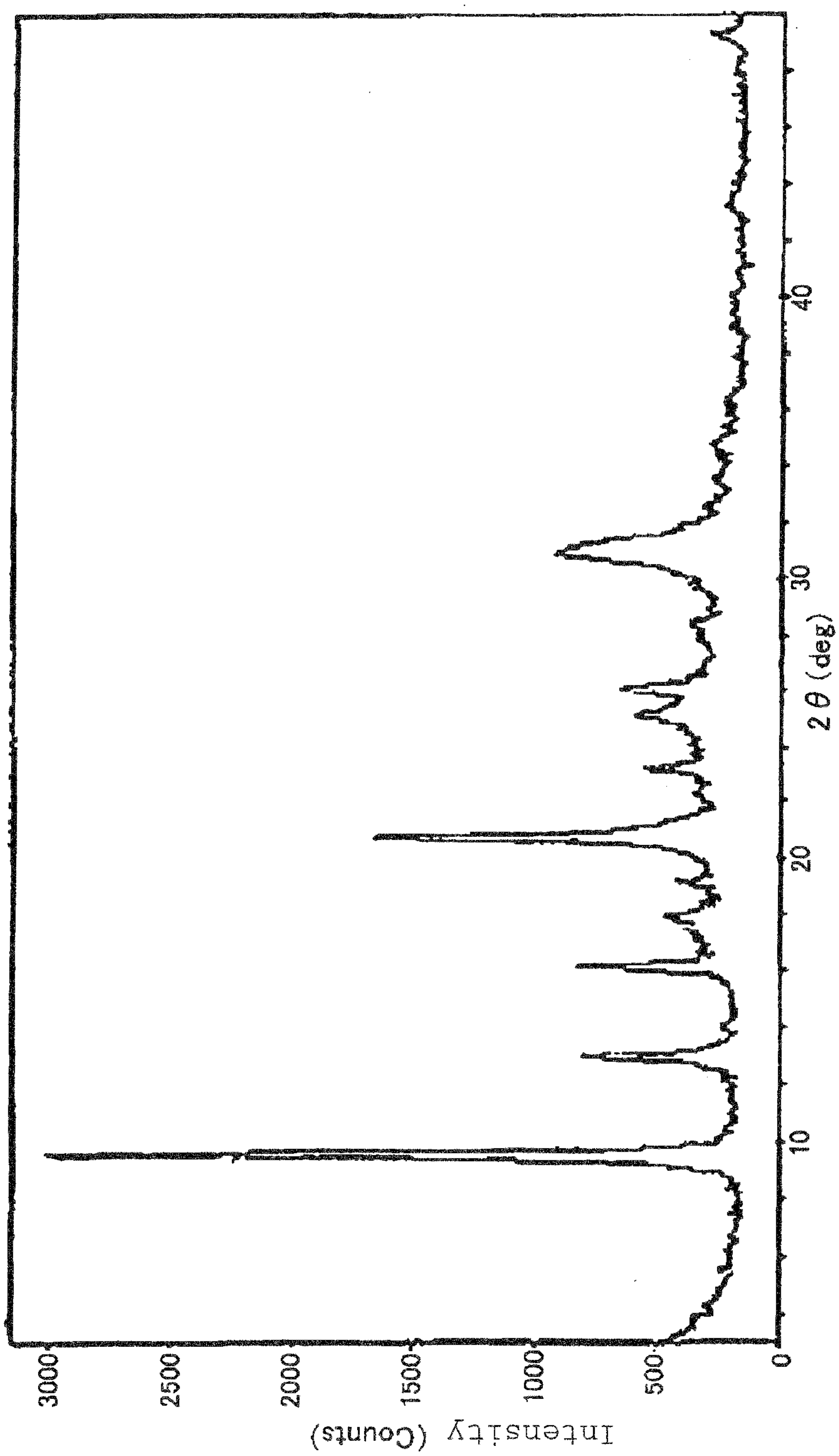
Intensity (Counts)
3000
2500
2000
1500
1000
500
0
10
20
30
40
2θ (deg)

[Fig. 21]

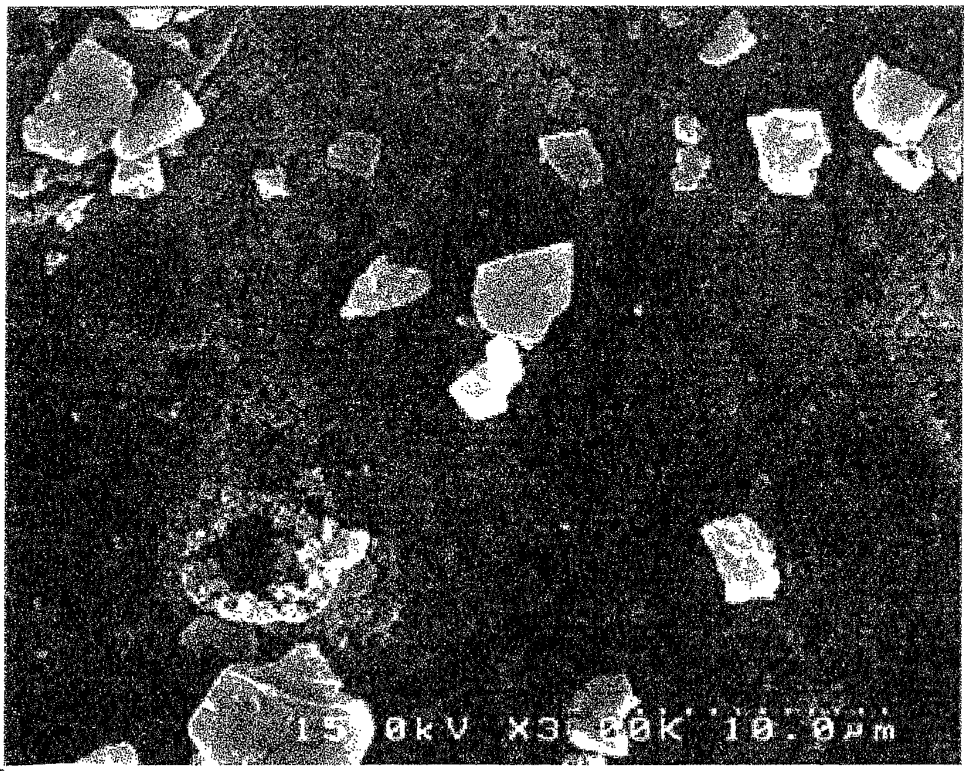


[Fig. 22]

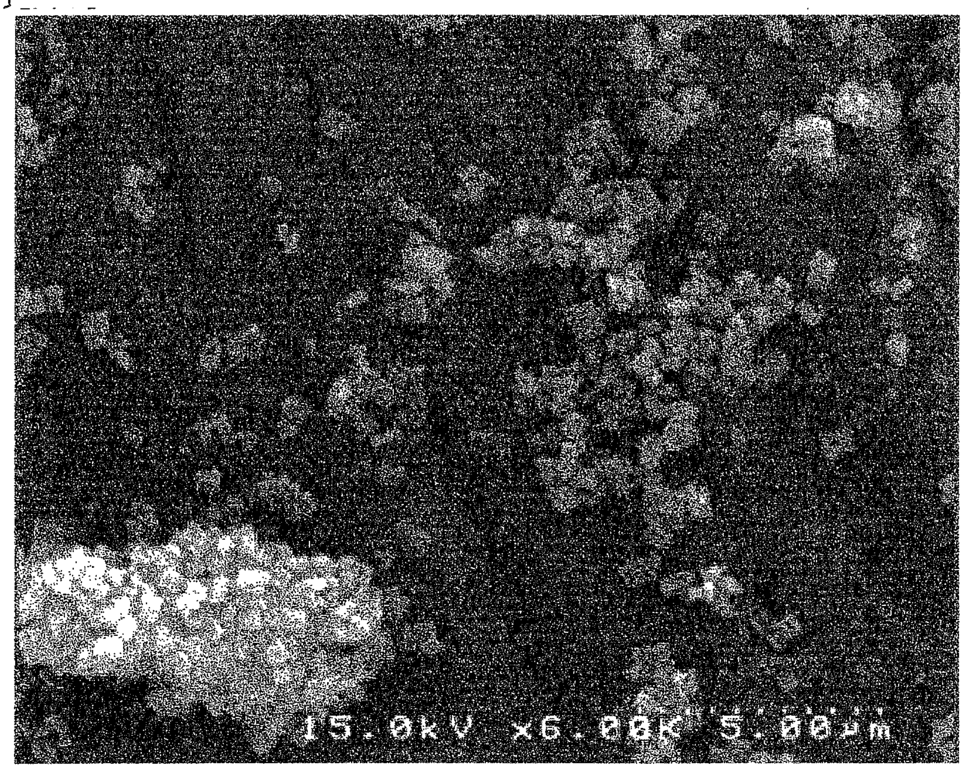

**INTERNATIONAL SEARCH REPORT**

International application No.
PCT/JP2010/050737

A. CLASSIFICATION OF SUBJECT MATTER
*B01J29/85*(2006.01)i, *B01D53/94*(2006.01)i, *F01N3/10*(2006.01)i

According to International Patent Classification (IPC) or to both national classification and IPC

B. FIELDS SEARCHED

Minimum documentation searched (classification system followed by classification symbols)
B01J29/85, B01D53/94, F01N3/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br><br>A | JP 8-24656 A (Mazda Motor Corp.),<br>30 January 1996 (30.01.1996),<br>claims; examples<br>(Family: none) | 1-7,12,<br>24-30,33,34,<br>36-41,44-52<br>8-11,13-23,<br>31,32,35,42,<br>43 |
| X<br><br>A | JP 8-310810 A (Nippon Kayaku Co., Ltd.),<br>26 November 1996 (26.11.1996),<br>claims; examples; paragraph [0030]<br>(Family: none) | 8-10,13-28,<br>33-35,45-52<br>1-7,11,12,<br>29-32,36-44 |
| A | JP 7-155614 A (Toyota Motor Corp.),<br>20 June 1995 (20.06.1995),<br>claims<br>(Family: none) | 1-52 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 April, 2010 (21.04.10) | 11 May, 2010 (11.05.10) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/050737

C (Continuation). DOCUMENTS CONSIDERED TO BE RELEVANT

| Category* | Citation of document, with indication, where appropriate, of the relevant passages | Relevant to claim No. |
|---|---|---|
| A | JP 2-293049 A (Toyota Central Research and Development Laboratories, Inc.), 04 December 1990 (04.12.1990), claims & US 5112790 A & EP 396085 A2 | 1-52 |
| A | JP 2003-183020 A (Mitsubishi Chemical Corp.), 03 July 2003 (03.07.2003), claims; examples (Family: none) | 1-52 |

Form PCT/ISA/210 (continuation of second sheet) (July 2009)

**INTERNATIONAL SEARCH REPORT**

International application No.
PCT/JP2010/050737

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

International application No.
PCT/JP2010/050737

Continuation of Box No.III of continuation of first sheet(2)

Claims 1 - 52 are considered to be classified into the following invention groups.

Main invention: claim 1, and claims dependent on claim 1
2nd invention: claim 3, and claims dependent on claim 3
3rd invention: claim 4, and claims dependent on claim 4
4th invention: claim 5, and claims dependent on claim 5
5th invention: claim 13, and claims dependent on claim 13
6th invention: claim 16, and claims dependent on claim 16
7th invention: claim 22, and claims dependent on claim 22
8th invention: claim 24, and claims dependent on claim 24
9th invention: claim 28, and claims dependent on claim 28
10th invention: claim 29, and claims dependent on claim 29
11th invention: claim 30, and claims dependent on claim 30
12th invention: claim 31, and claims dependent on claim 31
13th invention: claim 36, and claims dependent on claim 36
14th invention: claim 38, and claims dependent on claim 38

Consequently, claims 1 - 52 involve fourteen (14) inventions.

The main invention and the 2nd to 14th inventions have a common technical feature such as "catalyst for removing nitrogen oxides containing zeolite". However, the afore-said technical feature cannot be considered to be a special technical feature, since said technical feature is disclosed in the documents 1, 2 and does not make contribution over the prior art. Furthermore, there is no same or corresponding special technical feature between the main invention and the 2nd to 14th inventions.

Since there is no technical relationship involving one or more same or corresponding special technical feature among those inventions, the inventions are not recognized to be so linked as to form a single general inventive concept.

Document 1: JP 7-155614 A (Toyota Motor Corp.), 20 June 1995 (20.06.1995), claims, (Family: none)

Document 2: JP 2-293049 A (Toyota Central Research and Development Laboratories, Inc.), 4 December 1990 (04.12.1990), claims, & US 5112790 A & EP 396085 A2

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7155614 A
- WO 2008118434 A
- JP 2293049 A
- JP 2009022842 A
- JP 4037007 B
- JP 5021844 B
- JP 5051533 B
- US P4440871 A
- JP 2003183020 A
- US P4544538 A
- JP 3540040 B
- JP 2003026417 A
- US 20090196812 A1
- JP 2009011590 A
- JP 2009118945 A
- JP 2009141397 A
- JP 2009169338 A
- JP 2009291476 A